# EUROPEAN PATENT APPLICATION

(11) **EP 3 950 207 A1**
(43) Date of publication of application: **09.02.2022**
(21) Application number: 19920874.5
(22) Date of filing: 25.03.2019
(51) Int. Cl.: B23K 26/342, B23K 26/21

(54) **PROCESSING SYSTEM**

(71) Applicant: NIKON CORPORATION, Minato-ku Tokyo 108-6290 (JP)
(72) Inventor: UENO, Kazuki, Tokyo 108-6290 (JP); MORI, Shinichi, Tokyo 108-6290 (JP); TAKEMI, Tomoaki, Tokyo 108-6290 (JP)
(74) Representative: Hoffmann Eitle
(86) International application number: PCT/JP2019/012511
(87) International publication number: WO 2020/194450

(57) **Abstract**

A processing system is provided with: a processing apparatus that has a supply part which supplies materials from a storing part for storing the materials and that performs, on the basis of a build data, a processing process for forming the build object by using the materials supplied from the supply part; and an output apparatus that outputs information relating to an amount of the materials that is obtained on the basis of the build data and a stored amount of the materials stored by the storing part

## Description

### Technical Field

The present invention relates to a technical field of a processing system that forms a build object, for example.

### Background Art

A Patent Literature 1 discloses a processing system that forms a build object by melting powder-like materials with an energy beam and then solidifying the molten materials. A technical problem of this processing system is to reduce an occurrence of an abnormality caused by a shortage of the materials.

### Citation List

### Patent Literature

Patent Literature 1: US 5,038,014B

### Summary of Invention

A first aspect provides a processing system that builds a build object and that is provided with: a processing apparatus that has a supply part which supplies materials from a storing part for storing the materials and that performs, on the basis of a build data, a processing process for forming the build object by using the materials supplied from the supply part; and an output apparatus that outputs information relating to an amount of the materials that is obtained on the basis of the build data and a stored amount of the materials stored by the storing part.

A second aspect provides a processing system that builds a build object on the basis of a build data and that is provided with: a processing apparatus that has a supply part which supplies materials from a storing part for storing the materials and that performs a processing process for forming the build object by using the materials supplied from the supply part; and an output apparatus that outputs information indicating a relationship between a stored amount of the materials and a necessary amount of the materials for building the build object that is obtained by using the build data.

A third aspect provides a processing system that builds a build object on the basis of a build data and that is provided with: a processing apparatus that has a supply part which supplies materials from a storing part for storing the materials and that performs a processing process for forming the build object by using the materials supplied from the supply part; and an estimation apparatus that estimates, by using the build data, a necessary amount of the materials for performing the processing process.

An operation and another advantage of the present invention will be apparent from an embodiment described below.

### Brief Description of Drawings

[FIG. 1] FIG. 1 is a cross-sectional view that illustrates a structure of a processing system in a first embodiment.
[FIG. 2] FIG. 2 is a system configuration diagram that illustrates a system configuration of the processing system in the first embodiment.
[FIG. 3] FIG. 3 is a cross-sectional view that illustrates a structure of a material supply apparatus in the first embodiment.
[FIG. 4] FIG. 4 is a side view that illustrates a structure of a holding member of the material supply apparatus.
[FIG. 5] FIG. 5A is a perspective view that illustrates a structure of a first example of a conveying member of the material supply apparatus and
FIG. 5B is a front view that illustrates the structure of the first example of the conveying member of the material supply apparatus.
[FIG. 6] FIG. 6A is a perspective view that illustrates a structure of a second example of a conveying member of the material supply apparatus and each of FIG. 6B and FIG. 6C is a cross-sectional view that illustrates the structure of the second example of the conveying member of the material supply apparatus.
[FIG. 7] FIG. 7 is a cross-sectional view that illustrate a supply operation of the build materials by the material supply apparatus.
[FIG. 8] Each of FIG. 8A to FIG. 8E is a cross-sectional view that illustrates an aspect in which a certain area on a workpiece is irradiated with light and build materials are supplied thereto.
[FIG. 9] Each of FIG. 9A to FIG. 9C is a cross-sectional view that illustrates a process for forming a three-dimensional structural object.
[FIG. 10] FIG. 10 is a flowchart that illustrates a flow of a second processing operation that is performed by the processing system.
[FIG. 11] FIG. 11 is a planar view that illustrate a display example on a display.
[FIG. 12] Each of FIG. 12A and FIG. 12B is a planar view that illustrate a display example on the display.
[FIG. 13] FIG. 13 is a planar view that illustrate a display example on the display.
[FIG. 14] FIG. 14 is a planar view that illustrate a display example on the display.
[FIG. 15] FIG. 15 is a planar view that illustrate a display example on the display.
[FIG. 16] FIG. 16 is a planar view that illustrate a display example of information that indicates a status of a processing process.
[FIG. 17] FIG. 17 is a planar view that illustrate a display example of alarm information.
[FIG. 18] FIG. 18 is a planar view that illustrate a display example of the alarm information.
[FIG. 19] FIG. 19 is a planar view that illustrate a display example of the alarm information.
[FIG. 20] FIG. 20 is a planar view that illustrate a display example of the alarm information.
[FIG. 21] FIG. 21 is a planar view that illustrate a display example of the alarm information.
[FIG. 22] FIG. 22 is a planar view that illustrate a display example of the alarm information.
[FIG. 23] FIG. 23 is a planar view that illustrate a display example of the alarm information.
[FIG. 24] FIG. 24 is a planar view that illustrate a display example of the alarm information.
[FIG. 25] FIG. 25 is a planar view that illustrate a display example of the alarm information.
[FIG. 26] FIG. 26 is a side view that illustrates a structure of a hopper in a second embodiment.
[FIG. 27] FIG. 27 is a system configuration diagram that illustrates a system configuration of a processing system in a third embodiment.
[FIG. 28] FIG. 28 is a system configuration diagram that illustrates a system configuration of a processing system in a fourth embodiment.
[FIG. 29] FIG. 29 is a cross-sectional view that illustrates a structure of a processing system in a fifth embodiment.
[FIG. 30] FIG. 30 is a cross-sectional view that illustrates a structure of a processing system in a sixth embodiment.
[FIG. 31] FIG. 31A is a planer view that illustrates beam spots of a plurality of guide lights on a build surface when a light concentration position of a processing light is set on the build surface and FIG. 31B is a planer view that illustrates the beam spots of the plurality of guide lights on the build surface when the light concentration position of the processing light is set on a position that is different from the build surface.

### Description of Embodiments

Next, with reference to drawings, embodiments of a processing system will be described. In the below described description, the embodiments of a processing system will be described by using a processing system SYS that is configured to perform an additive processing on a workpiece W that is one example of an object. Especially, in the below described description, the embodiments of a processing system will be described by using a processing system SYS that performs the additive processing based on a LMD (Laser Metal Deposition). The additive processing based on the Laser Metal Deposition is an additive processing for forming (namely, building) a three-dimensional structural object ST (namely, a build object) that is integrated with the workpiece W or that is separable from the workpiece W by melting build materials M supplied to the workpiece W by processing light EL. Note that the Laser Metal Deposition may be referred to as a Direct Metal Deposition, a Direct Energy Deposition, a Laser Cladding, a Laser Engineered Net Shaping, a Direct Light Fabrication, a Laser Consolidation, a Shape Deposition Manufacturing, a Wire Feed Laser Deposition, a Gas Through Wire, a Laser Powder Fusion, a Laser Metal Forming, a Selective Laser Powder Re-melting, a Laser Direct Casting, a Laser Powder Deposition, a Laser Additive Manufacturing or a Laser Rapid Forming.

Moreover, in the below described description, a positional relationship of various components that constitute the processing system SYS will be described by using an XYZ rectangular coordinate system that is defined by a X axis, a Y axis and a Z axis that are perpendicular to one another. Note that each of an X axis direction and a Y axis direction is assumed to be a horizontal direction (namely, a predetermined direction in a horizontal plane) and a Z axis direction is assumed to be a vertical direction (namely, a direction that is perpendicular to the horizontal plane, and substantially an up-down direction) in the below described description, for convenience of the description. Moreover, rotational directions (in other words, inclination directions) around the X axis, the Y axis and the Z axis are referred to as a θX direction, a θY direction and a θZ direction, respectively. Here, the Z axis direction may be a gravity direction. Moreover, an XY plane may be a horizontal direction.

### (1) Processing System SYSa in First Embodiment

Firstly, the processing system SYS in a first embodiment (in the below description, the processing system SYS in the first embodiment is referred to as a "processing system SYSa") will be described.

### (1-1) Entire Structure of Processing System SYSa in First Embodiment

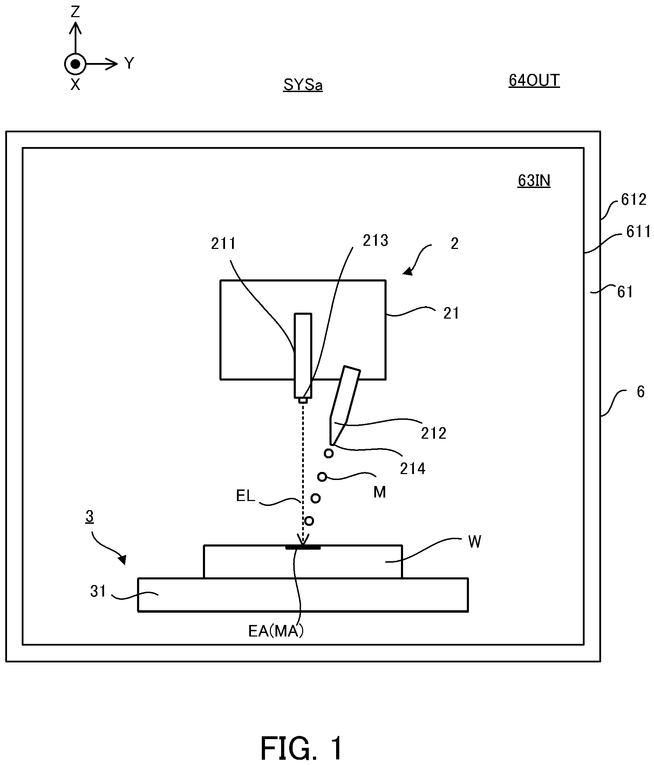

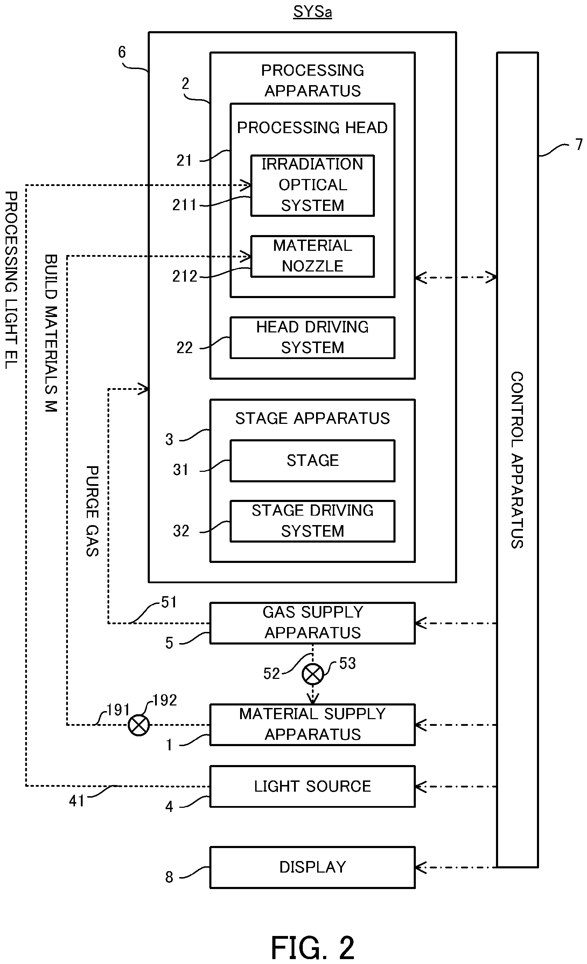

Firstly, with reference to FIG. 1 and FIG. 2, a structure of the processing system SYSa in the first embodiment will be described. FIG. 1 is a cross-sectional view that illustrates one example of the structure of the processing system SYSa in the first embodiment. FIG. 2 is a system configuration diagram that illustrates a system configuration of the processing system SYSa in the first embodiment.

The processing system SYSa is configured to form the three-dimensional structural object ST (namely, a three-dimensional object having a size in each of three-dimensional directions, and the build object that is a solid object). The processing system SYSa is configured to form the three-dimensional structural object ST on the workpiece W that is a base for forming the three-dimensional structural object ST. The workpiece W may be referred to as a base member or a basement. The processing system SYSa is configured to form the three-dimensional structural object ST by performing the additive processing on the workpiece W. When the workpiece W is a below described stage 31, the processing system SYSa is configured to form the three-dimensional structural object ST on the stage 31. When the workpiece W is an existing structural object held by the stage 31 (alternatively, supported by or placed on the stage 31), the processing system SYSa is configured to form the three-dimensional structural object ST on the existing structural object. In this case, the processing system SYSa may form the three-dimensional structural object ST that is integrated with the existing structural object. An operation for forming the three-dimensional structural object ST that is integrated with the existing structural object may be regarded to be equivalent to an operation for adding a new structural object to the existing structural object. Note that the existing structural object may be an item that needs to be repaired having a missing part, for example. The processing system SYSa may form the three-dimensional structural object on the item that needs to be repaired to fill in the missing part of the item that needs to be repaired. Alternatively, the processing system SYSa may form the three-dimensional structural object ST that is separable from the existing structural object. Note that FIG. 1 illustrates an example in which the workpiece W is an existing structural object held by the stage 31. The below described description also uses the example in which the workpiece W is an existing structural object held by the stage 31.

As described above, the processing system SYSa is configured to form the three-dimensional structural object ST by the Laser Metal Deposition. Namely, it can be said that the processing system SYSa is a 3D printer that forms an object by using an Additive layer manufacturing technique. Note that the Additive layer manufacturing technique may be referred to as a Rapid Prototyping, a Rapid Manufacturing or an Additive Manufacturing.

In order to form the three-dimensional structural object ST, the processing system SYSa is provided with a material supply apparatus 1, a processing apparatus 2, a stage apparatus 3, a light source 4, a gas supply apparatus 5, a housing 6, a control apparatus 7 and a display 8, as illustrated in FIG. 1 and FIG. 2. At least a part of the processing apparatus 2 and the stage apparatus 3 is housed in a chamber space 63IN in the housing 6.

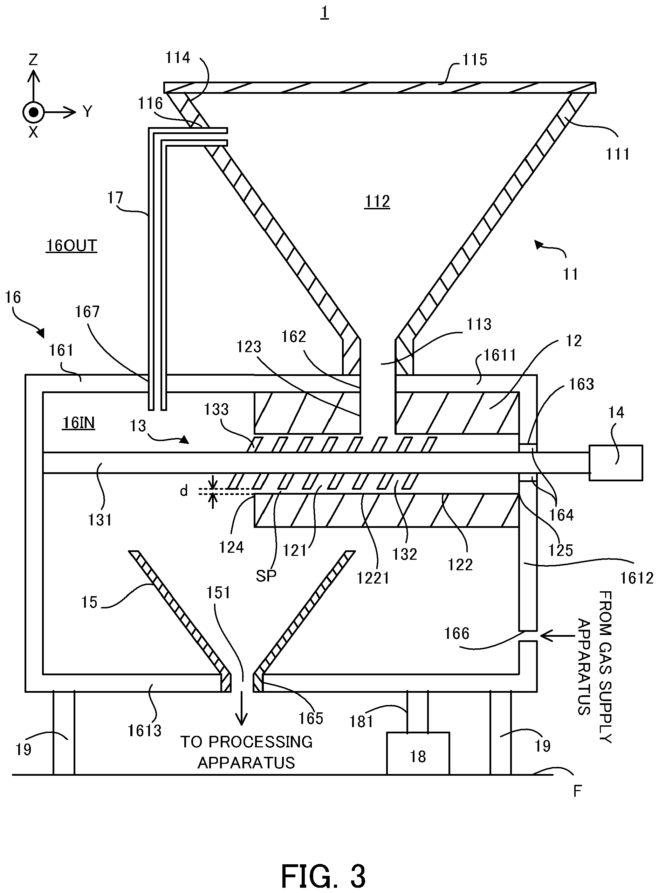

The material supply apparatus 1 supplies the build materials M to the processing apparatus 2. The material supply apparatus 1 supplies, to the processing apparatus 2, the build materials M the amount of which is necessary for the processing apparatus 2 to form the three-dimensional structural object ST per unit time by supplying the build materials M at a supply rate based on the necessary amount. Namely, the material supply apparatus 1 supplies the build materials M so that a supplied amount of the build materials M per unit time is a desired supplied amount based on the necessary amount. Note that a structure of the material supply apparatus 1 will be described later in detail with reference to FIG. 3 and so on, and thus, a detailed description is omitted here.

The build material M is a material that is molten by an irradiation of the processing light EL having a predetermined intensity or more intensity. At least one of a metal material and a resin material is usable as the build material M, for example. However, another material that is different from the metal material and the resin material may be used as the build material M. The build materials M are powder-like materials. Namely, the build materials M are powdery materials. The powdery materials may include not only the powder-like materials but also grain-like materials. The build materials M may include the powdery material a particle size of which is within a range of 90 micrometer ± 40 micrometer, for example. An average particle size of the powdery materials included in the build materials M may be 75 micrometer or another size, for example. However, the build materials M may not be the powdery materials, and wired-like build materials or gas-like build materials may be used, for example. Note that the processing system SYSa may form the build object by processing the build materials M with the energy beam such as a charged particle beam.

The processing apparatus 2 forms the three-dimensional structural object ST by using the build materials M supplied from the material supply apparatus 1. In order to form the three-dimensional structural object ST by using the build materials M, the processing apparatus 2 is provided with a processing head 21 and a head driving system 22. Moreover, the processing head 21 is provided with an irradiation optical system 211 and a material nozzle 212 (namely, a supply system that supplies the build materials M). The processing head 21 and the head driving system 22 are housed in the chamber space 63IN. However, at least a part of the processing head 21 and / or the head driving system 22 may be disposed in an external space 64OUT that is a space at the outside of the housing 6. Note that the external space 64OUT may be a space in which an operator of the processing system SYSa is allowed to enter.

The irradiation optical system 211 is an optical system (for example, a condensing optical system) for emitting the processing light EL from an emitting part 213. Specifically, the irradiation optical system 211 is optically connected to the light source 4 that generates the processing light EL through a light transmitting member 41 such as an optical fiber and light pipe. The irradiation optical system 211 emits the processing light EL transmitted from the light source 4 through the light transmitting member 41. The irradiation optical system 211 emits the processing light EL so that the processing light EL propagates in the chamber space 63IN. The irradiation optical system 211 emits the processing light EL in a downward direction (namely, toward a -Z side) from the irradiation optical system 211. The stage 31 is disposed below the irradiation optical system 211. When the workpiece W is placed on the stage 31, the irradiation optical system 211 emits the processing light EL toward the workpiece W. Specifically, the irradiation optical system 211 irradiates an irradiation area EA, which is set on the workpiece W as an area that is irradiated with the processing light EL (typically, in which the light is condensed), with the processing light EL. Moreover, a state of the irradiation optical system 211 is switchable between a state where the irradiation area EA is irradiated with the processing light EL and a state where the irradiation area EA is not irradiated with the processing light EL under the control of the control apparatus 7. Note that a direction of the processing light EL emitted from the irradiation optical system 211 is not limited to a direct downward direction (namely, coincident with the -Z axis direction), and may be a direction that is inclined with respect to the Z axis by a predetermined angle, for example.

The material nozzle 212 has a supply outlet 214 that supplies the build materials M. The material nozzle 212 supplies (specifically, injects, blows out or sprays) the build materials M from the supply outlet 214. Although the material nozzle 212 is illustrated to have a tube-like shape in FIG. 1, a shape of the material nozzle 212 is not limited to this shape. The material nozzle 212 supplies the build materials M toward the chamber space 63IN. The material nozzle 212 supplies the build materials M in a downward direction (namely, toward the -Z side) from the material nozzle 212. The stage 31 is disposed below the material nozzle 212. When the workpiece W is loaded on the stage 31, the material nozzle 212 supplies the build materials M toward the workpiece W. Note that although a moving direction of the build materials M supplied from the material nozzle 212 is a direction that is inclined with respect to the Z axis by a predetermined angle (as one example, an acute angle), it may be the -Z axis direction (namely, a direct downward direction).

In the first embodiment, the material nozzle 212 is aligned to the irradiation optical system 211 so as to supply the build materials M to the irradiation area EA that is irradiated with the processing light EL by the irradiation optical system 211. Namely, the material nozzle 212 is aligned to the irradiation optical system 211 so that the irradiation area EA is coincident with (alternatively, at least partially overlaps with) a supply area MA that is set on the workpiece W as an area to which the material nozzle 212 supplies the build materials M. Note that the material nozzle 212 may be aligned so as to supply the build materials M to a melt pool MP that is formed at the workpiece W by the processing light EL emitted from the irradiation optical system 211.

The material nozzle 212 is physically connected to the material supply apparatus 1 that is a supply source of the build materials M through a material supply pipe 191 such as a pipe. The material nozzle 212 supplies the build materials M supplied from the material supply apparatus 1 through the material supply pipe 191. The material nozzle 212 may pressure-feed the build materials M supplied from the material supply apparatus 1 through the material supply pipe 191. Namely, the build materials M from the material supply apparatus 1 and gas (for example, inert gas such as Nitrogen or Argon) for feeding are mixed and pressure-fed to the material nozzle 212 through the material supply pipe 191.

A valve 192 may be disposed in the material supply pipe 191. A state of the valve 192 may be changed between a close state in which the material supply pipe 191 is closed and an open state in which the material supply pipe 191 is opened under the control of the control apparatus 7. When the valve 192 is in the close state, the build materials M are not supplied from the material supply apparatus 1 to the processing apparatus 2 through the material supply pipe 191. On the other hand, when the valve 192 is in the open state, the build materials M are supplied from the material supply apparatus 1 to the processing apparatus 2 through the material supply pipe 191. Moreover, when the valve 192 is in the open state, the valve 192 may be configured to adjust the supplied amount of the build materials M that are supplied to the processing apparatus 2 through the material supply pipe 191 by adjusting an opening degree of the valve 192. Note that the valve 192 may be changed between the close state in which the material supply pipe 191 is closed and the open state in which the material supply pipe 191 is opened independently from the control of the control apparatus 7. For example, the stage of the valve 192 may be manually changed between the close state and the open state.

The head driving system 22 moves the processing head 21. The head driving system 22 moves the processing head 21 in the chamber space 63IN, for example. The head driving system 22 moves the processing head 21 along at least one of the X axis, the Y axis and the Z axis. When the processing head 21 moves along at least one of the X axis and the Y axis, the irradiation area EA moves on the workpiece W along at least one of the X axis and the Y axis. Furthermore, the head driving system 22 may move the processing head 21 along a rotational direction that includes at least one of the θX direction, the θY direction and the θZ direction, in addition to or instead of at least one of the X axis, the Y axis and the Z axis. In other words, the head driving system 22 may rotate the processing head 21 around at least one of the X axis, the Y axis and the Z axis. The head driving system 22 may change an attitude of the processing head 21 around at least one of the X axis, the Y axis and the Z axis. The head driving system 21 includes an actuator such as a motor, for example.

Note that the head driving system 22 may move the irradiation optical system 211 and the material nozzle 212 separately. Specifically, for example, the head driving system 22 may be configured to adjust at least one of a position of the emitting part 213, a direction of the emitting part 213, a position of the supply outlet 214 and a direction of the supply outlet 214. In this case, the irradiation area EA that is irradiated with the processing light EL by the irradiation optical system 211 and the supply area MA to which the material nozzle 212 supplies the build materials M are controllable separately.

The stage apparatus 3 is provided with the stage 31. The stage 31 is housed in the chamber space 63IN. The stage 31 is configured to support the workpiece W. Note that a state where "the stage 31 supports the workpiece W" here may mean a state where the workpiece W is directly or indirectly supported by the stage 31. The stage 31 may be configured to hold the workpiece W. Namely, the stage 31 may support the workpiece W by holding the workpiece W. Alternatively, the stage 31 may not be configured to hold the workpiece W. In this case, the workpiece W may be placed on the stage 31. Namely, the stage 31 may support the workpiece W placed on the stage 31. In this case, the workpiece W may be placed on the stage 31 without a clamp. Therefore, the state where "the stage 31 supports the workpiece W" in the present embodiment may include a state where the stage 31 holds the workpiece W and a state where the workpiece W is placed on the stage 31. Since the stage 31 is housed in the chamber space 63IN, the workpiece W supported by the stage 31 is also housed in the chamber space 63IN. Moreover, the stage 31 may be configured to release the held workpiece W, when the workpiece W is held. The above described irradiation optical system 211 emits the processing light EL in at least a part of a period when the stage 31 supports the workpiece W. Moreover, the above described material nozzle 212 supplies the build materials M in at least a part of the period when the stage 31 supports the workpiece W. Note that there is a possibility that a part of the build materials M supplied by the material nozzle 212 is scattered or falls to the outside of the workpiece W (for example, around the stage 31) from a surface of the workpiece W. Thus, the processing system SYSa may be provided with a recovery apparatus that recovers the build material M scattered or falling around the stage 31. Note that the stage 31 may be provided with a mechanical chuck, a vacuum chuck and the like in order to hold the workpiece W.

The stage apparatus 3 may be provided with a stage driving system 32. The stage 31 may be movable by the stage driving system 32. In this case, the stage driving system 32 may move the stage 31 in the chamber space 63IN, for example. The stage driving system 32 may move the stage 31 along at least one of the X axis, the Y axis and the Z axis. When the stage 31 moves along at least one of the X axis and the Y axis, each of the irradiation area EA and the supply area MA moves on the workpiece W along at least one of the X axis and the Y axis. Furthermore, the stage driving system 32 may move the stage 31 along a rotational direction that includes at least one of the θX direction, the θY direction and the θZ direction, in addition to or instead of at least one of the X axis, the Y axis and the Z axis. The stage driving system 32 may include an actuator such as a motor, for example. When the stage apparatus 3 is provided with the stage driving system 32, the processing apparatus 2 may not be provided with the head driving system 22. Similarly, when the processing apparatus 2 is provided with the head driving system 22, the stage apparatus 3 may not be provided with the stage driving system 32.

The light source 4 emits, as the processing light EL, at least one of an infrared light and an ultraviolet light, for example. However, light having another wavelength, for example, a light in a visible range may be used as the processing light EL. The processing light EL is a laser light. In this case, the light source 4 may include a laser light source such as a semiconductor laser. At least one of a Laser Diode (LD)), a fiber laser, a CO₂ laser, a YAG laser, an Excimer laser and the like is one example of the laser light source. However, the processing light EL may not be the laser light and the light source 4 may include any light source (for example, at least one of a LED (Light Emitting Diode), a discharge lamp and the like).

The gas supply apparatus 5 is a supply source of a purge gas for purging the chamber 631IN. The purge gas includes inert gas. The Nitrogen gas or Argon gas is one example of the inert gas. The gas supply apparatus 5 supplies the purge gas to the chamber space 63IN. Specifically, the gas supply apparatus 5 supplies the purge gas to the chamber space 63IN through a gas supply pipe 51 that connects the gas supply apparatus 5 and the housing 6 (especially, the chamber space 63IN in the housing 6). As a result, the chamber space 63IN is a space that is purged by the purge gas.

The gas supply apparatus 5 further supplies the inert gas to the material supply apparatus 1. Specifically, the gas supply apparatus 5 supplies the purge gas to the material supply apparatus 1 through a gas supply pipe 52 that connects the gas supply apparatus 5 and the material supply apparatus 1. The purge gas supplied to the material supply apparatus 1 is used to pressure-feed the build materials M from the material supply apparatus 1 to the material nozzle 212, as described later. Thus, the gas supply apparatus 5 supplies the pressurized purge gas to the material supply apparatus 1. Note that the gas supply apparatus 5 may be a tank that stores the inert gas such as the Nitrogen gas or the Argon gas. When the purge gas is the Nitrogen gas, the gas supply apparatus 5 may be a Nitrogen gas generation apparatus that generates the Nitrogen gas by using air as material.

A valve 53 may be disposed in the gas supply pipe 52. A state of the valve 53 may be changed between a close state in which the gas supply pipe 52 is closed and an open state in which the gas supply pipe 52 is opened under the control of the control apparatus 7. When the valve 53 is in the close state, the purge gas is not supplied from the gas supply apparatus 5 to the chamber space 63IN through the gas supply pipe 52. On the other hand, when the valve 53 is in the open state, the purge gas is supplied from the gas supply apparatus 5 to the chamber space 63IN through the gas supply pipe 52. Moreover, when the valve 53 is in the open state, the valve 53 may be configured to adjust a supplied amount of the purge gas that is supplied to the chamber space 63IN through the gas supply pipe 52 by adjusting an opening degree of the valve 53. Note that the valve 53 may be changed between the close state and the open state independently from the control of the control apparatus 7. For example, the stage of the valve 53 may be manually changed between the close state and the open state.

The gas supply apparatus 5 may control a gas supply aspect to the chamber space 63IN and a gas supply aspect to the material supply apparatus 1, independently. For example, the gas supply apparatus 5 may control the gas supply aspect to each of the chamber space 63IN and the material supply apparatus 1 so that a supplied amount per unit time of the purge gas to the chamber space 63IN is different from a supplied amount per unit time of the purge gas to the material supply apparatus 1. For example, the gas supply apparatus 5 may control the gas supply aspect to each of the chamber space 63IN and the material supply apparatus 1 so that the purge gas is supplied to either one of the chamber space 63IN and the material supply apparatus 1 in a state where the supply of the purge gas to the other one of the chamber space 63IN and the material supply apparatus 1 is stopped. Moreover, a characteristic (for example, a temperature) of the purge gas supplied to the chamber space 63IN may be different from that of the purge gas supplied to the material supply apparatus 1. A composition of the purge gas supplied to the chamber space 63IN may be different from that of the purge gas supplied to the material supply apparatus 1. Note that the processing system SYSa may be provided with a gas supply apparatus that supplies the purge gas to the chamber space 63IN and a gas supply apparatus that supplies the purge gas to the material supply apparatus 1, separately.

The housing 6 is a housing apparatus that houses at least a part of each of at least the processing apparatus 2 and the stage apparatus 3 in the chamber space 63IN that is an internal space of the housing 6. The housing 6 is provided with a wall member 61 that forms the chamber space 63IN. The wall member 61 is a member that separates the chamber space 63IN from the external space 64OUT at the outside of the housing 6. The wall member 61 faces the chamber space 63IN through its inner wall 611 and faces the external space 64OUT through its outer wall 612. In this case, a space surrounded by the wall member 61 (more specifically, a space surrounded by the inner wall 611 of the wall member 61) is the chamber space 63IN. Note that an openable and closable door may be disposed at the wall member 61. The door may be opened when the workpiece W is to be placed on the stage 31 and the workpiece W and / or a build object is unloaded from the stage 31 and may be closed when the build is performed.

The control apparatus 7 controls an operation of the processing system SYSa. The control apparatus 7 may include a CPU (Central Processing Unit) (alternatively, a GPU (Graphic Processing Unit) in addition to or instead of the CPU) and a memory, for example. The control apparatus 7 serves as an apparatus for controlling the operation of the processing system SYSa by means of the CPU executing a computer program. The computer program is a computer program that allows the control apparatus 7 (for example, the CPU) to execute (namely, to perform) a below described operation that should be executed by the control apparatus 7. Namely, the computer program is a computer program that allows the control apparatus 7 to function so as to make the processing system SYSa execute the below described operation. The computer program executed by the CPU may be recorded in the memory (namely, a recording medium) of the control apparatus 7, or may be recorded in any recording medium (for example, a hard disk or a semiconductor memory) that is built in the control apparatus 7 or that is attachable to the control apparatus 7. Alternatively, the CPU may download the computer program that should be executed from an apparatus disposed at the outside of the control apparatus 7 through a network interface.

For example, the control apparatus 7 may control an emitting aspect of the processing light EL by the irradiation optical system 211. The emitting aspect may include at least one of an intensity of the processing light EL and an emitting timing of the processing light EL, for example. When the processing light EL is a pulse light, the emitting aspect may include a ratio (what we call a duty ratio) of a length of an ON time of the pulse light and an emission cycle of the pulse light, for example. Moreover, the emission aspect may include the length of the ON time of the pulse light itself and the emission cycle itself, for example. Moreover, the control apparatus 7 may control a moving aspect of the processing head 21 by the head driving system 22. The moving aspect may include at least one of a moving distance, a moving speed, a moving direction and a moving timing, for example. Moreover, the control apparatus 7 may control a supply aspect of the build materials M by the material supply apparatus 1. The supply aspect of the build materials M by the material nozzle 212 is mainly determined on the basis of the supply aspect of the build materials M by the material supply apparatus 1. Thus, controlling the supply aspect of the build materials M by the material supply apparatus 1 may be regarded to control the supply aspect of the build materials M by the material nozzle 212. The supply aspect may include at least one of the supplied amount (especially, the supplied amount per unit time) and a supply timing.

The control apparatus 7 may not be disposed in the processing system SYSa, and may be disposed at the outside of the processing system SYSa as a server or the like. In this case, the control apparatus 7 may be connected to the processing system SYSa through a wired and / or wireless network (alternatively, a data bus and / or a communication line). A network using a serial-bus-type interface such as at least one of IEEE1394, RS-232x, RS-422, RS-423, RS-485 and USB may be used as the wired network. A network using a parallel-bus-type interface may be used as the wired network. A network using an interface that is compatible to Ethernet such as at least one of 10-BASE-T, 100BASE-TX or 1000BASE-T may be used as the wired network. A network using an electrical wave may be used as the wireless network. A network that is compatible to IEEE802.1x (for example, at least one of a wireless LAN and Bluetooth (registered trademark)) is one example of the network using the electrical wave. A network using an infrared ray may be used as the wireless network. A network using an optical communication may be used as the wireless network. In this case, the control apparatus 7 and the processing system SYSa may be configured to transmit and receive various information through the network. Moreover, the control apparatus 7 may be configured to transmit an information such as a command and a control parameter to the processing system SYSa through the network. The processing system SYSa may be provided with a reception apparatus that receives the information such as the command and the control parameter from the control apparatus 7 through the network.

Note that a part of the control apparatus 7 may be disposed in the processing system SYSa and another part thereof may be disposed at the outside of the processing system SYSa.

Note that the recording medium recording therein the computer program that should be executed by the CPU may include an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program. Moreover, the recording medium may include a device that is configured to record the computer program (for example, a device for a universal use or a device for an exclusive use in which the computer program is embedded to be executable in a form of at least one of a software, a firmware and the like). Moreover, various processes or functions included in the computer program may be realized by a logical process block that is realized in the control apparatus 7 by means of the control apparatus 7 (namely, a computer) executing the computer program, may be realized by a hardware such as a predetermined gate array (a FPGA, an ASIC) of the control apparatus 7, or may be realized in a form in which the logical process block and a partial hardware module that realizes an partial element of the hardware are combined.

### (1-2) Material Supply Apparatus 1

Next, the material supply apparatus 1 of the processing system SYSa will be described more.

### (1-2-1) Structure of Material Supply Apparatus 1

Firstly, with reference to FIG. 3, a structure of the material supply apparatus 1 will be described. FIG. 3 is a cross-sectional view that illustrates the structure of the material supply apparatus 1. Note that FIG. 3 merely illustrates one example of the structure of the material supply apparatus 1, and the processing system SYSa may be provided with the material supply apparatus 1 the structure of which is different from the structure illustrated in FIG. 3. The processing system SYSa may be provided with any material supply apparatus 1 that has any structure the is configured to supply the build materials M stored therein to the processing apparatus 2. Note that the material supply apparatus 1 may be a structure the is configured to supply the build materials M stored outside. For example, the build materials M may be stored in an external storing unit of the processing system SYSa. The materials may be supplied from the external storing unit to a plurality of processing system SYSa.

As illustrated in FIG. 3, the material supply apparatus 1 is provided with: a hopper 11, a holding member 12, a conveying member 13, a driving apparatus 14, a material feed member 15, an enclosure (in other words, a container) 16, a connection pipe 17, a support member 18 and a weight measurement apparatus 19. The holding member 12, the conveying member 13 and the material feed member 15 are housed in a space (namely, an internal space 16IN of the housing 16) surrounded by a wall member 161 of the housing 16 a shape of which is a box-liked shape (alternatively, another shape). The hopper 11 and the driving apparatus 14 are disposed in an external space 16OUT that is separated from the internal space 16IN by the wall member 161. However, at least one of the hopper 11 and the driving apparatus 14 may be disposed in the internal space 16IN.

The hopper 11 is an apparatus for storing the build materials M. The hopper 11 is a supply source of the build materials M. The hopper 11 has a funnel-liked shape (namely, an inverted-cone-liked shape). A space surrounded by a wall member 111 having a funnel-liked shape is a storage space 112 for storing the build materials M. However, the hopper 11 may have another shape. For example, the shape of the hopper 11 may be an inverted-pyramid-liked (as one example, an inverted-square-pyramid-liked) shape.

A supply port 113 is formed in a lower end of the hopper 11 (namely, below the storage space 112). The supply port 113 is an aperture (namely, a through hole) that penetrates the wall member 111 along the Z axis direction at a bottom part of the hopper 11. Alternatively, when the wall member 111 is not formed at the lower end of the hopper 11, a lower open end of the hopper 11 at which the wall member 111 is not formed may be used as the supply port 113. A shape of a cross-section (specifically, a cross-section along the XY plane) of the supply port 113 is a circular shape, however, may be another shape (for example, at least one of a long round shape, an oval shape, a rectangular shape and a polygonal shape). The supply port 113 is an aperture for supplying the build materials M from the hopper 11 to a space below the hopper 11 (namely, toward the -Z side). Namely, the build materials M stored in the storage space 112 by the hopper 11 are supplied (in other words, are discharged or fall) to the outside of the hopper 11 through the supply port 113.

The hopper 11 is disposed at a wall member 161 of the housing 16. Specifically, the hopper 11 is disposed at a ceiling member 1611, which is located above the internal space 16IN, of the wall member 161. A supply port 162 is formed in the ceiling member 1611. The supply port 162 is an aperture (namely, a through hole) that penetrates the ceiling member 1611 from the external space 16OUT to the internal space 16IN. The supply port 162 of the housing 16 is connected to the supply port 113 of the hopper 11. Thus, the supply port 162 is substantially an aperture (namely, a through hole) that penetrates the ceiling member 1611 from the supply port 113 to the internal space 16IN. Thus, the build materials M stored in the storage space 112 by the hopper 11 are supplied (in other words, are discharged or fall) to the internal space 16IN of the housing 16 through the supply port 113 and the supply port 162.

A material replenishment port 114 is formed in an upper end of the hopper 11. The material replenishment port 114 is an aperture that penetrates the wall member 111 along the Z axis direction at the upper end of the hopper 11. Alternatively, when the wall member 111 is not formed at the upper end of the hopper 11, an upper open end of the hopper 11 at which the wall member 111 is not formed may be used as the material replenishment port 114. The material replenishment port 114 is an aperture for replenishing the hopper 11 (especially, the storage space 112) with the build materials M. The material replenishment port 114 is sealed by a lid 115 usually (specifically, in a period when the hopper 11 is not replenished with the build materials M). In this case, the lid 115 may serve as a wall member that forms the storage space 112 with the wall member 111. The lid 115 may serve as a wall member that maintains the seal of the storage space 112 with the wall member 111. The lid 115 is opened in the period when the hopper 11 is replenished with the build materials M. Note that the material replenishment port 114 may be used for the purpose other than the replenishment of the build materials M (for example, for the purpose of a maintenance of the hopper 11 and the like). Note that the wall member 111 of the hopper 11 and the lid 115 may be connected by a hinge. Moreover, a wire mesh may be disposed at an upper part of the hopper to prevent a foreign matter inclusion.

An aperture 116 is formed in the wall member 111 of the hopper 11 (for example, a part that is located at a relatively upper position and that is located below the material replenishment port 114). The aperture 116 is a through hole that penetrates the wall member 111 from the storage space 111 toward a space at the outside of the hopper 11 (specifically, the external space 16OUT at the outside of the housing 16). Thus, the storage space 112 is connected to the external space 16OUT through the aperture 116. However, as described later in detail, the connection pipe 17 is attached to the aperture 116. Thus, when the connection pipe 17 is attached to the aperture 116, the storage space 112 is separated from the external space 16OUT. Note that a through hole formed in the lid 115 may be used as the aperture 116 in addition to or instead of the through hole formed in the wall member 111.

The holding member 12 holds the build materials M that are supplied from the supply port 113 of the hopper 11 to the internal space 16IN through the supply port 162. In order to hold the build materials M supplied from the hopper 11, the holding member 12 is disposed below each of the supply port 113 and the supply port 162. The holding member 12 is disposed so that a part of the holding member 12 is disposed just below each of the supply port 113 and the supply port 162. The holding member 12 is disposed so that a part of the holding member 12 is disposed on a path through which the build materials M fall from the supply port 113 and the supply port 162. The holding member 12 is disposed so that a part of the holding member 12 faces each of the supply port 113 and the supply port 162 along the Z axis direction.

The holding member 12 is supported by the wall member 161 (especially, the ceiling member 1611) of the housing 16. However, the holding member 12 may be supported by another member. For example, the holding member 12 may be supported by a side wall member 1612 of the wall member 161 that is located lateral to the internal space 16IN. For example, the holding member 12 may be supported by a bottom member 1613 of the wall member 161 that is located below the internal space 16IN. For example, the holding member 12 may be supported by a non-illustrated member.

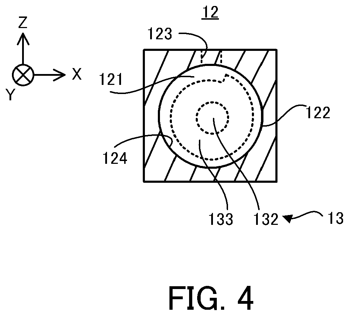

As illustrated in FIG. 3 and FIG. 4 that is a side view illustrating the structure of the holding member 12, the holding member 12 is a tubular member (namely, a hollow member). Specifically, the holding member 12 is a member in which a tubular space 121 that extends along a direction intersecting with the Z axis direction is formed. Namely, the holding member 12 is a member a longitudinal direction of which is a direction that intersects with the Z axis direction. Note that FIG. 3 and FIG. 4 illustrate an example in which the space 121 is a space that extends along the Y axis direction, however, the space 121 may be a space that extends along the X axis direction and may be a space that is inclined with respect to the Z axis direction. The space 121 is a space that is surrounded by an inner wall surface 122 of the holding member 12. A shape of a cross-section including the Z axis direction of the inner wall surface 122 is a circular shape. In this case, a shape of a cross-section including the Z axis direction of the tubular space 121 is a circular shape. Namely, the holding member 12 is a cylindrical member. Note that the "cylindrical member" here means a member in which the shape of the cross-section of the inner wall surface 122 is a circular shape. Thus, a shape of a cross-section of an outer wall surface of the holding member 12 is not limited to the circular shape and may be any shape (for example, at least one of a long round shape, an oval shape, a rectangular shape and a polygonal shape). However, the shape of the cross-section including the Z axis direction of the inner wall surface 122 may be any shape (for example, at least one of a long round shape, an oval shape, a rectangular shape and a polygonal shape). Since the holding member 12 is disposed in the internal space 16IN, the space 121 constitutes at least a part of the internal space 16IN.

A supply port 123 is formed in the holding member 12. The supply port 123 is an aperture (namely, a through hole) that penetrates the holding member 12 along the Z axis direction. The supply port 123 is a through hole that penetrates the holding member 12 toward one direction from the space 121. The supply port 123 is a through hole that penetrates the holding member 12 toward a direction (for example, the Z axis direction (an upward direction) that intersects with a direction (for example, the Y axis direction) in which the space 121 extends. The supply port 123 is connected to the supply port 162 that is located above the holding member 12. Namely, the holding member 12 is disposed so that the supply port 123 is connected to the supply port 162. In this case, since the holding member 12 is disposed below the supply port 162, the supply port 123 is a through hole that penetrates the holding member 12 toward an upward direction from the space 121. Since the supply port 123 is connected to the supply port 162, the storage space 112 is connected to the space 121 through the supply ports 113, 162 and 123. Thus, the build materials M that are supplied from the storage space 112 to the internal space 16IN through the supply ports 113 and 162 are supplied to the space 121 through the supply port 123. Namely, the build materials M are supplied from the storage space 112 to the space 121 through the supply port 113, the supply port 162 and the supply port 123. The build materials M are supplied from the hopper 11 to the holding member 12 so that they fall from the storage space 112 to the space 121 through the supply port 113, the supply port 162 and the supply port 123.

The build materials M supplied to the space 121 are deposited on the inner wall surface 122. Specifically, the build materials M supplied to the space 121 fall to and are deposited on a surface part of the inner wall surface 122 that is located below the supply port 113, the supply port 162 and the supply port 123. The inner wall surface 122 holds at least a part of the build materials M deposited on at least a part of the inner wall surface 122. Thus, the inner wall surface 122 is provided with a holding surface 1221 for holding the build materials M supplied from the hopper 11. At least a part of the inner wall surface 122 serves as the holding surface 1221. For example, at least a part of a surface part of the inner wall surface 122 that faces upwardly (namely, toward the +Z side) serves as the holding surface 1221, because the holding surface 1221 holds the build materials M that fall downwardly due to the action of the gravity. For example, at least a part of a surface part of the inner wall surface 122 that is located to be away downwardly from the supply port 113, the supply port 162 and the supply port 123 serves as the holding surface 1221, because the holding surface 1221 holds the build materials M that fall from the supply port 113, the supply port 162 and the supply port 123. Moreover, since the holding surface 1221 that is at least a part of the inner wall surface 122 holds the build materials M, the space 121 formed by the inner wall surface 122 serves as a space for holding the build materials M supplied from the hopper 11. Thus, in the below described description, the space 121 is referred to as a "holding space 121".

At least a part of the conveying member 13 is disposed in the holding space 121. Thus, as illustrated in FIG. 3 and FIG. 4, at least a part of the conveying member 13 is surrounded by the inner wall surface 122 that forms the holding space 121. A gap SP is formed between the conveying member 13 and the inner wall surface 122. Therefore, the build materials M supplied to the holding space 121 are held between the inner wall surface 122 and the conveying member 13. Therefore, the build materials M supplied to the holding space 121 are held between the holding member 12 and the conveying member 13. Thus, at least a part of a surface part of the inner wall surface 122 that faces the conveying member 13 may serve as the above described holding surface 1221.

The conveying member 13 is a member for conveying the build materials M held by the holding member 12 to an outside of the holding member 12 from the holding member 12. The conveying member 13 is a member for conveying the build materials M held by the holding space 121 to an outside of the holding space 121 from the holding space 121. The conveying member 13 is a member for conveying the build materials M held by inner wall surface 122 to an outside of inner wall surface 122 from inner wall surface 122.

The conveying member 13 conveys the build materials M along a direction in which the holding space 121 extends. As a result, the conveying member 13 conveys the build materials M held by the holding space 121 to the outside of the holding space 121 from the holding space 121 through an aperture (namely, an open end) 124 of the holding member 12 that forms an end part of the holding member 12. Namely, the aperture 124 is used as a conveying port for conveying the build materials M to the outside of the holding member 12 from the holding member 12. Thus, in the below described description, the aperture 124 is referred to as a "conveying port 124".

To allow the conveying member 13 to convey the build materials M falling from the supply ports 113, 162 and 123 to the holding space 121, at least a part of the conveying member 13 is located below the supply ports 113, 162 and 123. To allow the conveying member 13 to convey the build materials M falling to the inner wall surface 122 (especially, the holding surface 1221), at least a part of the conveying member 13 is located above at least a part of the inner wall surface 122 (especially, the holding surface 1221). Namely, at least a part of the conveying member 13 is located between the supply ports 113, 162 and 123 and the inner wall surface 122 (especially, the holding surface 1221). As a result, the build materials M are supplied from the hopper 11 to the conveying member 13 along the gravity direction.

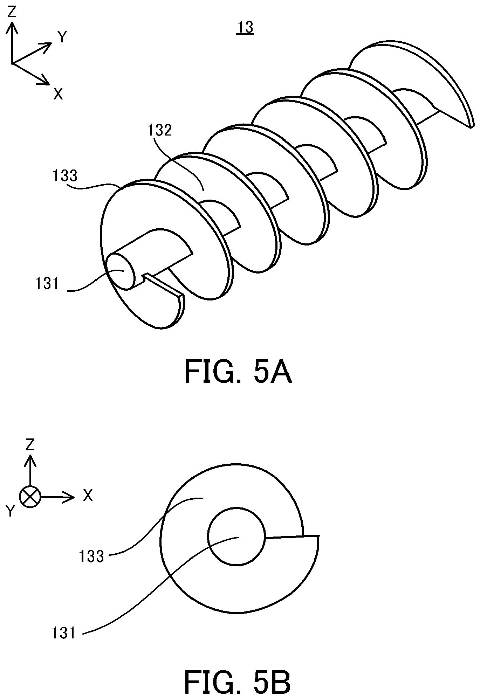

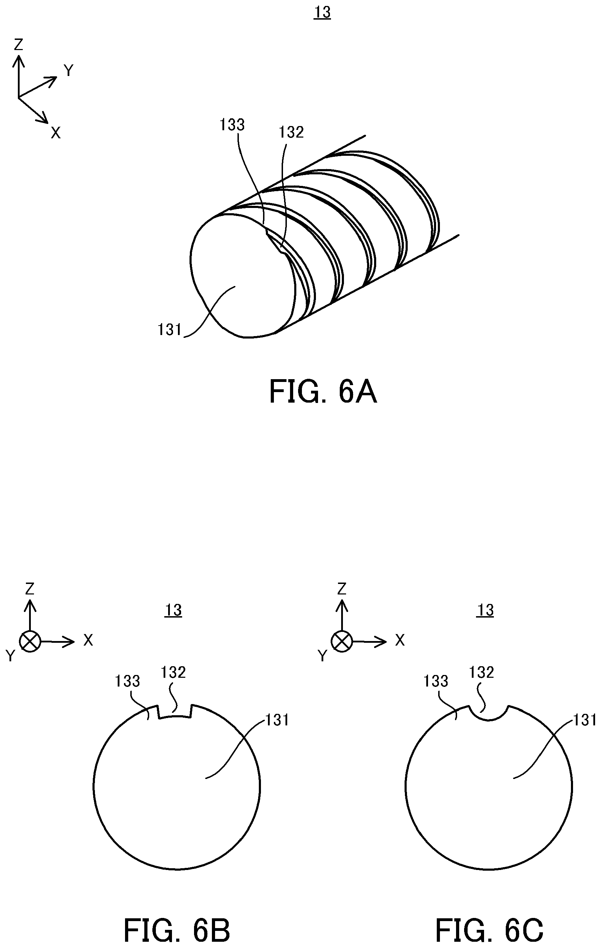

The conveying member 13 may have any structure as long as it is configured to convey the build materials M. Next, with reference to FIG. 5A to FIG. 5B and FIG. 6A to FIG. 6C as well as FIG. 3, one example of a structure of the conveying member 13 will be described. FIG. 5A is a perspective view that illustrates a structure of a first example of the conveying member 13 of the material supply apparatus 1 and FIG. 5B is a front view that illustrates the structure of the first example of the conveying member 13 of the material supply apparatus 1. FIG. 6A is a perspective view that illustrates the structure of a second example of the conveying member 13 of the material supply apparatus 1 and each of FIG. 6B and FIG. 6C is a cross-sectional view that illustrates the structure of the second example of the conveying member 13 of the material supply apparatus 1.

As illustrated in FIG. 3 and FIG. 5A to FIG. 6C, the conveying member 13 is a member that extends along a desired direction. Specifically, the conveying member 13 is a member that extends along a direction in which the holding space 121 extends. Namely, the conveying member 13 is a member that extends along the longitudinal direction of the holding member 12. Since the holding space 121 extends in a direction that intersects with the Z axis, the conveying member 13 is a member that extends along a direction that intersects with the Z axis. Although FIG. 5 illustrates an example in which the conveying member 13 is a member that extends along the Y axis direction, the conveying member 13 may be a member that extends along the X axis direction and may be a member that extends along a direction that is inclined with respect to the Z axis. The conveying member 13 is disposed in so that the conveying member 13 extends in the holding space 121 along the direction in which the holding space 121 extends.

When the conveying member 13 is the member that extends along the direction that intersects with the Z axis, the conveying member 13 may be provided with an axial member 131 that extends along the direction that intersects with the Z axis. The axial member 131 is a member a shape of a cross-section including the Z axis of which is a circular shape. However, the axial member 131 may be a member the shape of the cross-section including the Z axis of which is another shape (for example, at least one of a long round shape, an oval shape and a rectangular shape). The axial member 131 is disposed so that the axial member 131 extends in the holding space 121 along the direction in which the holding space 121 extends.

The conveying member 13 is a member having a side surface at which a spiral groove 132 is formed. Specifically, the conveying member 13 is a member having the side surface at which the groove 132 that extends (namely, runs) along the direction in which the conveying member 13 extends while rotating around an axis along the direction in which the conveying member 13 extends is formed. The conveying member 13 is a member having the side surface at which the groove 132 that extends (namely, runs) along the direction in which the conveying member 13 extends while circling the side surface of the conveying member 13 is formed. A pitch (namely, a cycle, and a distance that the grooves 132 extends (namely, runs) during one rotation of the groove 132) of the spiral groove 132 is constant, however, may be variable. Examples of the conveying member 13 having the side surface at which this groove 132 is formed are illustrated in FIG. 5A to FIG. 5B and FIG. 6A to FIG. 6C.

FIG. 5A to FIG. 5B illustrates the first example of the conveying member 13 having the side surface at which the groove 132 is formed. As illustrated in FIG. 5A to FIG. 5B, a protrusion 133, which protrudes from a side surface of the axial member 131 to form (namely, define) the spiral groove 132, may be formed at the side surface of the axial member 131. In this case, the groove 132 is formed between two adjacent protrusions 133. Namely, a space between two adjacent protrusions 133 is the groove 132. Thus, the groove 132 is formed to be parallel to the protrusion 133. Note that "a state where the groove 132 is parallel to the protrusion 133" here includes not only a state where a direction in which the groove 132 extends is literally completely parallel to a direction in which the protrusion 133 extends but also a state where a state where the direction in which the groove 132 extends is substantially parallel to the direction in which the protrusion 133 extends (namely, the direction in which the groove 132 extends is approximately parallel to the direction in which the protrusion 133 extends) although the direction in which the groove 132 extends is not strictly parallel to the direction in which the protrusion 133 extends. In this case, the protrusion 133 may serve as a wall that forms the groove 132. Note that sizes of the axial member 131 and the protrusion 133 illustrated in FIG. 5A to FIG. 5B are merely examples, and they may be sizes that are different from those illustrated in FIG. 5A to FIG. 5B. For example, a size in a radial direction of the protrusion 133 with respect to a diameter of the axial member 131 may be smaller or larger than the example illustrated in FIG. 5A to FIG. 5B.

Since the protrusion 133 forms the spiral groove 132, the protrusion 133 is also a spiral member. Specifically, the protrusion 133 is formed in a spiral manner at the side surface of the axial member 131. The protrusion 133 is formed in a spiral manner to circle the side surface of the axial member 131. A position at which the protrusion 133 is formed on the side surface of the axial member 133 draws a spiral on the side surface of the axial member 131. The protrusion 133 extends, at the side surface of the axial member 131, along the direction in which the axial member 131 extends while rotating around an axis along the direction in which the axial member 131 extends.

FIG. 6A to FIG. 6C illustrates the second example of the conveying member 13 having the side surface at which the groove 132 is formed. As illustrated in FIG. 6A to FIG. 6C, a depression (namely, a concave part), which forms (namely, defines) the spiral groove 132, may be formed at the side surface of the axial member 131. Namely, the conveying member 13 having the side surface at which the groove 132 is formed may be formed by performing a process, on the side surface of the axial member 131, for forming the depression at the side surface of the axial member 131 to form the groove 132. The conveying member 13 having the side surface at which the groove 132 is formed may be formed by performing an engraving process, on the side surface of the axial member 131, for forming the groove 132. In this case, a part of the axial member 131 at which the groove 132 is not formed (for example, a part on which the engraving process is not performed or a convex part that protrudes from the groove 132) may substantially serve as the protrusion 133 that forms the groove 132. Therefore, in the below described description, the second example of the conveying member 13 is regarded to be a member having the axial member 131 having the side surface at which the groove 132 is formed, for convenience of the description, as with the first example of the conveying member 13.

Note that a shape of a cross-section along the YZ plane of the groove 132 that is formed at the side surface of the axial member 131 may be any shape. FIG. 6B illustrates an example in which the shape of the cross-section along the YZ plane of the groove 132 that is formed at the side surface of the axial member 131 is a rectangular shape (for example, a trapezoidal shape). FIG. 6C illustrates an example in which the shape of the cross-section along the YZ plane of the groove 132 that is formed at the side surface of the axial member 131 is an arc shape. Note that sizes of the axial member 131 and the groove 132 illustrated in FIG. 6A to FIG. 6C are merely examples, and they may be sizes that are different from those illustrated in FIG. 6A to FIG. 6C. For example, a size in a radial direction of the groove 132 with respect to the diameter of the axial member 131 may be smaller or larger than the example illustrated in FIG. 6A to FIG. 6C.

In both of the first example of the conveying member 13 and the second example of the conveying member 13, the conveying member 13 may serve as a screw. Therefore, not only the conveying member 13 having the structure illustrated in FIG. 5A to FIG. 5B and FIG. 6A to FIG. 6C but also a member that may serve as the screw may be used as the conveying member 13. Moreover, the first example of the conveying member 13 may serve as an Archimedean screw. Therefore, not only the conveying member 13 having the structure illustrated in FIG. 5A to FIG. 5B and FIG. 6A to FIG. 6C but also a member that may serve as the Archimedean screw may be used as the conveying member 13. Moreover, the second example of the conveying member 13 may serve as a screw thread. Therefore, not only the conveying member 13 having the structure illustrated in FIG. 5A to FIG. 5B and FIG. 6A to FIG. 6C but also a member that may serve as the screw thread may be used as the conveying member 13.

The conveying member 13 conveys the build materials M through the groove 132. The conveying member 13 conveys the build materials M so that the build materials M move in the holding space 121 through the groove 132. The conveying member 13 conveys the build materials M so that the build materials M move in the holding space 121 along the groove 132. The conveying member 13 conveys the build materials M from the holding space 121 to the outside of the holding member 12 through the conveying port 124 of the holding member 12 by using the groove 132. Thus, the conveying member 13 is disposed to penetrate the conveying port 124.

In order to convey the build materials M through the groove 132, the groove 132 is formed to extend from the holding space 121 to the conveying port 124. More specifically, the groove 132 is formed to extend at least from a part of the holding space 121 that is located just below the supply port 123 to the conveying port 124. The groove 132 is formed to extend at least from a part of the conveying member 13 that is located just below the supply port 123 to a part of the conveying member 13 that is located at the conveying port 124.

Moreover, in order to convey the build materials M through the groove 132, the driving apparatus 14 drives the conveying member 13 at which the groove 132 is formed. Thus, the driving apparatus 14 is provided with a power source such as a motor to drive the conveying member 13. Specifically, the driving apparatus 14 rotates and drives the conveying member 13 so that the conveying member 13 rotates around a rotational axis that is an axis along a direction in which the axial member 131 extends (typically, a central axis of the axial member 131). As a result, the build materials M held in the holding space 121 moves along the direction in which the axial member 131 extends (namely, the direction in which the holding space 121 extends and the longitudinal direction of the holding member 12) through the spiral groove 131 formed at the side surface of the rotating conveying member 13. Namely, the build materials M move along a direction that intersects with the Z axis. The build materials M move toward lateral direction. In this case, the driving apparatus 14 rotates and drives the conveying member 13 so that the axial member 132 rotates in a rotational direction that allows the build materials M to move toward the conveying port 124 (in an example illustrated in FIG. 3, move toward the -Y side) through the groove 132. As a result, the build materials M held in the holding space 121 fall to the outside of the holding space 121 through the conveying port 124. The build materials M held by the inner wall surface 122 fall to the outside of the inner wall surface 122 through the conveying port 124. Namely, the conveying member 13 conveys the build materials M to the outside of the holding member 12 by conveying the build materials M so that they pass through the conveying port 124.

In order to drive the conveying member 13, the conveying member 13 is coupled to the driving apparatus 14. Specifically, the conveying member 13 (especially, the axial member 131) extends from the internal space 16IN (especially, the holding space 121) to the external space 16OUT through an aperture (namely, an open end) 125 of the holding member 12 that forms an end part opposite to the conveying port 124 and an aperture 163 formed in the housing 16. The aperture 163 is a through hole that penetrates the side wall member 1612 of the housing 16 from the internal space 16IN to the external space 16OUT. The conveying member 13 is coupled to the driving apparatus 14 that is disposed in the external space 16OUT through the apertures 126 and 163.

At the aperture 163 formed in the wall member 161, a seal member 164 for fills in a gap between the conveying member 13 (especially, the axial member 131) and the wall member 161 may be formed. When the seal member 164 is formed, it is possible to reduce an accidental discharge of the build materials M in the internal space 16IN (especially, the holding space 121) to the external space 16OUT through the aperture 164. Moreover, when the seal member 164 is formed, it is possible to reduce an accidental discharge of the purge gas in the internal space 16IN (especially, the holding space 121) to the external space 16OUT through the aperture 164. Moreover, when the seal member 164 is a seal member using grease, a storage room that stores the grease with which the seal member 164 is replenished may be prepared around the seal member 164 in order to prevent a shortage of the grease of the seal member. The seal member 164 may be replenished with the grease stored in the storage room by using a capillary action, for example.

As described above, the gap SP is formed between the conveying member 13 and the inner wall surface 122 that forms the holding space 121. As a result, the conveying member 13 rotates more smoothly, compared to the case where the gap SP is not formed between the conveying member 13 and the inner wall surface 122. Namely, the conveying member 13 rotates more smoothly, compared to the case where the conveying member 13 contacts with the inner wall surface 122.

On the other hands, if a relatively large gap SP is formed between the conveying member 13 and the inner wall surface 122, a relatively large amount of the build materials M enters the gap SP. As a result, in spite of a situation where the build materials M should normally be conveyed through the groove 132 of the rotating conveying member 13, the build materials M may be conveyed not through the groove 132 of the conveying member 13 but through the gap SP. The conveyance of the build materials M not through the groove 132 may cause a fluctuation of the supply rate of the build materials M supplied from the material supply apparatus 1 to the processing apparatus 2. Thus, a size of the gap SP (namely, the gap between the conveying member 13 and the inner wall surface 122) may be set to be equal to or smaller than a desired threshold value that realizes a state where the conveyance of the build materials M through the gap SP is reduced (typically, is prevented).

Note that "the size d of the gap SP" in the first embodiment may mean a distance between the inner wall surface 122 and a part of the conveying member 13 that is closest to the inner wall surface 122. Namely, "the size d of the gap SP" may mean a minimum value of the distance between the conveying member 13 and the inner wall surface 122. As can be seen in the above described FIG. 3, FIG. 5A to FIG. 5B and FIG. 6A to FIG. 6C, the part of the conveying member 13 that is closest to the inner wall surface 122 is the protrusion 133 (especially, a part of the protrusion 133 that is located at the outermost periphery). Thus, "the size d of the gap SP" in the first embodiment may mean a distance between the protrusion 133 (especially, the part of the protrusion 133 that is located at the outermost periphery) and the inner wall surface 122.

The size d of the gap SP may be set on the basis of a characteristic of the build materials M. For example, since the build materials M are the powdery materials, the smaller the size (for example, the particle size) of the build materials M becomes, the more the build materials M enter the gap SP. Thus, the size d of the gap SP may be set on the basis of the size (for example, the particle size) of the build materials M. For example, the size d of the gap SP may be set on the basis of a maximum particle size (namely, a maximum size that is expected as the particle size of the build materials M) of the build materials M. For example, the size d of the gap SP may be set to be equal to or smaller than two times of the maximum particle size of the build materials M. When the size d of the gap SP may be set to be equal to or smaller than two times of the maximum particle size of the build materials M, the conveyance of the build materials M through the gap SP is reduced more, compared to the case where the size d of the gap SP may be set to be larger than two times of the maximum particle size of the build materials M. Alternatively, for example, the size d of the gap SP may be set to be equal to or smaller than one time of the maximum particle size of the build materials M. When the size d of the gap SP may be set to be equal to or smaller than one time of the maximum particle size of the build materials M, the conveyance of the build materials M through the gap SP is reduced more, compared to the case where the size d of the gap SP may be set to be larger than one time of the maximum particle size of the build materials M.

Again in FIG. 4, the material feed member 15 receives the build materials M conveyed from the holding member 12 by the conveying member 13. The conveying member 13 conveys the build materials M so that the build materials M fall from the holding member 12. Thus, the material feed member 15 receives the build materials M falling from the holding member 12. In this case, the material feed member 15 is disposed at a position at which the material feed member 15 is allowed to receive the build materials M falling from the holding member 12 are receivable. For example, the material feed member 15 may be disposed at least one of below and obliquely below the holding member 12. For example, the material feed member 15 may be disposed on a path through which the build materials M fall from the holding member 12. Typically, the material feed member 15 is disposed below the conveying port 124. In order to receive the build materials M, the material feed member 15 may have a funnel-liked shape (namely, an inverted-cone-liked shape). The material feed member 15 collects and receives, by a wall member having the funnel-liked shape, the build materials M conveyed from the holding member 12. However, the material feed member 15 may have another shape (for example, an inverted-pyramid-liked shape, and an inverted-square-pyramid-liked shape as one example).

Moreover, the material feed member 15 feeds, to the outside of the material supply apparatus 1 (namely, to the processing apparatus 2), the build materials M received from the holding member 12. In order to feed the build materials M to the processing apparatus 2, a feed port 151 is formed in a lower end of the material feed member 15. The feed port 151 is an aperture (namely, a through hole) that penetrates a bottom wall of the material feed member 15 along the Z axis direction. Alternatively, when a wall member is not formed at the lower end of the material feed member 15, a lower open end of the material feed member 15 at which the wall member is not formed may be used as the feed port 151. A shape of a cross-section (specifically, a cross-section along the XY plane) of the feed port 151 is a circular shape, however, may be another shape. Another shape includes at least one of a long round shape, an oval shape, a rectangular shape and a polygonal shape.

A feed port 165 is formed in the housing 16. The feed port 165 is an aperture (namely, a through hole) that penetrates the wall member 161 (in the example illustrated in FIG. 3, the bottom member 1613) from the internal space 16IN to the external space 16OUT. The feed port 165 is connected to the feed port 151 of the material feed member 15. The above described material supply pipe 91 (it is not illustrated in FIG. 3) that is connected to the processing apparatus 2 is connected to the feed port 165. Therefore, the build materials M fed from the material feed member 15 is fed to the processing apparatus 2 through the feed ports 151 and 165 and the material supply pipe 91.

Moreover, an inlet port 166 is formed in the housing 16. The inlet port 166 is an aperture (namely, a through hole) that penetrates the wall member 161 (in the example illustrated in FIG. 3, the side wall member 1612, however, it may be the ceiling member 1611 or the bottom member 1613) from the internal space 16IN to the external space 16OUT. The inlet port 166 is connected to the above described gas supply apparatus 5. Therefore, the pressurized purge gas is supplied to the internal space 16IN of the housing 16 from the above described gas supply apparatus 6 through the inlet port 166.

In the internal space 16IN, a flow guide member (for example, a flow guide plate) for controlling a flow of the purge gas supplied from the inlet port 166 to the internal space 16IN may be formed. The flow guide member may be formed to reduce the effect of the purge gas supplied from the inlet port 166 on the build materials M falling from the holding member 12 to the material feed member 15. For example, the flow guide member may be formed to reduce such an effect that the purge gas supplied from the inlet outlet 166 blows off or kicks up the build materials M falling from the holding member 12 to the material feed member 15. If the build materials M falling from the holding member 12 to the material feed member 15 is blown off or kicked up, the amount of build materials M that actually fall from the holding member 12 to the material feed member 15 may fluctuate, and as a result, the supply rate of the build materials M supplied from the material supply apparatus 1 to the processing apparatus 2 may fluctuate. Thus, the flow guide member that is formed to reduce such an effect that the purge gas blows off or kicks up the build materials M may serve as a member that reduces the fluctuation of the supply rate of the build materials M supplied from the material supply apparatus 1 to the processing apparatus 2.

Moreover, an aperture 167 is formed in the housing 16. The aperture 167 is an aperture (namely, a through hole) that penetrates the wall member 161 (in the example illustrated in FIG. 3, the ceiling member 1611, however, it may be the side wall member 1612 or the bottom member 1613) from the internal space 16IN to the external space 16OUT. The above described connection pipe 17 that is connected to the aperture 116 of the hopper 11 is connected to the aperture 167. Specifically, one end part of the connection pipe 17 is connected to the aperture 116 and the other end part of the connection pipe 17 is connected to the aperture 167. As a result, the storage space 112 of the hopper 11 is connected to the internal space 16IN of the housing 16 through the connecting pipe 17, the aperture 116 and the aperture 167. Namely, in the processing system SYSa, not only a path through the supply ports 113, 162 and 123 but also a path through the connecting pipe 17, the aperture 116 and the aperture 167 are formed as a path that connects the storage space 112 and the internal space 16IN. In other words, the connection pipe 17 connects the storage space 112 and the internal space 16IN at a position that is different from the supply ports 113, 162 and 123.

Thus, even when the build materials M are stored in the storage space 112 (as a result, the path through the supply ports 113, 162 and 123 that is the path connecting the storage space 112 and the internal space 16IN is blocked by the build materials M), the storage space 112 is a space that is purged by the purge gas, as with the internal space 16IN. Moreover, even when the build materials M are stored in the storage space 112 (as a result, the path through the supply ports 113, 162 and 123 that is the path connecting the storage space 112 and the internal space 16IN is blocked by the build materials M), the purge gas in the storage space 112 flows (namely, moves) in the internal space 16IN and / or the purge gas in the internal space 16IN flows in the storage space 112 through the connection pipe 17. As a result, a difference between a pressure in the storage space 112 and a pressure in the internal space 16IN is reduced. Thus, it is unlikely that an imbalance occurs between the pressure in the storage space 112 and the pressure in the internal space 16IN. Therefore, it is unlikely to cause such an inconvenience that the build materials M are unexpectedly supplied from the hopper 11 to the holding member 12 due to the imbalance that occurs between the pressure of the storage space 112 and the pressure of the internal space 16IN. Moreover, it is unlikely that the build materials M are not supplied smoothly from the hopper 11 due to the imbalance between the pressure of the storage space 112 and the pressure of the internal space 16IN. Moreover, it is unlikely that the build materials M supplied from the hopper 11 to the internal space 16IN (especially the holding space 121) flow back to the storage space 112 of the hopper 11 through the supply ports 113, 162 and 123 due to the imbalance between the pressure of the storage space 112 and the pressure of the internal space 16IN.

Note that the hopper 11 may be disposed in the internal space 16IN in addition to or instead of the processing system SYSa being provided with the connection pipe 17. In this case, even when the connection pipe 17 is not connected to the aperture 116, the storage space 112 is connected to the internal space 16IN through the aperture 116. Thus, it is unlikely that the imbalance occurs between the pressure in the storage space 112 and the pressure in the internal space 16IN. Note that the aperture 167 may not be formed in the housing 16 when the processing system SYSa is not provided with the connection pipe 17.

The support member 18 is a member that extends from a support surface F such as a floor surface to the housing 16 (the bottom member 1613 in the example illustrated in FIG. 3). The material supply apparatus 1 having the housing 16 is supported by the support surface F through the support member 18.

The weight measurement apparatus 19 is configured to measure a weight of the build materials M stored in the hopper 11. The weight measurement apparatus 19 may be configured to directly measure the weight of the build materials M stored in the hopper 11. Alternatively, the weight measurement apparatus 19 may be configured to indirectly measure the weight of the build materials M stored in the hopper 11. For example, weight measurement apparatus 19 may be configured to measure a weight of a part (alternatively, whole) of the material supply apparatus 1 having the hopper 11. In this case, the control apparatus 7 may estimate the weight of the build materials M stored in the hopper 11 by subtracting a weight of a member other than the hopper 11 from a measured result by the weight measurement apparatus 19. Note that the weight measurement apparatus 19 may have any structure and may be disposed at any position as long as it is configured to measure the weight of the build materials M stored in the hopper 11.

### (1-3-2) Supply Operation of Build Materials M by Material Supply Apparatus 1

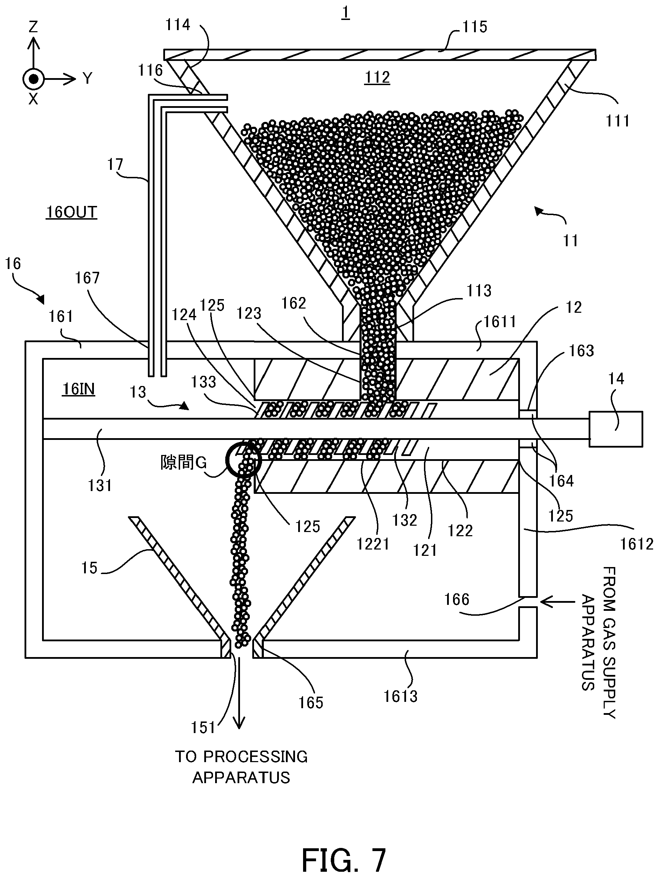

Next, with reference to FIG. 7, a supply operation of the build materials M by the material supply apparatus 1 will be described. FIG. 7 is a cross-sectional view that illustrate the supply operation of the build materials M by the material supply apparatus 1.

As illustrated in FIG. 7, the build materials M stored in the storage space 112 of the hopper 11 fall to the holding space 112 of the holding member 12 through the supply ports 113, 162 and 123. The build materials M stored in the storage space 112 of the hopper 11 fall to the holding surface 1121 of the holding member 12 through the supply ports 113, 162 and 123. Namely, the build materials M are supplied from the hopper 11 to the holding member 12 (especially, to the holding space 121, moreover, to the conveying member 13 disposed in the holding space 121) along the gravity direction. In order to supply the build materials M in this manner, the supply port 123 is formed at a surface part of the inner wall surface 122 that does not intersect with the conveying member 13 (especially, the axial member 131). As a result, the holding space 121 holds the build materials M the amount of which is based on the size of the holding space 121. The build materials M the amount of which is based on the size of the holding space 121 are deposited on the holding surface 1211.

The build materials M deposited on the holding surface 1211 contact with the supply ports 123, 162 and 113. In this case, when the conveying member 113 remains still (namely, does not rotate), the deposited build materials M blocks the supply ports 123, 162 and 113 and prevent the build materials M from being supplied to the holding member 12 more. In this situation, the conveying member 13 is driven and rotated by the driving apparatus 14. After the conveying member 13 starts to rotate, the build materials M held in the holding space 121 start to move through the groove 132 formed at the conveying member 13 as described above. The build materials M are pushed by the protrusion 133 that forms the grooves 132 and gradually move toward the conveying port 124. Namely, the conveying member 13 conveys the build materials M toward the conveying port 124. Namely, the conveying member 13 conveys the build materials M along a direction (for example, the Y axis direction) that intersects with a direction (for example, the gravity direction and the Z axis direction) in which the build materials M are supplied from the hopper 11 to the conveying member 13.

As a result, the build materials M conveyed by the conveying member 13 fall (namely, drop) from the aperture 124 of the holding member 12 to the outside of the holding member 12 (namely, the material feed member 15). Specifically, the build materials M fall to the material feed member 15 from a gap G that corresponds to an end part of the groove 132 or the groove 132 exposed in the internal space 16IN. Namely, the build materials M fall to the material feed member 15 from the gap G that is formed by the groove 132 at a position at which the aperture 124 is formed. The gap G is a gap that is formed by the groove 132 between the holding member 12 and the conveying member 13 at the position at which the aperture 124 is formed. The gap G is a gap that is formed by the groove 132 between an edge part 125 of the holding member 12 that forms the conveying port 124 and the conveying member 13 at the position at which the aperture 124 is formed. The gap G is a gap that is formed by the groove 132 between the edge part 125 and the protrusion 133 of the conveying member 13 at the position at which the aperture 124 is formed. The gap G is a gap that is formed by the groove 132 between the edge part 125 and a part of the protrusion 133 that is located in the external space 16IN at the position at which the aperture 124 is formed.

Since the pitch (namely, the cycle, and the distance that the grooves 132 extends (namely, runs) during one rotation of the groove 132) of the spiral groove 132 is constant, the build materials M held in the holding space 121 are conveyed at a constant conveying rate when the conveying member 13 continuously rotates in a same manner. As a result, a constant amount of the build materials M fall from the conveying port 124 of the holding member 12 to the outside of the holding member 12 (namely, the material feed member 15) per unit time. As a result, a constant amount of the build materials M are conveyed from the holding member 12 to the material feed member 15 per unit time. Thus, the conveying member 13 substantially serves as a member that outputs a constant amount of the build materials M to the outside of the holding member 12 per unit time by conveying the build materials M through the groove 132.

On the other hand, when the rotation of the conveying member 13 by the driving apparatus 14 stops, the build materials M held in the holding space 121 stops moving and the build materials M do not fall from the holding member 12. Namely, the conveyance of the build materials M from the holding member 12 to the material feed member 15 is stopped. As a result, the supply of the build materials M from the material supply apparatus 1 to the processing apparatus 2 is also stopped. Therefore, the driving apparatus 14 stops the rotation of the conveying member 13 at a timing when the build materials M do not need to be supplied to the processing apparatus 2 (for example, at a timing when the material nozzle 212 does not need to supply the build materials M) under the control of the control apparatus 7.

The amount of the build materials M conveyed from the holding member 12 to the outside of the holding member 12 per unit time (namely, a conveyed amount of the build materials M per unit time) is controllable by a state of the rotation of the conveying member 13. Thus, the control apparatus 7 may set the state of the rotation of the conveying member 13 so that the amount of the build materials M conveyed from the holding member 12 to the material feed member 15 per unit time is a desired conveyed amount based on the supply rate of the build materials M that is necessary to form the three-dimensional structural object ST. Moreover, the driving apparatus 33 may rotate, under the control of the control apparatus 7, the conveying member 13 so that the conveying member 13 keeps rotating in a set rotational state during a period when the processing apparatus 2 forms the three-dimensional structural object ST (more specifically, the material nozzle 212 keeps supplying the build materials M). As a result, a constant amount of the build materials M that is necessary per unit time for the processing apparatus 2 to form the three-dimensional structural object ST are conveyed from the holding member 12 to the material feed member 15.

The state of the rotation may include a rotational speed (namely, the number of rotations per unit time), for example. For example, the faster the rotational speed is (namely, the larger the number of rotations per unit time is larger), the faster a moving speed of the build materials M moving through the groove 132 is. Thus, the faster the rotational speed is, the larger the amount of the build materials M conveyed from the holding member 12 to the outside of the holding member 12 per unit time is. The larger the amount of the build materials M conveyed from the holding member 12 to the outside of the holding member 12 per unit time is, the larger the amount (namely, the supplied amount) of the build materials M supplied from the material supply apparatus 1 to the processing apparatus 2 per unit time is. Therefore, the faster the rotational speed is, the larger the supplied amount of the build materials M supplied from the material supply apparatus 1 to the processing apparatus 2 per unit time is. The control apparatus 7 may set the rotational speed of the conveying member 13 by considering a relationship between the rotational speed of the conveying member 13 and the supplied amount of the build materials M so that the amount of the build materials M conveyed from the holding member 12 to the material feed member 15 per unit time is the desired conveyed amount based on the supply rate of the build materials M that is necessary to form the three-dimensional structural object ST. Namely, the control apparatus 7 may set the rotational speed of the conveying member 13 on the basis of the supply rate of the of the build materials M that is necessary to form the three-dimensional structural object ST (namely, the amount of the build materials M which the material supply apparatus 1 should supply per unit time). Moreover, the driving apparatus 14 may rotate and drive the conveying member 13 so that the conveying member 13 rotates at the rotational speed set by the control apparatus 7.

However, when the conveying member 13 contacts with another member, there is a possibility that at least one of the conveying member 13 and another member abrades away due to the contact of the conveying member 13 and another member when the conveying member 13 rotates. Note that the seal member 164 is one example of the member that may contact with the conveying member 13. In this case, the rotational speed of the conveying member 13 is too fast, there is a possibility that at least one of the conveying member 13 and another member abrades away excessively. Thus, an allowable upper limit speed of the rotational speed of the conveying member 13 may be set. In this case, the rotational speed of the conveying member 13 is set to be equal to or slower than the lower limit speed.

Even when the state of the rotation of the conveying member 13 does not change, there is a possibility that the amount of the build materials M in a first state conveyed from the holding member 12 per unit time is not equal to the amount of the build materials M in a second state (note that the second state is different from the first state) conveyed from the holding member 12 per unit time. Namely, there is a possibility that the amount of the build materials M in the first state conveyed from the holding member 12 per unit time by the conveying member 13 that rotates in a certain state is not equal to the amount of the build materials M in the second state conveyed from the holding member 12 per unit time by the conveying member 13 that rotates in the same state. Specifically, for example, there is a possibility that the amount of a first type of the build materials M conveyed from the holding member 12 per unit time by the conveying member 13 that rotates in a certain state is not equal to the amount of a second type (note that the second type is different from the first type) of the build materials M conveyed from the holding member 12 per unit time by the conveying member 13 that rotates in the same state. For example, there is a possibility that the amount of the build materials M having a first particle size conveyed from the holding member 12 per unit time by the conveying member 13 that rotates in a certain state is not equal to the amount of the build materials M having a second particle size (note that the second particle size is different from the first particle size) conveyed from the holding member 12 per unit time by the conveying member 13 that rotates in the same state. For example, there is a possibility that the amount of the build materials M having a first shape (especially, an outer shape) conveyed from the holding member 12 per unit time by the conveying member 13 that rotates in a certain state is not equal to the amount of the build materials M having a second shape (note that the second shape is different from the first shape) conveyed from the holding member 12 per unit time by the conveying member 13 that rotates in the same state. For example, there is a possibility that the amount of the build materials M a friction coefficient of a surface of which is a first value conveyed from the holding member 12 per unit time by the conveying member 13 that rotates in a certain state is not equal to the amount of the build materials M a friction coefficient of a surface of which is a second value (note that the second value is different from the first value) conveyed from the holding member 12 per unit time by the conveying member 13 that rotates in the same state. Therefore, the control apparatus 7 may set the rotational speed of the conveying member 13 by considering a relationship between the state of the build materials M and the supplied amount of the build materials M in addition to or instead of the relationship between the rotational speed of the conveying member 13 and the supplied amount of the build materials M so that the amount of the build materials M conveyed from the holding member 12 to the material feed member 15 per unit time is the desired conveyed amount based on the supply rate of the build materials M that is necessary to form the three-dimensional structural object ST. Namely, the control apparatus 7 may set the rotational speed of the conveying member 13 on the basis of the state of the build materials M and the supply rate of the of the build materials M that is necessary to form the three-dimensional structural object ST. Here, the state of the build materials M may include at least one of the type of the build materials M, the size (for example, the particle size) of the build materials M, the shape of the build materials M and the friction coefficient of the surface of the build materials M.

The amount of the build materials M conveyed from the holding member 12 to the outside of the holding member 12 per unit time (namely, the conveyed amount of the build materials M per unit time) is controllable by a characteristic of the conveying member 13 itself. Thus, the characteristic of the conveying member 13 may be set to a desired characteristic that allows the amount of the build materials M conveyed from the holding member 12 to the material feed member 15 per unit time is the desired conveyed amount based on the supply rate of the build materials M that is necessary to form the three-dimensional structural object ST. Namely, the characteristic of the conveying member 13 may be set on the basis of the supply rate of the build materials M that is necessary to form the three-dimensional structural object ST. The characteristic of the conveying member 13 may be set to a desired characteristic that allows the amount of the build materials M conveyed from the holding member 12 to the material feed member 15 per unit time is the desired conveyed amount when the conveying member 13 rotates at a desired rotational speed. Namely, the characteristic of the conveying member 13 may be set on the basis of the supply rate of the build materials M that is necessary to form the three-dimensional structural object ST and the rotational speed of the conveying member 13.

As one example, the smaller a bulk of the groove 132 per one spiral formed by the groove 132 (namely, a bulk of the groove 132 per one pitch (one cycle)) is, the smaller the supply rate of the build materials M supplied from the material supply apparatus 1 to the processing apparatus 2 is. Thus, when the bulk of the groove 132 per one spiral is smaller than necessary one, such a first technical problem may occur that the material supply apparatus 1 cannot supply the build materials M at the supply rate of the build materials M that is necessary to form the three-dimensional structural object ST even when the conveying member 13 rotates at the upper limit speed. Thus, the characteristic of the conveying member 13 may be set so that the bulk of the groove 132 per one spiral is equal to or larger than a first predetermined amount that is set from a viewpoint of not causing the above described first technical problem. As a result, when the bulk of the groove 132 per one spiral is equal to or larger than the first predetermined amount, the material supply apparatus 1 is allowed to supply the build materials M at the supply rate of the build materials M that is necessary to form the three-dimensional structural object ST in a situation where the conveying member 13 rotates at the upper limit speed (namely, in a situation where the conveying member 13 rotates at a rotational speed that is equal to or slower than the upper limit speed).

On the other hand, when the bulk of the groove 132 per one spiral is larger than necessary one, the conveyed amount of the build materials M conveyed by the conveying member 13 to the material feed member 15 per unit time fluctuates easily. This is because the larger the bulk of the groove 132 per one spiral is, the larger the amount of the build materials M that collapse due to their own weight in the groove 132 is, and thus, there is a possibility that the amount of the build materials M falling from the gap G at an undesired timing is larger. As a result, such a second technical problem may occur that the supply rate of the build materials M supplied from the material supply apparatus 1 to the processing apparatus 2 fluctuates. Thus, the characteristic of the conveying member 13 may be set so that the bulk of the groove 132 per one spiral is equal to or smaller than a second predetermined amount (note that the second predetermined amount is smaller than the first predetermined amount) that is set from a viewpoint of not causing the above described second technical problem. As a result, when the bulk of the groove 132 per one spiral is equal to or smaller than the second predetermined amount, the fluctuation of the supply rate of the build materials M supplied from the material supply apparatus 1 to the processing apparatus 2 is reduced.

Conversely, the control apparatus 7 may set the rotational speed of the conveying member 13 by considering the characteristic of the conveying member 13 so that the amount of the build materials M conveyed from the holding member 12 to the material feed member 15 per unit time by using the conveying member 13 having a certain characteristic is the desired conveyed amount based on the supply rate of the build materials M that is necessary to form the three-dimensional structural object ST. Namely, the rotational speed of the conveying member 13 (alternatively, the state of the rotation of the conveying member 13) may be set on the basis of the supply rate of the build materials M that is necessary to form the three-dimensional structural object ST and the characteristic of the conveying member 13.

The characteristic of the conveying member 13 may include a characteristic of the groove 132 formed at the conveying member 13. This is because there is a possibility that an amount of the build materials M that are in the groove 132 fluctuates when the characteristic of the groove 132 changes, and as a result, there is a possibility that the amount of the build materials M conveyed through the groove 132 per unit time changes. The amount of the build materials M that are in the groove 132 depends on the bulk of the groove 132. Thus, the characteristic of the groove 132 may include the bulk of the groove 132 (for example, the bulk of the groove 132 per one spiral). The characteristic of the groove 132 may include a characteristic that affects the bulk of the groove 132 per one spiral. One example of the characteristic that affects the bulk of the groove 132 per one spiral may include at least one of a shape of the groove 132, a depth of the groove 132, a width of the groove 132 and the pitch of the groove 132. The shape of the groove 132 may include the shape of the cross-section (specifically, the shape of the cross-section along a plane that intersecting with the direction in which the axial member 131 extends) of the groove 132.

When the build materials M are conveyed from the holding member 12 to the material feed member 15, the amount of the build materials M held by the holding member 12 decreases. On the other hand, since the holding member 12 is located below the supply port 113 of the hopper 11, new build materials M are supplied from the hopper 11 to the holding member 12 through the supply port 113 due to the weight of the build materials M themselves, when the amount of the build materials M held by the holding member 12 decreases. Namely, the build materials M, the amount of which is based on the amount of the build materials M conveyed from the holding member 12 to the material feed member 15, are newly supplied from the hopper 11 to the holding member 12. For example, the build materials M, the amount of which is approximately equal to the amount of the build materials M conveyed from the holding member 12 to the material feed member 15, are newly supplied from the hopper 11 to the holding member 12. Therefore, it is unlikely that there is no build material M on the holding member 12 due to the conveyance of the build materials M from the holding member 12. Typically, the holding member 12 holds the build materials M the amount of which is approximately the same.

The build materials M conveyed from the holding member 12 fall from the holding member 12 to the material feed member 15. As a result, the material feed member 15 receives the build materials M conveyed from the holding member 12. The build materials M received by the material feed member 15 are fed to the outside of the material supply apparatus 1 (namely, to the processing apparatus 2). Here, as described above, the pressurized purge gas is supplied from the gas supply apparatus 5 through the inlet port 166 to the internal space 16IN of the housing 16 in which the material feed member 15 is disposed. The material feed member 15 feeds the build materials M to the processing apparatus 1 by the pressure-feeding using the pressurized purge gas. Namely, build materials M received by the material feed member 15 are pushed to be fed in the material supply pipe 91 through the feed ports 151 and 164 by the pressure of the purge gas supplied to the internal space 16IN. The build materials M fed through the material supply pipe 91 are supplied from the material nozzle 212.

Since the material feed member 15 feed the build materials M by the pressure-feeding, the amount of the build materials M fed by the material feed member 15 per unit time depends on the amount of the build materials M conveyed from the holding member 12 to the material feed member 15 per unit time. Thus, the material feed member 15 feeds the constant amount of the build materials M to the processing apparatus 2 per unit time. Namely, the material supply apparatus 1 supplies the build materials M to the processing apparatus 2 so that the amount of the build materials M supplied from the material supply apparatus 1 to the processing apparatus 2 per unit time is the constant supplied amount that is based on the supply rate of the build materials M that is necessary to form the three-dimensional structural object ST.

Incidentally, in the above described description, the amount of the build materials M conveyed from the holding member 12 to the material feed member 15 per unit time is constant during the period when the processing apparatus 2 forms the three-dimensional structural object ST. Namely, the amount of the build materials M supplied from the material supply apparatus 1 to the processing apparatus 2 per unit time is constant during the period when the processing apparatus 2 forms the three-dimensional structural object ST. However, the material supply apparatus 1 may change, under the control of the control apparatus 7, the amount of the build materials M supplied from the material supply apparatus 1 to the processing apparatus 2 per unit time during the period when the processing apparatus 2 forms the three-dimensional structural object ST. Specifically, as described above, the amount of the build materials M conveyed from the holding member 12 to the material feed member 15 per unit time depends on the state of the rotation of the conveying member. Therefore, the control apparatus 7 may control the driving apparatus 14 to change the state of the rotation of the conveying member 13 in at least a part of the period when the processing apparatus 2 forms the three-dimensional structural object ST. As a result, the amount of the build materials M conveyed from the holding member 12 to the material feed member 15 per unit time is changed due to the change of the state of the rotation of the conveying member 13. Namely, the amount of the build materials M conveyed from the material supply apparatus 1 to the processing apparatus 2 per unit time is changed due to the change of the state of the rotation of the conveying member 13.

A situation where the moving speed of the processing head 21 by the head driving system 22 is changed is one example of a situation where the amount of the build materials M supplied from the material supply apparatus 1 per unit time is changed. In this case, the control apparatus 7 may change the amount of the build materials M conveyed from the material supply apparatus 1 to the processing apparatus 2 per unit time on the basis of the moving speed of the processing head 21 (namely, on the basis of information relating to the moving speed of the processing head 21). Specifically, the faster the moving speed of the processing head 21 is, the shorter a time during which the material nozzle 212 supplies the build materials M to a certain unit area on the workpiece W (alternatively, a certain unit area on the structural layer SL formed on the workpiece W, the same applies to the below described description). Therefore, the faster the moving speed of the processing head 21 is, the smaller the amount of the build materials M supplied to the unit area is. As a result, when the moving speed of the processing head 21 is changed, there is a possibility that the amount of the build materials M supplied to one unit area on the workpiece W is not equal to the amount of the build materials M supplied to another unit area on the workpiece W. In this case, there is a possibility that an accuracy of the formed three-dimensional structural object ST is affected. Thus, the control apparatus 7 may change the amount of the build materials M supplied from the material supply apparatus 1 per unit time on the basis of the moving speed of the processing head 21 so that the amount of the build materials M supplied to each of the plurality of unit areas on the workpiece W is constant. Specifically, the control apparatus 7 may change the supplied amount of the build materials M per unit time so that the faster the moving speed of the processing head 21 is, the larger the amount of the build materials M supplied from the material supply apparatus 1 per unit time is.

When the allowable upper limit speed of the rotational speed of the conveying member 13 is set, the control apparatus 7 may back-calculate, on the basis of the upper limit speed, the supplied amount of the build materials M which the material supply apparatus 1 is allowed to supply to the processing apparatus 2 per unit time and set an upper limit of the moving speed of the processing head 21 of the processing apparatus 2 on the basis of the supplied amount.

Note that the control apparatus 7 may change the amount of the build materials M conveyed from the material supply apparatus 1 to the processing apparatus 2 per unit time on the basis of at least one of the information relating to the moving speed of the processing head 21 and information relating to the irradiation of the processing light EL, not only in the above described situation. Note that at least one of the intensity of the processing light EL, the irradiation position of the processing light EL and the irradiation timing of the processing light EL is one example of the information relating to the irradiation of the processing light EL. For example, the control apparatus 7 may change the amount of the build materials M conveyed from the material supply apparatus 1 to the processing apparatus 2 per unit time in accordance with the change of the intensity of the processing light EL. For example, the control apparatus 7 may change the amount of the build materials M conveyed from the material supply apparatus 1 to the processing apparatus 2 per unit time in accordance with the change of the irradiation timing of the processing light EL.

### (1-3) Processing Operation of Processing System SYSa

Next, a processing operation of the processing system SYSa will be described.

### (1-3-1) First Processing Operation for forming Three-Dimensional Structural Object ST

As described above, the processing system SYSa performs a first processing operation for forming the three-dimensional structural object ST by the Laser Metal Deposition. Specifically, as described above, the processing system SYSa forms the three-dimensional structural object ST by the Laser Metal Deposition. Thus, the processing system SYSa may form the three-dimensional structural object ST by performing an existing processing operation (a build operation in this case) based on the Laser Metal Deposition. Next, one example of the first processing operation of forming the three-dimensional structural object ST by using the Laser Metal Deposition will be briefly described.

The processing system SYSa forms the three-dimensional structural object ST on the workpiece W on the basis of a three-dimensional model data or the like (for example, a CAD (Computer Aided Design) data) of the three-dimensional structural object ST that should be formed. At least one of a measured data of the solid object measured by a non-illustrated measurement apparatus disposed in the processing system SYSa and a measured data by a three-dimensional shape measurement device disposed separately from the processing system SYSa may be used as the three-dimensional model data. A contact-type of three-dimensional coordinate measurement device having a probe that is movable relative to the workpiece W and is allowed to contact the workpiece W is one example of the three-dimensional shape measurement device. A non-contact-type of three-dimensional measurement device is one example of the three-dimensional shape measurement device. At least one of a Pattern Projection type of three-dimensional measurement device, a Light Section type of three-dimensional measurement device, a Time Of Flight type of three-dimensional measurement device, a Moire Topography type of three-dimensional measurement device, a Holographic Interference type of three-dimensional measurement device, a CT (Computed Tomography) type of three-dimensional measurement device, a MRI (Magnetic Resonance Imaging) type of three-dimensional measurement device and the like is one example of the non-contact-type of three-dimensional measurement device. Note that a STL (Stereo Lithography) format, a VRML (Virtual Reality Modeling language) format, an AMF (Additive manufacturing File format), an IGES (Initial Graphics Exchange Specification) format, a VDA-FS (Association of German Automotive manufactures-Surfaces Interface) format, a HP/GL (Hewlett-Packard Graphics Language) format, a Bitmap format and the like may be used as the three-dimensional model data, for example.

The processing system SYSa sequentially forms a plurality of layered partial structural objects (it is referred to as a "structural layer" in the below described description) SL that are arranged along the Z axis direction in order to form the three-dimensional structural object ST, for example. For example, the processing system SYSa forms, one by one, the plurality of structural layers SL that are obtained by slicing the three-dimensional structural object ST along the Z axis direction. As a result, the three-dimensional structural object ST that is a layered structural body in which the plurality of structural layers SL are layered is formed. Next, a flow of an operation for forming the three-dimensional structural object ST by forming the plurality of structural layers SL one by one in sequence will be described.

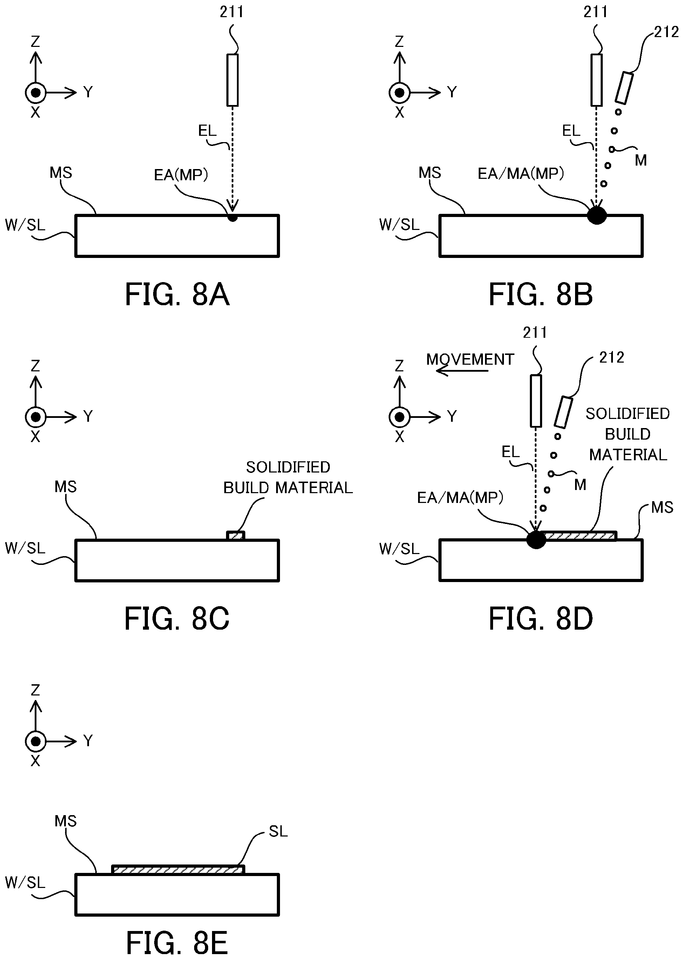

Firstly, with reference to FIG. 8A to FIG. 8E, an operation for forming each structural layer SL will be described. The processing system SYSa sets the irradiation area EA at a desired area on a build surface MS that corresponds to a surface of the workpiece W or a surface of the formed structural layer SL and emits the processing light EL from the irradiation optical system 211 to the irradiation area EA under the control of the control apparatus 7. Note that an area on the build surface MS that is occupied by the processing light EL emitted from the irradiation optical system 211 may be referred to as the irradiation area EA. In the first embodiment, a light concentration position (namely, a condensed position) of the processing light EL is coincident with the build surface MS. As a result, as illustrated in FIG. 8A, the melt pool (namely, a pool of a metal molten by the processing light EL) MP is formed at the desired area on the build surface MS by the processing light EL emitted from the irradiation optical system 211. Moreover, the processing system SYSa sets the supply area MA at the desired area on the build surface MS and supplies the build materials M to the supply area MA from the material nozzle 212 under the control of the control apparatus 7. Here, since the irradiation area EA is coincident with the supply area MA as described above, the supply area MA is set at an area at which the melt pool MP is formed. Thus, the processing system SYSa supplies the build materials M to the melt pool MP from the material nozzle 212, as illustrated in FIG. 8B. As a result, the build materials M supplied to the melt pool MP are molten. When the melt pool MP is not irradiated with the processing light EL due to the movement of the processing head 21, the build materials M molten in the melt pool MP are cooled and solidified (namely, coagulated). As a result, as illustrated in FIG. 8C, the solidified build materials M are deposited on the build surface MS. Namely, a build object is formed by a deposition of the solidified build materials M.

A series of build process including the formation of the melt pool MP by the irradiation of the processing light EL, the supply of the build materials M to the melt pool MP, the melting of the supplied build materials M and the solidification of the molten build materials M is repeated while relatively moving the processing head 21 relative to the build surface MS along the XY plane, as illustrated in FIG. 8D. Namely, when the processing head 21 relatively moves relative to the build surface MS, each of the irradiation area EA and the supply area MA also relatively move relative to the build surface MS. Therefore, the series of build process is repeated while relatively moving each of the irradiation area EA and the supply area MA relative to the build surface MS along the XY plane (namely, in a two-dimensional plane). In this case, the irradiation area EA set at the area on which the build object should be formed on the build surface MS is selectively irradiated with the processing light EL and the irradiation area EA set at an area on which the build object should not be formed on the build surface MS is not selectively irradiated with the processing light EL (it can be said that the irradiation area EA is not set at the area on which the build object should not be formed). Namely, the processing system SYSa moves the irradiation area EA along a predetermined moving trajectory on the build surface MS and irradiates the build surface MS with the processing light EL at a timing based on an aspect of a distribution of an area on which the build object should be formed. Note that the aspect of the distribution of an area on which the build object should be formed may be referred to as a distribution pattern and a pattern of the structural layer SL. As a result, the melt pool MP also moves on the build surface MS along a moving trajectory based on the moving trajectory of the irradiation area EA. Specifically, the melt pool MP is formed in series at a part that is irradiated with the processing light EL in the area along the moving trajectory of the irradiation area EA on the build surface MS. Moreover, since the irradiation area EA is coincident with the supply area MA as described above, the supply area MA also moves on the build surface MS along a moving trajectory based on the moving trajectory of the irradiation area EA. As a result, as illustrated in FIG. 8E, the structural layer SL that is an aggregation of the build object of the solidified build materials M is formed on the build surface MS. Namely, the structural layer SL that is an aggregation of the build object formed in a pattern based on the moving trajectory of the melt pool MP on the build surface MS (namely, the structural layer SL having a shape based on the moving trajectory of the melt pool MP in a planar view) is formed. Incidentally, when the irradiation area EA is set at the area on which the build object should not be formed, the irradiation area EA may be irradiated with the processing light EL and the supply of the build materials M may be stopped. Moreover, when the irradiation area EA is set at the area on which the build object should not be formed, the build materials M may be supplied to the irradiation area EL and the irradiation area EL may be irradiated with the processing light EL having an intensity by which the melt pool MP is not formed. Incidentally, although the irradiation area EA is moved relative to the build surface MS in the above described description, the build surface MS may be moved relative to the irradiation area EA.

The processing system SYSa repeats the operation for forming the structural layer SL on the basis of the three-dimensional model data under the control of the control apparatus 7. Specifically, the control apparatus 7 firstly generates a slice data by performing a slicing process on the three-dimensional model data by a layer pitch. The slice data includes a data that defines a detail of a processing process for forming the plurality of structural layers SL (namely, the processing process including a series of the build process described above). Namely, the slice data includes a data that defines the detail of the processing process for forming the three-dimensional structural object ST. Thus, the slice data may be referred to as a processing data or a build data. The control apparatus 7 may perform the slicing process on the three-dimensional model data by executing a computer program that is refereed to as a slicer.

The slice data may include, as the data that defines the detail of the processing process, a model data (especially, a three-dimensional model data ) of each of the plurality of structural layers SL constituting the three-dimensional structural object ST. In this case, the three-dimensional model data may include a sloid data or a surface data.

The slice data may include, as the data that defines the detail of the processing process, a command data for controlling the processing system SYSa to form the plurality of structural layers SL constituting the three-dimensional structural object ST. The command data may include a data relating to the movement of the processing head 21. The command data may include a data relating to the movement of the stage 31. Incidentally, since the workpiece W is placed on the stage 3 1, the command data may include a data relating to the movement of the workpiece W that is placed on the stage 31. When at least one of the processing head 21 and the stage 31 moves, each of the irradiation area EA and the supply area MA moves on the workpiece W. Thus, the command data may include a data relating to the movement of at least one of the irradiation area EA and the supply area MA. In this case, the command data may include a processing path data that designates a moving trajectory (in other word, a moving path) of at least one of the processing head 21, the stage 31, the workpiece W, the irradiation area EA and the supply area MA. The processing path data may designate the moving trajectory for forming the three-dimensional structural object ST in a situation where an effect of a heat (especially, an effect of a heat to the build surface MS) caused by the irradiation of the processing light EL is considered. Alternatively, the processing path data may designate the moving trajectory for forming the three-dimensional structural object ST in a situation where the effect of the heat (especially, the effect of the heat to the build surface MS) caused by the irradiation of the processing light EL is considered. The command data may include a processing speed data that designates a moving speed of at least one of the processing head 21, the stage 31, the workpiece W, the irradiation area EA and the supply area MA. The command data may include an emission data that designates a timing when the irradiation optical system 211 emits the processing light EL in synchronization with the of at least one of the processing head 21, the stage 31, the workpiece W, the irradiation area EA and the supply area MA. The command data may include an emission data that designates a timing when the material nozzle 212 supplies the build materials M in synchronization with the of at least one of the processing head 21, the stage 31, the workpiece W, the irradiation area EA and the supply area MA. Note that what we call a G-code is one example of the command data described above.

Note that the control apparatus 7 may obtain the slice data from an external apparatus (for example, a computer and the like) of the processing system SYSa in addition to or instead of the control apparatus 7 generating the slice data from the three-dimensional model data of the three-dimensional structural object ST. For example, when the external apparatus of the processing system SYSa generates the slice data from the three-dimensional model data of the three-dimensional structural object ST, the control apparatus 7 may obtain the slice data form the external apparatus of the processing system SYSa. For example, when the external apparatus of the processing system SYSa has (in other words, stores) the slice data, the control apparatus 7 may obtain the slice data form the external apparatus of the processing system SYSa.

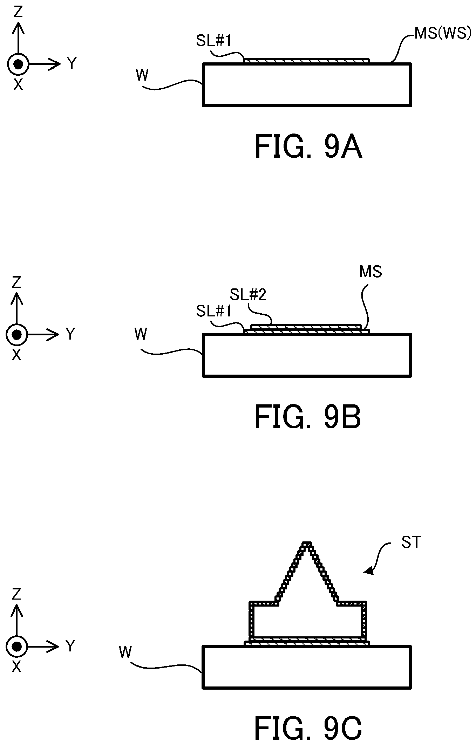

Then, the processing system SYSa starts the processing process for forming the plurality of structural layers SL. Specifically, the processing system SYSa performs a process for forming the first structural layer SL#1 on the build surface MS that corresponds to the surface of the workpiece W on the basis of the slice data corresponding to the structural layer SL#1. As a result, as illustrated in FIG. 9A, the structural layer SL#1 is formed on the build surface MS. Then, the processing system SYSa sets the surface (namely, an upper surface) of the structural layer SL#1 to a new build surface MS and forms a second structural layer SL#2 on the new build surface MS. In order to form the structural layer SL#2, firstly, the control apparatus 7 controls that at least one of the head driving system 22 and the stage driving system 32 on the basis of the slice data (especially, the processing path data) so that the processing head 21 moves relative to the build surface MS along the Z axis direction. Specifically, the control apparatus 7 control at least one of the head driving system 22 and the stage driving system 32 to move the processing head 21 relative to the build surface MS toward the +Z axis side so that the irradiation area EA and the supply area MA are set on the surface of the structural layer SL#1 (namely, the new build surface MS). By this, the light concentration position of the processing light EL is coincident with the new build surface MS. Then, the processing system SYSa performs a process for forming the structural layer SL#2 on the structural layer SL#1 on the basis of the slice data corresponding to the structural layer SL#2, as with the process for forming the structural layer SL#1 under the control of the control apparatus 7. As a result, as illustrated in FIG. 9B, the structural layer SL#2 is formed. Then, the same process is repeated until all structural layers SL constituting the three-dimensional structural object ST that should be formed on the workpiece W are formed. As a result, the three-dimensional structural object ST is formed by a layered structural object in which the plurality of structural layers SL are layered, as illustrated in FIG. 9C.

### (1-3-2) Second Processing Operation for forming Three-Dimensional Structural Object ST

The processing system SYSa performs the processing process for forming the plurality of structural layers SL, which constitutes the three-dimensional structural object ST, by using the build materials M that are stored in the hopper 11 of the material supply apparatus 1. When an amount of the build materials M that are stored in the hopper 11 (namely, a stored amount of the build materials M in the hopper 11) is larger than an amount of the build materials M that is necessary for forming the three-dimensional structural object ST, the build materials M do not become insufficient in the process of forming the three-dimensional structural object ST. Thus, the processing system SYSa is allowed to complete the processing process for forming the plurality of structural layers SL. On the other hand, when the stored amount of the build materials M in the hopper 11 is smaller than the amount of the build materials M that is necessary for forming the three-dimensional structural object ST, the build materials M becomes insufficient in the process of forming the three-dimensional structural object ST. Thus, the build materials M that are stored in the hopper 11 will be depleted before the processing system SYSa completes the processing process for forming the plurality of structural layers SL. Namely, the build materials M that are stored in the hopper 11 will be depleted before the processing system SYSa forms all of the plurality of structural layers SL. When the build materials M are depleted, there is a possibility that the irradiation optical system 211 irradiates the build surface MS with the processing light EL even though the material nozzle 212 does not supply the build materials M to the build surface MS. As a result, there is a possibility that the build surface MS is molten unnecessarily. Moreover, there is a possibility that the build object is not formed at a position at which the build material should be formed by the deposition of the molten and then solidified build materials M. Thus, there is a possibility that the processing system SYSa is not allowed to form the three-dimensional structural object ST that should be formed.

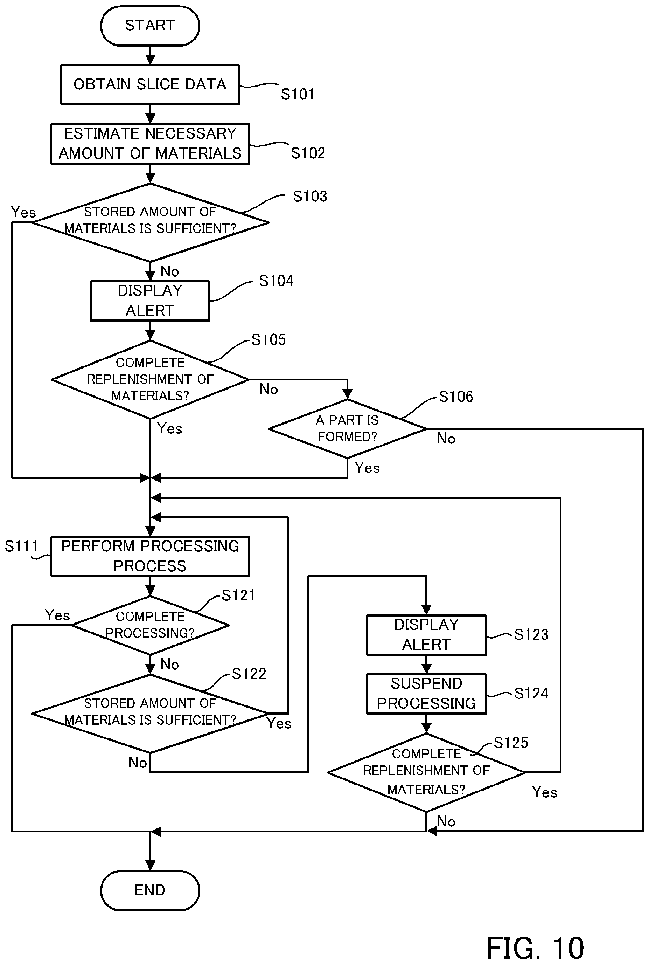

Thus, the processing system SYSa may perform a second processing operation that considers the stored amount to of the build materials M in the hopper 11 in forming the three-dimensional structural object ST, in order to solve the above described technical problem that is caused by a shortage of the build materials M. Namely, the processing system SYSa may perform the second processing operation for forming the three-dimensional structural object ST on the basis of the stored amount to of the build materials M in the hopper 11. In this case, the second processing operation may be different from the above described first processing operation in that a process based on the stored amount to of the build materials M in the hopper 11 is added. Next, with reference to FIG. 10, the second processing operation will be described. FIG. 10 is a flowchart that illustrates a flow of the second processing operation.

Note that the second processing operation is performed in a situation where the chamber space 63IN is purged by the purge gas. The second processing operation is started in the situation where the chamber space 63IN is purged by the purge gas. However, the second processing operation may be started in a situation where the chamber space 63IN is not purged by the purge gas. In this case, the chamber space 63IN is purged by the purge gas before the processing process is actually started.

As illustrated in FIG. 10, the control apparatus 7 obtains the slice data that defined the detail of the processing process (a step S101). For example, the control apparatus 7 may obtain the slice data from an external apparatus (for example, a computer and the like) of the processing system SYSa. In this case, the control apparatus 7 and the external apparatus may be connected through a wired or wireless network. For example, the control apparatus 7 may obtain the slice data from a recording medium that is attachable to the control apparatus 7. Alternatively, the control apparatus 7 may obtain the three-dimensional model data of the three-dimensional structural object ST instead of obtaining the slice data. In this case, the control apparatus 7 may generate the slice data from the obtained three-dimensional model data.

Then, the control apparatus 7 estimates (namely, estimates), on the basis of the slice data that is obtained at the step S101, an amount of the build materials M that is necessary for forming the three-dimensional structural object ST (a step S102). Specifically, the control apparatus 7 estimates, on the basis of the slice data, an amount of the build materials M that is necessary for completing the process for forming the three-dimensional structural object ST. Namely, the control apparatus 7 estimates, on the basis of the slice data, an amount of the build materials M that is necessary for forming whole of the three-dimensional structural object ST.

The slice data includes the command data as described above. thus, the control apparatus 7 is allowed to determine, on the basis of the command data, a detail of the operation of the processing system SYSa in the process of forming the three-dimensional structural object ST. Specifically, the control apparatus 7 is allowed to determine, on the basis of the command data (for example, the information relating to the movement of the processing head 21 and so on), a supply time at which the material nozzle 212 supplies the build materials M in the process of forming the three-dimensional structural object ST. Moreover, the amount of the build materials M that are suppled from the material nozzle 212 per unit time depends on the amount of the build materials M that are suppled from the material supply apparatus 1 to the processing apparatus 2 per unit time. Thus, the control apparatus 7 is allowed to estimate, on the basis of the supply time at which the material nozzle 212 supplies the build materials M and the amount of the build materials M that are suppled from the material supply apparatus 1 to the processing apparatus 2 per unit time in the process of forming the three-dimensional structural object ST, what amount of the build materials M, which are supplied from the material nozzle 212 in the process of forming the three-dimensional structural object ST, is. As a result, the control apparatus 7 is allowed to estimate the amount of the build materials M that is necessary for forming the three-dimensional structural object ST (in the below described description, it is referred to as a necessary amount of the build materials M). Namely, the control apparatus 7 is allowed to estimate the amount of the build materials M that is necessary for completing the processing process without causing a situation where there is the shortage of the build materials M (namely, the necessary amount of the build materials M). Note that the control apparatus 7 may estimate, as the necessary amount of the build materials M, a weight of the build materials M that is necessary for forming the three-dimensional structural object ST. The control apparatus 7 may estimate, as the necessary amount of the build materials M, a bulk (namely, a volume) of the build materials M that is necessary for forming the three-dimensional structural object ST.

As described above, the material nozzle 212 supplies the build materials M so that the build materials M forms a layer along the build surface MS when each structural layer SL is formed. Therefore, the material nozzle 212 substantially supplies the build materials M to form a plurality of layers of the build materials M forms a layer when the plurality of structural layers SL are formed. Therefore, the necessary amount of the build materials M depends on the number of the layers of the build materials M. Thus, the control apparatus 7 may estimate, as at least a part of information relating to the necessary amount of the build materials M, the number of the layers of the build materials M. In this case, a value that is obtained by multiplying an amount of the build materials M for one layer (namely, an amount of the build materials M that is necessary for forming one structural layer SL) by the number of the layers of the build materials M may be used as the necessary amount of the build materials M. Note that the information relating to the number of the layers of the build materials M may be usable as useful information when the additive processing based on a Powder Bed Fusion and the like is performed, in addition to or instead of the case where the additive processing based on the Laser Metal Deposition is performed. Note that the necessary amount of the build materials M is often determined on the basis of a size of a powder bed and a height of the build object. Therefore, the control apparatus 7 may estimate the necessary amount of the build materials M by using the size of the powder bed and the height of the build object.

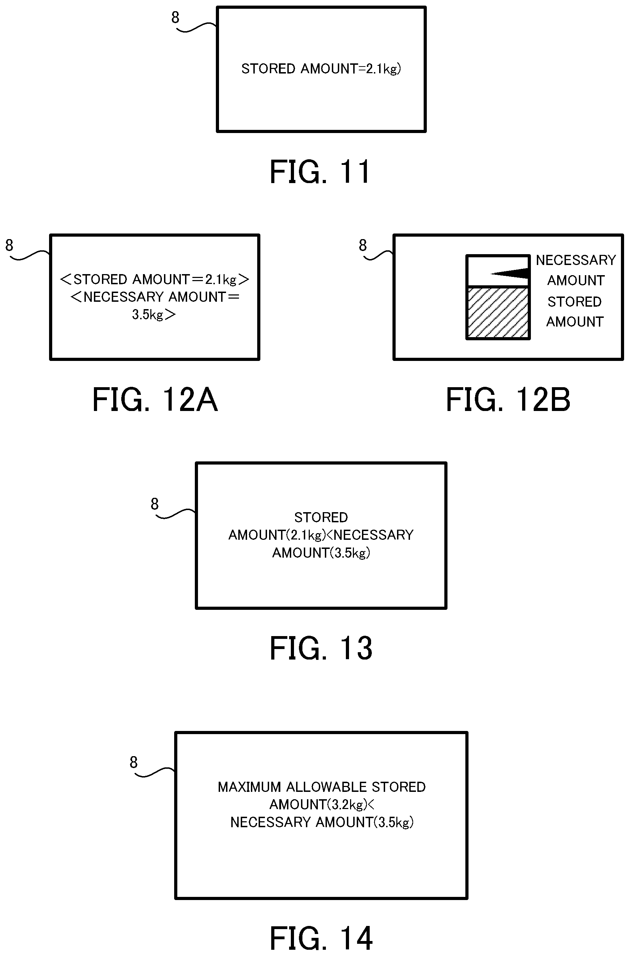

When the necessary amount of the build materials M is estimated, the control apparatus 7 may control the display 8 to display the necessary amount of the build materials M, as illustrated in FIG. 11 that is a planer view illustrating a display example on the display 8. In this case, a user of the processing system SYSa is allowed to recognize the necessary amount of the build materials M. Incidentally, in the first embodiment, information displayed by the display 8 may include a text, may include a diagram, may include an image, may include an icon and may include any display object that is visible by the user.

The control apparatus 7 may control the display 8 to display the stored amount of the build materials M in the hopper 11 (namely, a residual amount of the build materials M in the hopper 11 and information relating to a measured result by the weight measurement apparatus 19) in addition to or instead of the necessary amount of the build materials M, as illustrated in FIG. 12A and FIG. 12 each of which is a planer view illustrating a display example on the display 8. In this case, the user of the processing system SYSa is allowed to recognize the stored amount of the build materials M. Note that FIG. 12A illustrates an example in which the stored amount of the build materials M in the hopper 11 is displayed in addition to the necessary amount of the build materials M. Moreover, as illustrated in FIG. 12B, the necessary amount of the build materials M and the stored amount of the build materials M in the hopper 11 may be displayed as an image.

When the stored amount of the build materials M in the hopper 11 is displayed in addition to the necessary amount of the build materials M, the control apparatus 7 may control the display 8 to display a relationship between the necessary amount of the build materials M and the stored amount of the build materials M in the hopper 11. Namely, the control apparatus 7 may control the display 8 to display the necessary amount of the build materials M and the stored amount of the build materials M in the hopper 11 with them being associated. For example, as illustrated in FIG. 13 that is a planer view illustrating a display example on the display 8, the control apparatus 7 may control the display 8 to display a magnitude relationship between the necessary amount of the build materials M and the stored amount of the build materials M in the hopper 11. In this case, the user of the processing system SYSa is allowed to recognize whether the stored amount of the build materials M is sufficient. Note that the necessary amount of the build materials M is information that is obtained from the slice data. Thus, an operation of displaying the relationship between the necessary amount of the build materials M and the stored amount of the build materials M in the hopper 11 is one specific example of an operation of displaying information relating to an amount of the build materials M that is obtained on the basis of the slice data and the stored amount of the build materials M in the hopper 11. Thus, the control apparatus 7 may control the display 8 to display the information relating to the amount of the build materials M that is obtained on the basis of the slice data and the stored amount of the build materials M in the hopper 11. Note that it can be said that the display example illustrated in the above described FIG. 12B illustrates the relationship between the necessary amount of the build materials M and the stored amount of the build materials M in the hopper 11..

The control apparatus 7 may control the display 8 to display an allowable upper limit value of the stored amount of the build materials M in the hopper 11 in addition to or instead of at least one of the stored amount of the build materials M in the hopper 11 and the necessary amount of the build materials M. In this case, the control apparatus 7 may control the display 8 to display a relationship between the allowable upper limit value of the stored amount of the build materials M in the hopper 11 and at least one of the stored amount of the build materials M in the hopper 11 and the necessary amount of the build materials M. Namely, the control apparatus 7 may control the display 8 to display a relationship between the allowable upper limit value of the stored amount of the build materials M in the hopper 11 and at least one of the stored amount of the build materials M in the hopper 11 and the necessary amount of the build materials M with them being associated. For example, as illustrated in FIG. 14 that is a planer view illustrating a display example on the display 8, the control apparatus 7 may control the display 8 to display a magnitude relationship between the stored amount of the build materials M in the hopper 11 and at least one of the stored amount of the build materials M in the hopper 11 and the necessary amount of the build materials M. In this case, the user of the processing system SYSa is allowed to recognize whether three-dimensional structural object ST can be formed with the build materials M the amount of which is the allowable upper limit value.

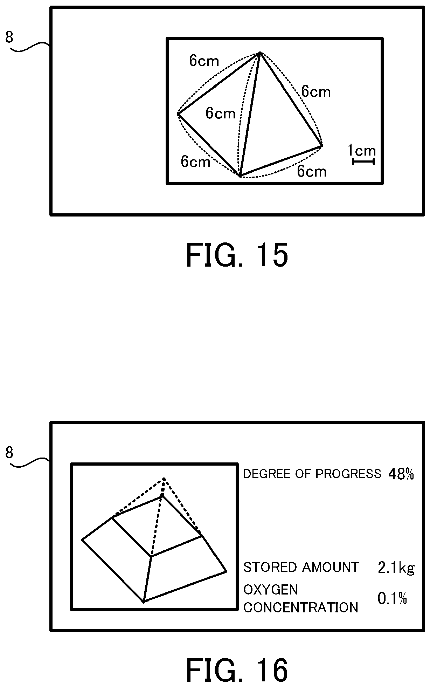

The control apparatus 7 may control the display 8 to display information relating to the three-dimensional structural object ST in addition to or instead of the information relating to the amount of the build materials M. For example, as illustrated in FIG. 15 that is a planer view illustrating a display example on the display 8, the control apparatus 7 may control the display 8 to display information relating to at least one of a shape and a size of the three-dimensional structural object ST. In this case, the user of the processing system SYSa is allowed to recognize what build object the three-dimensional structural object ST formed by the processing process is.

Then, the control apparatus 7 determines whether or not the hopper 11 stores the build materials M the amount of which is sufficient (a step S103). Namely, the control apparatus 7 determines before the processing system SYSa starts the processing process whether or not the hopper 11 stores the build materials M the amount of which is sufficient. Specifically, the control apparatus 7 determines the stored amount of the build materials M in the hopper 11 on the basis of the measured result by the weight measurement apparatus 19. Then, the control apparatus 7 determines whether or not the stored amount of the build materials M in the hopper 11 is larger than a first predetermined amount. The necessary amount of the build materials M that is estimated at the step S102 is used as the first predetermined amount. However, another value may be used as the first predetermined amount. When the stored amount of the build materials M in the hopper 11 is larger than the necessary amount of the build materials M, the control apparatus 7 determines that the hopper 11 stores the build materials M the amount of which is sufficient. When the stored amount of the build materials M in the hopper 11 is smaller than the necessary amount of the build materials M, the control apparatus 7 determines that the hopper 11 does not store the build materials M the amount of which is sufficient. Incidentally, when the stored amount of the build materials M in the hopper 11 is equal to the necessary amount of the build materials M, the control apparatus 7 may determine that the hopper 11 stores the build materials M the amount of which is sufficient or may determine that the hopper 11 does not store the build materials M the amount of which is sufficient. Note that the step S103 may be performed before the information relating to the amount of the build materials M and / or the information relating to the three-dimensional structural object ST is displayed on the display 8.

As a result of the determination at the step S103, when it is determined that the hopper 11 stores the build materials M the amount of which is sufficient (the step S103: Yes), the processing system SYSa is allowed to complete the processing process without causing the situation where there is the shortage of the build materials M. Thus, in this case, the processing system SYSa starts the processing process (a step S111). Namely, the processing system SYSa form the plurality of structural layers SL in sequence as illustrated in FIG. 8A to FIG. 8E and FIG. 9A to FIG. 9C.

During a period when the processing process is performed, the control apparatus 7 may control the display 8 to display information indicating a situation of the processing process. A display example of the information indicating a situation of the processing process is illustrated in FIG. 16. As illustrated in FIG. 16, the control apparatus 7 may control the display 8 to display an image that indicates an already formed part of the three-dimensional structural object ST. As illustrated in FIG. 16, the control apparatus 7 may control the display 8 to display an image that indicates a not-yet-formed part (namely, a part that will be formed from now) of the three-dimensional structural object ST. Note that FIG. 16 illustrates an example of displaying the image in which the already formed part of the three-dimensional structural object ST is illustrated by a solid line and the not-yet-formed part of the three-dimensional structural object ST is illustrated by a dashed line in a situation whether the processing process for forming the quadrangular pyramid three-dimensional structural object ST is performed. In this case, the control apparatus 7 may control the display 8 to display information relating to a size of at least one of the already formed part of the three-dimensional structural object ST and the not-yet-formed part of the three-dimensional structural object ST. As illustrated in FIG. 16, the control apparatus 7 may control the display 8 to display a degree of progress of the processing process. The degree of progress may indicate a ratio of the already formed part of the three-dimensional structural object ST relative to the three-dimensional structural object ST. As illustrated in FIG. 16, the control apparatus 7 may control the display 8 to display a concentration of an oxygen in the chamber space 63IN. The control apparatus 7 may control the display 8 to display the stored amount of the build materials M in the hopper 11 (namely, the residual amount of the build materials M in the hopper 11).

On the other hand, as a result of the determination at the step S103, when it is determined that the hopper 11 does not store the build materials M the amount of which is sufficient (the step S103: No), there is a possibility that there is the shortage of the build materials M in the process of forming the three-dimensional structural object ST. Namely, there is a possibility that the build materials M are depleted before the processing system SYSa completes the processing process. In this case, the processing system SYSa does not start the processing process. Namely, the control apparatus 7 controls the processing apparatus 2 and so on not to start the processing process. Furthermore, the control apparatus 7 controls the display 8 to display alert information for alerting the user of the processing system SYSa that the hopper 11 does not store the build materials M the amount of which is sufficient (a step S104). Namely, the control apparatus 7 controls the display 8 to display the alert information before the processing system SYSa starts the processing process.

The alert information may include a text message. The alert information may include a diagram. The alert information may include an image. The alert information may include an icon. The alert information may include any display object that is visible by the user.

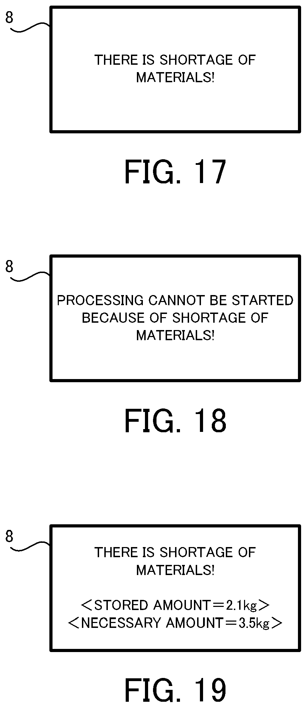

The alert information relating to the shortage of the build materials M stored in the hopper 11 may be displayed. Specifically, as illustrated in FIG. 17 that is a planer view illustrating a display example of the alert information, the alert information for alerting the user that the hopper 11 does not store the build materials M the amount of which is sufficient may be displayed, for example. For example, the alert information for alerting the user that there is the shortage of the build materials M may be displayed. FIG. 17 illustrates an example of displaying an alert display including the text message "THERE IS SHORTAGE OF MATERIALS!".

The alert information relating to the situation of the processing process may be displayed in addition to or instead of the alert information illustrated in FIG. 17. Specifically, as illustrated in FIG. 18 that is a planer view illustrating a display example of the alert information, the alert information for alerting the user that the processing process is not allowed to be started because the hopper 11 does not store the build materials M the amount of which is sufficient may be displayed, for example. The alert information for alerting the user that a reason why the processing process is not allowed to be started is that the hopper 11 does not store the build materials M the amount of which is sufficient may be displayed. FIG. 18 illustrates an example of displaying an alert display including the text message "PROCESSING CANNOT BE STARTED BECAUSE OF SHORTAGE OF MATERIALS!".

The alert information relating to at least one of the stored amount of the build materials M in the hopper 11 and the necessary amount of the build materials M may be displayed in addition to or instead of the alert information illustrated in at least one of FIG. 17 and FIG. 18. Specifically, as illustrated in FIG. 19 that is a planer view illustrating a display example of the alert information, the alert information that indicates the stored amount of the build materials M in the hopper 11 may be displayed, for example. The alert information that indicates the necessary amount of the build materials M may be displayed, for example. FIG. 19 illustrates an example in which both of the alert information for indicating that the stored amount of the build materials M in the hopper 11 is 2.1kg and the alert information for indicating that the necessary amount of the build materials M is 3.5kg. For example, the alert information that indicates a difference between the stored amount of the build materials M in the hopper 11 and the necessary amount of the build materials M (namely, a shortage amount of the build materials M) may be displayed. Incidentally, when the alert information relating to at least one of the stored amount of the build materials M and the necessary amount of the build materials M is displayed, the control apparatus 7 may control the display 8 to display information relating to the allowable upper limit value of the stored amount of the build materials M in the hopper 11 together.

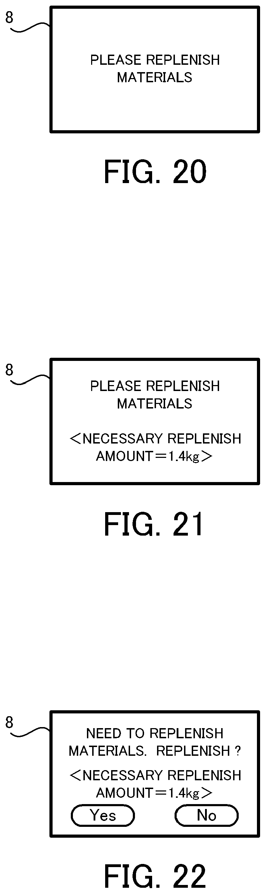

The alert information relating to a necessity of the replenishment of the hopper 11 with the build materials M may be displayed in addition to or instead of the alert information illustrated in at least one of FIG. 17 to FIG. 19. Specifically, as illustrated in FIG. 20 that is a planer view illustrating a display example of the alert information, the alert information for alerting the user that it is necessary to replenish the hopper 11 with the build materials M may be displayed, for example. FIG. 20 illustrates an example of displaying an alert display including the text message "PLEASE REPLENISH MATERIALS".

The alert information relating to an amount of the build materials M with which the hopper 11 should be replenished (in the below described description, it is referred to as a "necessary replenishment amount") may be displayed in addition to or instead of the alert information illustrated in at least one of FIG. 17 to FIG. 20. Specifically, as illustrated in FIG. 21 that is a planer view illustrating a display example of the alert information, the alert information that indicates the necessary replenishment amount may be displayed, for example. FIG. 21 illustrates an example of displaying an alert display including the text message that indicates that the necessary replenishment amount is 1.4kg. Note that the control apparatus 7 may set the necessary replenishment amount on the basis of the difference between the stored amount of the build materials M in the hopper 11 and the necessary amount of the build materials M (namely, the shortage amount of the build materials M). For example, the control apparatus 7 may set the difference between the stored amount of the build materials M in the hopper 11 and the necessary amount of the build materials M to the necessary replenishment amount. For example, the control apparatus 7 may set a value that is obtained by adding a predetermined margin to the difference between the stored amount of the build materials M in the hopper 11 and the necessary amount of the build materials M to the necessary replenishment amount.

A display object that is selected when the user takes an action for replenish the hopper 11 with the build materials M may be displayed as the alert information in addition to or instead of the alert information illustrated in at least one of FIG. 17 to FIG. 21. A display object that is selected when the user does not take the action for replenish the hopper 11 with the build materials M may be displayed as the alert information in addition to or instead of the alert information illustrated in at least one of FIG. 17 to FIG. 21. Specifically, as illustrated in FIG. 22 that is a planer view illustrating a display example of the alert information, a button (specifically, a button to which a label "YES" is assigned) that is selected when the user takes the action for replenish the hopper 11 with the build materials M and a button (specifically, a button to which a label "NO" is assigned) that is selected when the user takes the action for replenish the hopper 11 with the build materials M may be displayed as the alert information. In this case, the control apparatus 7 is allowed to determine on the basis of a selected result of the buttons whether or not the hopper 11 is replenished with the build materials M.

When the display object that is selectable by the user is displayed on the display 8, the display 8 may be a touch panel. In this case, the user may select a desired display object by operating the touch panel. In this case, the display 8 serve as an input apparatus that receives an input of the user that require a selection of the desired display object. Alternatively, the user may select the desired display object by using any other input apparatus (for example, at least one of a keyboard, a touch pad, a mouse and a pointing device).

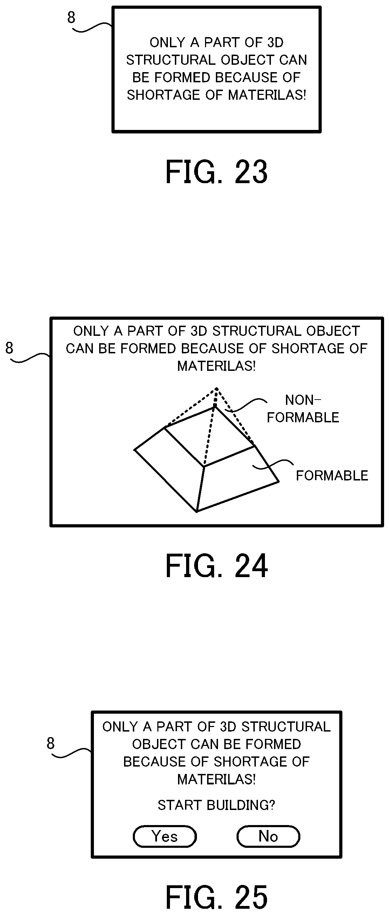

The alert information relating to the three-dimensional structural object ST that is formable may be displayed in addition to or instead of the alert information illustrated in at least one of FIG. 17 to FIG. 22. Specifically, as illustrated in FIG. 23 that is a planer view illustrating a display example of the alert information, the alert information for alerting the user that only a part of the three-dimensional structural object ST is formable with the build materials M stored in the material supply apparatus 1 may be displayed, for example. The alert information for alerting the user that whole of the three-dimensional structural object ST is not formable with the build materials M stored in the material supply apparatus 1 may be displayed. The alert information for alerting the user that the processing process for forming the three-dimensional structural object ST is not completed with the build materials M stored in the material supply apparatus 1 may be displayed. FIG. 23 illustrates an example of displaying an alert display including the text message "ONLY A PART OF THREE-DIMENSIONAL STRUCTURAL OBJECT ST CAN BE FORMED BECAUSE OF SHORTAGE OF MATERIALS!".

The alert information relating to a part of the three-dimensional structural object ST that is formable with the build materials M stored in the hopper 11 may be displayed in addition to or instead of the alert information illustrated in at least one of FIG. 17 to FIG. 23. The alert information relating to a part of the three-dimensional structural object ST that is not formable with the build materials M stored in the hopper 11 may be displayed in addition to or instead of the alert information illustrated in at least one of FIG. 17 to FIG. 23. Specifically, as illustrated in FIG. 24 that is a planer view illustrating a display example of the alert information, the alert information that indicates the part of the three-dimensional structural object ST that is formable with the build materials M stored in the hopper 11 may be displayed. The alert information that indicates the part of the three-dimensional structural object ST that is not formable with the build materials M stored in the hopper 11 may be displayed. FIG. 24 illustrates an example of displaying the image in which the part of the three-dimensional structural object ST that is formable with the build materials M stored in the hopper 11 is illustrated by a solid line and the part of the three-dimensional structural object ST that is not formable with the build materials M stored in the hopper 11 is illustrated by a dashed line in a situation whether the processing process for forming the quadrangular pyramid three-dimensional structural object ST is performed.

A display object that allows the user to select whether or not to start the processing process even in the situation where the hopper 11 does not store the build materials M the amount of which is sufficient may be displayed as the alert information in addition to or instead of the alert information illustrated in at least one of FIG. 17 to FIG. 24. Specifically, as illustrated in FIG. 25 that is a planer view illustrating a display example of the alert information, a button (specifically, a button to which a label "YES" is assigned) that is selected when the user wishes to start the processing process and a button (specifically, a button to which a label "NO" is assigned) that is selected when the user does not wish to start the processing process may be displayed as the alert information. In this case, the control apparatus 7 is allowed to determine on the basis of a selected result of the buttons whether or not the user wishes to star the processing process even in the situation where the hopper 11 does not store the build materials M the amount of which is sufficient.

Again in FIG. 10, after the alert information is displayed, the control apparatus 7 determines whether or not the hopper 11 is replenished with the build materials M (a step S105). More specifically, the control apparatus 7 determines whether or not the hopper 11 is replenished with the build materials M until the hopper 11 stores the build materials M the amount of which is sufficient. The control apparatus 7 determines whether or not the hopper 11 stores the build materials M the amount of which is sufficient by replenishing the hopper 11 with the build materials M. Note that the process at the step S105 may be same as the process at the above described step S103, and thus, its detailed description is omitted.

The replenishment of the build materials M may be performed in the situation where the chamber space 63IN is purged by the purge gas. The replenishment of the build materials M may be performed while the chamber space 63IN is purged by the purge gas. Specifically, when the replenishment of the build materials M is performed while the chamber space 63IN is purged by the purge gas, a state of the valve 53 that is disposed in the gas supply pipe 52 connecting the gas supply apparatus 5 and the material supply apparatus 1 is set to the state by which the gas supply pipe 52 is closed. Moreover, a state of the valve 192 that is disposed in the material supply pipe 191 connecting the material supply apparatus 1 and the processing apparatus 2 is set to the state by which the material supply pipe 191 is closed. As a result, the internal space 16IN and the storage space 112 of the material supply apparatus 1 is spatially separated from the processing apparatus 2 and the gas supply apparatus 5. In this situation, the lid 115, which closes the material replenishment port 114 of the hopper 114, is opened and the storage space 112 is replenished with the build materials M from the material replenishment port 114. However, the replenishment of the build materials M may be performed in the situation where the chamber space 63IN is not purged by the purge gas. The replenishment of the build materials M may be performed in the situation where the purge gas is discharged from the chamber space 63IN that is purged by the purge gas.

As a result of the determination at the step S105, when it is determined that the hopper 11 is replenished with the build materials M (the hopper 11 stores the build materials M the amount of which is sufficient by replenishing the hopper 11 with the build materials M) (the step S105: Yes), the processing system SYSa is allowed to complete the processing process without causing the situation where there is the shortage of the build materials M. Thus, in this case, the processing system SYSa starts the processing process (the step S111).

On the other hand, as a result of the determination at the step S105, when it is determined that the hopper 11 is not replenished with the build materials M or the hopper 11 does not yet store the build materials M the amount of which is sufficient even though the hopper 11 is replenished with the build materials M (the step S105: No), there is still a possibility that there is the shortage of the build materials M in the process of forming the three-dimensional structural object ST. Namely, there is still a possibility that the build materials M are depleted before the processing system SYSa completes the processing process. In this case, the control apparatus 7 determines whether or not to perform the processing process for forming only a part of the three-dimensional structural object ST (a step S106). For example, the control apparatus 7 determines on the basis of a relation of the user (for example, a selected state of the button) relative to the alert information illustrated in FIG. 25 whether or not to perform the processing process for forming only a part of the three-dimensional structural object ST. In this case, when the user wishes to star the processing process even in the situation where the hopper 11 does not store the build materials M the amount of which is sufficient, the control apparatus 7 may determine that the processing process for forming only a part of the three-dimensional structural object ST is performed. On the other hand, when the user does not wish to star the processing process in the situation where the hopper 11 does not store the build materials M the amount of which is sufficient, the control apparatus 7 may determine that the processing process for forming only a part of the three-dimensional structural object ST is not performed.

As a result of the determination at the step S106, when it is determined that the processing process for forming only a part of the three-dimensional structural object ST is not performed (the step S106: No), the processing system SYSa ends the second processing operation. Namely, the processing system SYSa does not form the three-dimensional structural object ST.

On the other hand, as a result of the determination at the step S106, when it is determined that the processing process for forming only a part of the three-dimensional structural object ST is performed (the step S106: Yes), the processing system SYSa starts the processing process (the step S111). However, in this case, the processing system SYSa performs the processing process so that the processing process is suspended once a part of the three-dimensional structural object ST is formed. Note that an operation of suspending the processing process includes an operation of stopping the irradiation of the processing light EL from the irradiation optical system 211. The operation of suspending the processing process may include an operation of stopping the supply of the build materials M from the material nozzle 212. The operation of suspending the processing process may include an operation of stopping the processing head 21 and / or the stage 31.

For example, the processing system SYSa may perform the processing process so that the processing process is suspended once the part of the three-dimensional structural object ST that is formable with the build materials M stored in the hopper 11 is formed. Namely, the processing system SYSa may perform the processing process so that the processing process is suspended before the build materials M stored in the hopper 11 are depleted.

For example, the processing system SYSa may perform the processing process so that the processing process is suspended once a part of the three-dimensional structural object ST is formed, wherein the processing process is allowed to be restarted more easily when the processing process is suspended once that part is formed, compared to the case where the processing process is suspended once another part is formed. Specifically, the processing system SYSa may perform the processing process so that the processing process is suspended once the formation of one structural layer SL is completed. Namely, the processing system SYSa may perform the processing process so that the processing process is not suspended in the middle of forming one structural layer SL. This is because the build surface MS is likely a planar surface more in the case where the processing process is suspended once the formation of one structural layer SL is completed, compared to the case where the processing process is suspended in the middle of forming one structural layer SL, and thus, the processing process is allowed to be restarted more easily. Namely, this is because a concavity and convexity, which is caused by a uneven surface generated between a part at which the structural layer SL is already formed and a part at which the structural layer SL is not yet formed, is not likely generated on the build surface MS in the case where the processing process is suspended once the formation of one structural layer SL is completed, compared to the case where the processing process is suspended in the middle of forming one structural layer SL, and thus, the processing process is allowed to be restarted more easily.

] For example, the processing system SYSa may perform the processing process so that the processing process is suspended once the build object is formed at a part of the build surface MS at which a characteristic relative to a heat transmitted from the processing light EL satisfies a desired condition. Specifically, the processing system SYSa may perform the processing process so that the processing process is suspended once the build object is formed at a part of the build surface MS at which the heat transmitted from the processing light EL is diffused more easily compared to another part of the build surface MS. This is because an effect of the heat transmitted from the processing light EL with which the build surface MS is irradiated by the suspended processing process is relatively less likely to remain at a timing when the processing process is restarted in the case where the processing process is suspended once the formation of the build object at the part at which the heat is diffused relatively easily is completed, compared to the case where the processing process is suspended once the formation of the build object at the part at which the heat is not diffused relatively easily, and thus, the processing process is allowed to be restarted more easily.

After the processing process is started, the control apparatus 7 determines whether or not the processing process is completed (a step S121). Namely, the control apparatus 7 determines whether or not the formation of whole of the three-dimensional structural object ST is completed. When it is determined that the formation of whole of the three-dimensional structural object ST is completed, the control apparatus 7 determines that the processing process is completed. However, when it is determined that the processing process for forming only a part of the three-dimensional structural object ST is performed at the step S106, the control apparatus 7 determines whether or not the formation of a part of the three-dimensional structural object ST (namely, a part of the three-dimensional structural object ST that is expected to be formed by the processing process) is completed. When it is determined that the formation of a part of the three-dimensional structural object ST is completed, the control apparatus 7 determines that the processing process is completed.

As a result of the determination at the step S121, when it is determined that the processing process is completed (the step S121: Yes), the processing system SYSa ends the second processing operation. Incidentally, when the formation of a part of the three-dimensional structural object ST is completed and thus it is determined that the processing process is completed, the three-dimensional structural object ST is incomplete. When the three-dimensional structural object ST is incomplete, the processing system SYSa may regard, as new workpiece W, the workpiece W including the already formed part of the three-dimensional structural object ST and perform the second processing operation for forming a residual part of the three-dimensional structural object ST that is not yet formed on the new workpiece W on the condition that the hopper 11 is replenished with the build materials M. More specifically, the processing system SYSa may suspend the second processing operation after forming a part of the three-dimensional structural object ST by performing the processing process on the basis of a first data part that is a part of the slice data obtained at the step S101. Then, the processing system SYSa may restart the processing process to perform the processing process on the basis of a second data part of the obtained slice data that is different from the first data part on the condition that the hopper 11 is replenished with the build materials M. Namely, the processing system SYSa may suspend the second processing operation once the processing process based on the first data part of the slice data obtained at the step S101 is completed, then, restart the processing process on the basis of the second data part of the obtained slice data on the condition that the hopper 11 is replenished with the build materials M. Incidentally, the three-dimensional structural object ST is formed by two (alternatively, a plurality of) processing processes, there is a possibility that a temperature of the build surface MS at a timing when the second processing process is restarted is different, compared to the case where the three-dimensional structural object ST is formed by one processing process. This is because there is a possibility that the build surface MS is cooled due to the suspension of the processing process. Thus, when the processing process is restarted on the basis of the second data part of the obtained slice data, the control apparatus 7 may perform an update process, on the second data part, for reflecting an effect of the temperature of the build surface MS. In this case, the control apparatus 7 may restart the processing process on the basis of the updated second data part.

On the other hand, as a result of the determination at the step S121, when it is determined that the processing process is not yet completed (the step S121: No), the processing process is continued. Moreover, in the situation where the processing process is continued, the control apparatus 7 determines whether or not the hopper 11 stores the build materials M the amount of which is sufficient (a step S122). Namely, the control apparatus 7 determines whether or not the hopper 11 stores the build materials M the amount of which is sufficient in at least a part of a period when the processing system SYSa performs the processing process.

Specifically, the control apparatus 7 determines the stored amount of the build materials M in the hopper 11 on the basis of the measured result by the weight measurement apparatus 19. Then, the control apparatus 7 determines whether or not the stored amount of the build materials M in the hopper 11 is larger than a second predetermined amount. An amount of the build materials M that is necessary for forming the not-yet-formed part of the three-dimensional structural object ST (namely, the necessary amount of the build materials M) may be used as the second predetermined amount. Alternatively, a necessary stored amount that is an amount of the build materials M that is at least necessary for maintaining the state where the material supply apparatus 1 supplies the build materials M to the processing apparatus 2 may be used as the second predetermined amount. The necessary stored amount may mean an allowable lower limit value of the stored amount of the build materials M. Alternatively, the necessary stored amount may mean a value that is obtained by adding a predetermined margin to the allowable lower limit value of the stored amount of the build materials M. The allowable lower limit value of the stored amount of the build materials M may mean the stored amount of the build materials M that is at least necessary for maintaining the state where the material supply apparatus 1 supplies the build materials M to the processing apparatus 2. When the stored amount of the build materials M in the hopper 11 is smaller than the necessary stored amount (alternatively, the allowable lower limit value), there is a possibility that the material supply apparatus 1 is not allowed to supply the build materials M to the processing apparatus 2 properly (for example, at a constant supply rate) even though the build materials M are stored in the hopper 11. Note that the allowable lower limit value of the stored amount of the build materials M is normally smaller than the necessary amount of the build materials M. However, another value may be used as the second predetermined amount. When the stored amount of the build materials M in the hopper 11 is larger than the second predetermined amount, the control apparatus 7 determines that the hopper 11 stores the build materials M the amount of which is sufficient. When the stored amount of the build materials M in the hopper 11 is smaller than the second predetermined amount, the control apparatus 7 determines that the hopper 11 does not store the build materials M the amount of which is sufficient. Incidentally, when the stored amount of the build materials M in the hopper 11 is equal to the second predetermined amount, the control apparatus 7 may determine that the hopper 11 stores the build materials M the amount of which is sufficient or may determine that the hopper 11 does not store the build materials M the amount of which is sufficient.

Incidentally, the case where the processing process is performed is limited to a case where it is determined before the processing process is started that the hopper 11 does not store the build materials M the amount of which is sufficient, a case where the hopper 11 is replenished with the build materials M even though it is determined before the processing process is started that the hopper 11 does not store the build materials M the amount of which is sufficient or a case where it is determined that a part of the three-dimensional structural object ST is formed even though it is determined before the processing process is started that the hopper 11 does not store the build materials M the amount of which is sufficient. Thus, there is actually a low possibility that it is determined after the processing process is started that the hopper 11 does not store the build materials M the amount of which is sufficient. However, the determination whether or not the hopper 11 stores the build materials M the amount of which is sufficient before the processing process is started is performed on the basis of the necessary amount of the build materials M that is estimated on the basis of the slice data, and thus, there is a possibility that it is determined after the processing process is started that the hopper 11 does not store the build materials M the amount of which is sufficient, depending on an estimation accuracy of the necessary amount of the build materials M. Moreover, the material nozzle 212 does not always supply the expected amount of the build materials M (for example, there is a possibility that the material nozzle 212 supplies the build materials M the amount of which is larger than expected), and thus, there is a possibility that it is determined after the processing process is started that the hopper 11 does not store the build materials M the amount of which is sufficient.

As a result of the determination at the step S122, when it is determined that the hopper 11 stores the build materials M the amount of which is sufficient (the step S122: Yes), the processing process is continued. Moreover, in the situation where the processing process is continued, the control apparatus 7 determines whether or not the processing process is completed and / whether or not the hopper 11 stores the build materials M the amount of which is sufficient (the step S121 and / or the step S122).

On the other hand, as a result of the determination at the step S122, when it is determined that the hopper 11 does not store the build materials M the amount of which is sufficient (the step S122: No), there is a possibility that there is the shortage of the build materials M in the process of forming the three-dimensional structural object ST. In this case, the processing system SYSa controls the display 8 to display the alert information for alerting the user of the processing system SYSa that the hopper 11 does not store the build materials M the amount of which is sufficient (a step S123). Note that the display of the alert information at the step S123 may be same as the display of the alert information at the above described step S104, and thus, its detailed description is omitted.

In parallel with, after or before the display of the alert information, the processing system SYSa suspends the processing process (a stepS 1234). Note that the processing system SYSa suspends the processing process immediately after it is determined that the hopper 11 does not store the build materials M the amount of which is sufficient. Alternatively, the processing system SYSa suspends the processing process after a certain time elapses since it is determined that the hopper 11 does not store the build materials M the amount of which is sufficient.

Then, the control apparatus 7 determines whether or not the hopper 11 is replenished with the build materials M (a step S125). More specifically, the control apparatus 7 determines whether or not the hopper 11 is replenished with the build materials M until the hopper 11 stores the build materials M the amount of which is sufficient. The control apparatus 7 determines whether or not the hopper 11 stores the build materials M the amount of which is sufficient by replenishing the hopper 11 with the build materials M. Note that a state where the hopper 11 stores the build materials M the amount of which is sufficient at the step S125 means a state where the stored amount of the build materials M in the hopper 11 is larger than the second predetermined amount. The process at the step S125 other than this state may be same as the process at the above described step S105, and thus, its detailed description is omitted.

Note that the control apparatus 7 may determine whether or not the hopper 11 is replenished with the build materials M at the step S125 after a certain time elapses since it is determined that the hopper 11 does not store the build materials M the amount of which is sufficient. In this case, a time for replenishing the hopper 11 with the build materials M is secured. In other word, the control apparatus 7 may determine whether or not the hopper 11 is replenished with the build materials M after a time that is necessary for replenishing the hopper 11 with the build materials M after the alert information is displayed elapses since it is determined that the hopper 11 does not store the build materials M the amount of which is sufficient.

As a result of the determination as the step S125, when it is determined that the hopper 11 stores the build materials M the amount of which is sufficient by replenishing the hopper 11 with the build materials M) (the step S125: Yes), the processing system SYSa is allowed to complete the processing process without causing the situation where there is the shortage of the build materials M. Thus, in this case, the processing system SYSa restarts the suspended processing process (the step S111).

On the other hand, as a result of the determination as the step S125, when it is determined that the hopper 11 is not replenished with the build materials M or the hopper 11 does not yet store the build materials M the amount of which is sufficient even though the hopper 11 is replenished with the build materials M (the step S125: Yes), there is still a possibility that there is the shortage of the build materials M in the process of forming the three-dimensional structural object ST. In this case, the processing system SYSa ends the second processing operation without restarting the suspended processing process. Namely, the processing system SYSa ends the second processing operation without completing the three-dimensional structural object ST. Even in this case, since the three-dimensional structural object ST is incomplete, the processing system SYSa may regard, as new workpiece W, the workpiece W including the already formed part of the three-dimensional structural object ST and perform the second processing operation for forming a residual part of the three-dimensional structural object ST that is not yet formed on the new workpiece W on the condition that the hopper 11 is replenished with the build materials M.

### (1-4) Technical Effect of Processing System SYSa

As described above, the processing system SYSa in the first embodiment can properly performs the additive processing on the workpiece W.

The processing system SYSa is allowed to perform the second processing operation that considers the stored amount of the build materials M in the hopper 11. Thus, it is possible to reduce an occurrence of an abnormality caused by the shortage (especially, a depletion) of the build materials M, compared to the case where the processing operation that does not consider the stored amount of the build materials M in the hopper 11 is performed.

Specifically, the processing system SYSa is allowed to display the information relating to the amount of the build materials M (for example, the information relating to at least one of the necessary amount of the build materials M, the stored amount of the build materials M in the hopper 11 and the allowable upper limit value of the stored amount of the build materials M in the hopper 11 described above). As a result, the processing system SYSa is allowed to prompt the user who checks the displayed information to take a proper action. Namely, the user can take the proper action on the basis of the displayed information.

Specifically, the processing system SYSa is allowed to display the alert information when the hopper 11 does not store the build materials M the amount of which is sufficient. As a result, the processing system SYSa is allowed to prompt the user who checks the alert information to take a proper action. Namely, the user can take the proper action on the basis of the alert information.

Moreover, the processing system SYSa determines before the processing process is started whether or not the hopper 11 stores the build materials M the amount of which is sufficient and does not start the processing process when the hopper 11 does not store the build materials M the amount of which is sufficient. Thus, there is a lower possibility that there is the shortage of the build materials M in the process of forming the three-dimensional structural object ST, compared to the case where the processing process is started even when the hopper 11 does not store the build materials M the amount of which is sufficient. Namely, there is a lower possibility that the build materials M stored in the hopper 11 are depleted during a period when the processing process is performed.

Moreover, the processing system SYSa determines after the processing process is started (namely, during the period when the processing process is performed) whether or not the hopper 11 stores the build materials M the amount of which is sufficient and suspends the processing process when the hopper 11 does not store the build materials M the amount of which is sufficient. Thus, it is possible to reduce an occurrence of the above described technical problem that is caused by the processing process being continued (for example, the irradiation of the processing light EL is continued) in the situation where the build materials M are about to be the shortage (alternatively, the build materials M are depleted).

Moreover, the processing system SYSa is allowed to perform the processing process on the condition that the build materials M are replenished even when the hopper 11 does not store the build materials M the amount of which is sufficient. Thus, an opportunity for performing the processing process is secured more, compared to the case where the processing process is not performed unconditionally when the hopper 11 does not store the build materials M the amount of which is sufficient. M are depleted).

Moreover, the processing system SYSa is allowed to perform the processing process for forming the part of the three-dimensional structural object ST that is formable with the build materials M stored in the hopper 11 even when the hopper 11 does not store the build materials M the amount of which is sufficient. Thus, an opportunity for performing the processing process is secured more, compared to the case where the processing process is not performed unconditionally when the hopper 11 does not store the build materials M the amount of which is sufficient.
M are depleted).

### (1-5) Modified Example of Processing System SYSa in First Embodiment

The control apparatus 7 may not determine at the step S105 in FIG. 10 whether or not the hopper 11 is replenished with the build materials M. In this case, when it is determined at the step S103 in FIG. 10 that the hopper 11 does not store the build materials M the amount of which is sufficient, the control apparatus 7 may determine whether or not to perform the processing process for forming only a part of the three-dimensional structural object ST (the step S106 in FIG. 10).

Similarly, the control apparatus 7 may not determine at the step S125 in FIG. 10 whether or not the hopper 11 is replenished with the build materials M. In this case, when it is determined at the step S122 in FIG. 10 that the hopper 11 does not store the build materials M the amount of which is sufficient, the processing system SYSa may end the second processing operation. In this case, the processing system SYSa may regard, as new workpiece W, the workpiece W including the already formed part of the three-dimensional structural object ST and perform the second processing operation for forming a residual part of the three-dimensional structural object ST that is not yet formed on the new workpiece W on the condition that the hopper 11 is replenished with the build materials M.

The control apparatus 7 may not determine at the step S106 in FIG. 10 whether or not to perform the processing process for forming only a part of the three-dimensional structural object ST. In this case, when it is determined at the step S103 in FIG. 10 that the hopper 11 does not store the build materials M the amount of which is sufficient or it is determined at the step S105 in FIG. 10 that the hopper 11 is not replenished with the build materials M, the processing system SYSa may end the second processing operation.

The control apparatus 7 may not display the alert information at the step S104 in FIG. 10. In this case, when it is determined at the step S103 in FIG. 10 that the hopper 11 does not store the build materials M the amount of which is sufficient, the control apparatus 7 may determine whether or not the hopper 11 is replenished with the build materials M (the step S105 in FIG. 10). Alternatively, when it is determined at the step S103 in FIG. 10 that the hopper 11 does not store the build materials M the amount of which is sufficient, the control apparatus 7 may determine whether or not to perform the processing process for forming only a part of the three-dimensional structural object ST (the step S106 in FIG. 10). Alternatively, when it is determined at the step S103 in FIG. 10 that the hopper 11 does not store the build materials M the amount of which is sufficient, the processing system SYSa may end the second processing operation.

Similarly, the control apparatus 7 may not display the alert information at the step S123 in FIG. 10. In this case, when it is determined at the step S122 in FIG. 10 that the hopper 11 does not store the build materials M the amount of which is sufficient, the processing system SYSa may suspend the second processing operation.

In the above described description, the alert information is displayed on the display 8. Namely, the alert information is outputted in a form that is visible by the user. However, the alert information may be outputted in another form. For example, the alert information may be outputted as a sound. In this case, the processing system SYSa may be provided with a speaker that is configured to output the alert information as the sound, in addition to or instead of the display 8.

### (2) Processing System SYSb in Second Embodiment

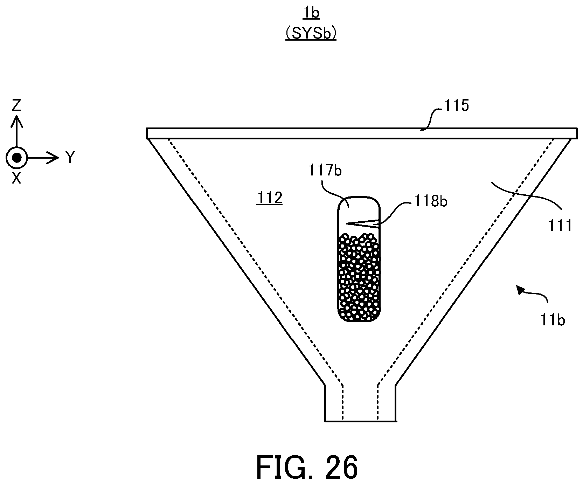

Next, the processing system SYS in a second embodiment (in the below description, the processing system SYS in the second embodiment is referred to as a "processing system SYSb") will be described. The processing system SYSb in the second embodiment is different from the above described processing system SYSa in the first embodiment in that it is provided with a material supply apparatus 1b instead of the material supply apparatus 1. Another feature of the processing system SYSb may be same as another feature of the processing system SYSa. The material supply apparatus 1b is different from the material supply apparatus 1 in that it is provided with a hopper 11b instead of the hopper 11. Another feature of the material supply apparatus 1b may be same as another feature of the material supply apparatus 1. Thus, in the below described description, with reference to FIG. 26, the hopper 11b in the second embodiment will be described. FIG. 26 is a side view that illustrates a structure of the hopper 11b in the second embodiment.

As illustrated in FIG. 26, the hopper 11b in the second embodiment is different from the above described hopper 11 in that an observation window 115 is formed at the wall member 111. Another feature of the hopper 11b may be same as another feature of the hopper 11.

The observation window 117b is used as a window for the user to observe a condition of the storage space 112 from an outside of the hopper 11b (for example, from the external space 16OUT). Thus, the observation window 117b may be disposed in a through hole that penetrates the wall member 111 and include a light transmission member through which a light is allowed to pass. As a result, the user can recognize the storage amount of the build materials M in the hopper 11b through the observation window 117b.

Information relating to the necessary amount of the build materials M may be displayed at the observation window 117b together. For example, as illustrated in FIG. 26, an indicator 118b may be displayed at the observation window 117b, wherein the indicator 118b that indicates a position of an upper edge part of the build materials M in the hopper 11 when it is assumed that the hopper 11 stores the build materials M the amount of which is the necessary amount. In this case, the indicator 118b is movable in a vertical direction in accordance with the necessary amount of the build materials M. Note that the indicator 118b may be an indicator that is a physical object. Alternatively, when the observation window 117b serve as a display, the indicator 118b may be a display object that is displayed on the display.

As described above, the processing system SYSb in the second embodiment can achieve an effect that is same as the effect achievable by the above described processing system SYSa in the first embodiment.

### (3) Processing System SYSc in Third Embodiment

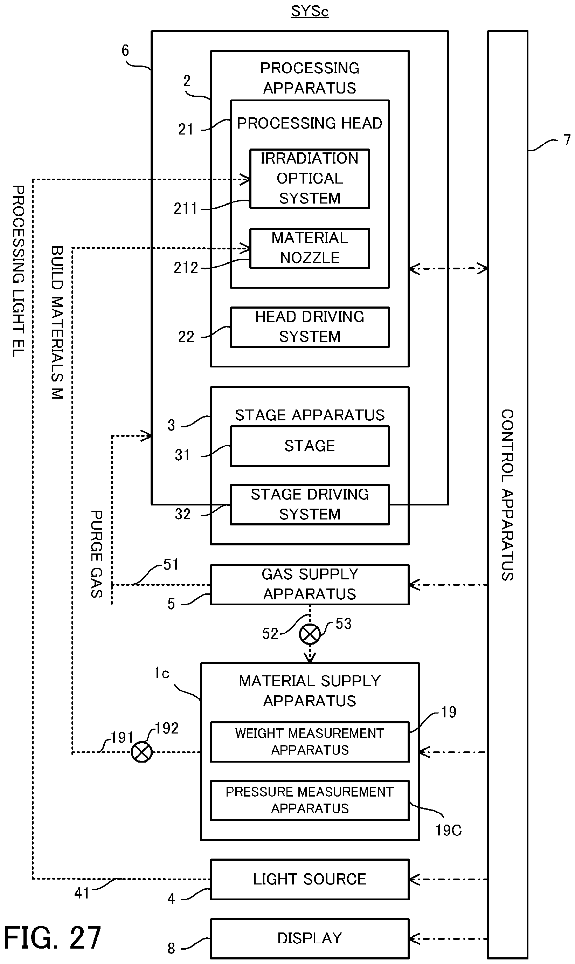

Next, with reference to FIG. 27, the processing system SYS in a third embodiment (in the below description, the processing system SYS in the third embodiment is referred to as a "processing system SYSc") will be described. FIG. 27 is a system configuration diagram that illustrates a system configuration of the processing system SYSc in the third embodiment.

As illustrated in FIG. 27, the processing system SYSc in the third embodiment is different from at least one of the processing system SYSa in the first embodiment and the processing system SYSb in the second embodiment described above in that it is provided with a material supply apparatus 1c instead of the material supply apparatus 1. Another feature of the processing system SYSc may be same as another feature of at least one of the processing system SYSa and the processing system SYSb in the second embodiment. The material supply apparatus 1c is different from at least one of the material supply apparatus 1 and the material supply apparatus 1b described above in that it is provided with a pressure measurement apparatus 19c. Another feature of the material supply apparatus 1c may be same as another feature of at least one of the material supply apparatus 1 and the material supply apparatus 1c.

The pressure measurement apparatus 19c is configured to measure a pressure in the material supply apparatus 1c. Specifically, the pressure measurement apparatus 19c is configured to measure a pressure in the internal space 16IN (see FIG. 3) in the housing 16 of the material supply apparatus 1c.

The control apparatus 7 may determine a state of the material supply apparatus 1c on the basis of a measured result of at least one of the weight measurement apparatus 19 and the pressure measurement apparatus 1c. Furthermore, the control apparatus 7 may control the display 8 to display information relating to the state of the material supply apparatus 1c.

Specifically, for example, the control apparatus 7 determines on the basis of a measured result of at least one of the weight measurement apparatus 19 and the pressure measurement apparatus 1c whether or not an abnormality occurs in the material supply apparatus 1c. "The abnormality of the material supply apparatus 1c" in the third embodiment may include not only an abnormality of "the shortage (especially, the depletion) of the build materials M" in the first embodiment but also any abnormality that may occurs in the material supply apparatus 1c. Thus, the processing system SYSc in the third embodiment is different from the processing system SYSa in the first embodiment in that it is configured to determine whether or not the abnormality the type of which is different from that of the abnormality of the shortage of the build materials M.

Furthermore, the control apparatus 7 may control the display 8 to display alert information that alerts the user that the abnormality occurs, when it is determined that the abnormality occurs in the material supply apparatus 1c. In this case, the control apparatus 7 may control the display 8 to display the alert information that includes the type of the abnormality. The control apparatus 7 may control the display 8 to display the alert information that includes a part at which the abnormality occurs. The control apparatus 7 may control the display 8 to display the alert information that includes a suggestion of a method of resolving the abnormality.

Furthermore, the control apparatus 7 may perform an operation for dealing with the abnormality, when it is determined that the abnormality occurs in the material supply apparatus 1c. For example, the control apparatus 7 may control the processing apparatus 2 and so on not to start the processing process until the occurred abnormality is resolved, when it is determined before the above described processing process is started that the abnormality occurs in the material supply apparatus 1c. For example, the control apparatus 7 may control the processing apparatus 2 and so on to suspend the processing process until the occurred abnormality is resolved, when it is determined during a period when the above described processing process is performed that the abnormality occurs in the material supply apparatus 1c. Alternatively, for example, the control apparatus 7 may stop the processing operation (namely, the above described first or second processing operation), when it is determined during the period when the above described processing process is performed that the abnormality occurs in the material supply apparatus 1c. When the processing process is suspended or the processing operation is stopped, the control apparatus 7 may control at least one of the head driving system 22 and the stage driving system 32 so that the processing head 21 is away from the build surface MS in order to prevent a contact between the processing head 21 and the build surface MS. Alternatively, for example, the control apparatus 7 may control the processing apparatus 2 and so on not to start the processing process until the occurred abnormality is resolved, when it is determined before the above described processing process is started that the abnormality occurs in the material supply apparatus 1b.

One example of the abnormality of the material supply apparatus 1c is a material supply abnormality that "the material supply apparatus 1c cannot supply the build materials M to the processing apparatus 2". Therefore, the control apparatus 7 may determine on the basis of the measured result of at least one of the weight measurement apparatus 19 and the pressure measurement apparatus 1c whether or not the material supply abnormality occurs.

When the material supply abnormality occurs, the build materials M are not supplied from the material nozzle 212 to the build surface MS, and thus, there is a possibility that the processing system SYSc has such a technical problem that the build object is not formable. Furthermore, since the build materials M are not supplied from the material nozzle 212 to the build surface MS when the abnormality of the shortage (especially, the depletion) of the build materials M in the first embodiment occurs, there is a possibility that the technical problem that is caused by the shortage (especially, the depletion) of the build materials M in the first embodiment occurs when the material supply abnormality occurs. In the third embodiment, it is expected to reduce the occurrence of the technical problem caused by the material supply abnormality.

A first example of a reason why the material supply abnormality occurs is an abnormality that the build materials M cannot be conveyed from the holding member 12 to the material delivery member 15. This is because the build materials M are supplied from the material supply apparatus 1c to the processing apparatus 2 through the material delivery member 15, and thus, the build materials M cannot be supplied from the material supply apparatus 1c to the processing apparatus 2 when the build materials M are not supplied to the material delivery member 15. There is a possibility that this abnormality occurs due to at least one of an abnormality (for example, a breakage) of the conveying member 13 that conveys the build materials M from the holding member 12 to the material delivery member 15 and an abnormality of the driving apparatus 14 that drives the conveying member 13.

] When the build materials M cannot be conveyed from the holding member 12 to the material delivery member 15, the build materials M stay in the material supply apparatus 1c. Thus, the amount of the build materials M in the material supply apparatus 1c does not decrease. Namely, the stored amount of the build materials M in the hopper 11 does not decrease. Thus, there is a high possibility that the measured result by the weight measurement apparatus 19, which measures the weight of the build materials M stored in the hopper 11, does not vary. Thus, the control apparatus 7 may determine whether or not the measured result by the weight measurement apparatus 19 does not vary for a first predetermined time (for example, several seconds) or more in order to determine whether or not the abnormality that the build materials M cannot be conveyed from the holding member 12 to the material delivery member 15 occurs. Note that a state where "the measured result by the weight measurement apparatus 19 does not vary" here includes not only a state where the measured result by the weight measurement apparatus 19 does not vary at all literally but also a state where the measured result by the weight measurement apparatus 19 does not vary as much as that when the material supply apparatus 1c supplies the build materials M to the processing apparatus 2 although it varies slightly. Furthermore, when it is determined that the measured result by the weight measurement apparatus 19 does not vary for the first predetermined time or more, the control apparatus 7 may determine that the abnormality that the build materials M cannot be conveyed from the holding member 12 to the material delivery member 15 occurs (namely, the material supply abnormality occurs).

A second example of a reason why the material supply abnormality occurs is an abnormality that the material supply pipe 191, that connects the material supply apparatus 1c and the processing apparatus 2, is clogged (for example, is clogged by the build materials M or another substance). This is because the build materials M are supplied from the material supply apparatus 1b to the processing apparatus 2 through the material supply pipe 191, and thus, the build materials M cannot be supplied from the material supply apparatus 1c to the processing apparatus 2 when the material supply pipe 191 is clogged.

There is a possibility that the pressure in the internal space 16IN of the material supply apparatus 1c is higher when the material supply pipe 191 is clogged, compared to the case where the material supply pipe 191 is not clogged. This is because the purge gas that is supplied from the gas supply apparatus 5 to the internal space 16IN flows in the material supply pipe 191 when the material supply pipe 191 is not clogged and the purge gas that is supplied from the gas supply apparatus 5 to the internal space 16IN cannot flow in the material supply pipe 191 and thus stays in the internal space 16IN when the material supply pipe 191 is clogged. Thus, the control apparatus 7 may determine whether or not the measured result by the pressure measurement apparatus 19c is equal to or larger than a first threshold value in order to determine whether or not the abnormality that the material supply pipe 191 is clogged occurs. The first threshold value is set to a proper value that allows the pressure in the internal space 16IN when the material supply pipe 191 is clogged to be distinguished from the pressure in the internal space 16IN when the material supply pipe 191 is not clogged. Furthermore, when it is determined that the measured result by the pressure measurement apparatus 19c is equal to or larger than the first threshold value, the control apparatus 7 may determine that the abnormality that the material supply pipe 191 is clogged occurs (namely, the material supply abnormality occurs).

A third example of a reason why the material supply abnormality occurs is an abnormality that the build materials M cannot be pressure-fed from the material supply apparatus 1c to the processing apparatus 2 because the pressure in the internal space 16IN is too low. This is because the build materials M are supplied from the material supply apparatus 1c to the processing apparatus 2 by using the pressure in the internal space 16IN, and thus, the build materials M cannot be pressure-fed when the pressure in the internal space 16IN is too low. There is a possibility that this abnormality occurs due to at least one of an abnormality of a deterioration of the seal member that is disposed in the aperture (specifically, at least one of the supply port 162, the aperture 163, the feed port 165, the inlet port 166 and the aperture 167) that is formed at the housing 16, an abnormality of forgetting to close the lid 115 of the hopper 11, a deterioration of a member (for example, at least one of a joint member and a resin member) that is used for an inflow and an outflow of the purge gas and an abnormality of a defect of an installation of each member that that constitutes the material supply apparatus 1c.

When the build materials M cannot be pressure-fed from the material supply apparatus 1c to the processing apparatus 2 because the pressure in the internal space 16IN is too low, the pressure in the internal space 16IN of the material supply apparatus 1c is lower than that in the case where the pressure in the internal space 16IN is proper and the build materials M can be pressure-fed from the material supply apparatus 1c to the processing apparatus 2. Thus, the control apparatus 7 may determine whether or not a state where the measured result by the pressure measurement apparatus 19c is equal to or smaller than a second threshold value is kept for a second predetermined time (for example, several seconds) in order to determine whether or not the abnormality that the build materials M cannot be pressure-fed from the material supply apparatus 1c to the processing apparatus 2 because the pressure in the internal space 16IN is too low occurs. The second threshold value is set to a proper value that allows the pressure in the internal space 16IN when the pressure in the internal space 16IN is too low and the build materials M cannot be pressure-fed from the material supply apparatus 1c to the processing apparatus 2 to be distinguished from the pressure in the internal space 16IN when the pressure in the internal space 16IN is proper and the build materials M can be pressure-fed from the material supply apparatus 1c to the processing apparatus 2. Furthermore, when it is determined that the state where the measured result by the pressure measurement apparatus 19c is equal to or smaller than the second threshold value is kept for the second predetermined time, the control apparatus 7 may determine that the abnormality that the build materials M cannot be pressure-fed from the material supply apparatus 1c to the processing apparatus 2 because the pressure in the internal space 16IN is too low occurs (namely, the material supply abnormality occurs).

One example of the abnormality of the material supply apparatus 1c is a material excess abnormality that "the hopper 11 stores the build materials M the amount of which is equal to or larger than an allowable amount". Therefore, the control apparatus 7 may determine on the basis of the measured result of at least one of the weight measurement apparatus 19 and the pressure measurement apparatus 1c whether or not the material excess abnormality occurs. Specifically, the control apparatus 7 may calculate the stored amount of the build materials M in the hopper 11 on the basis of the measured result by the weight measurement apparatus 19 and determine whether or not the calculated stored amount is equal to or larger than a third predetermined amount. The third predetermined amount may be set to the allowable upper limit value of the stored amount of the build materials M in the material supply apparatus 1c (alternatively, a value that is smaller than the allowable upper limit value by a predetermined margin). Furthermore, when it is determined that the calculated stored amount does not vary for the predetermined time or more, the control apparatus 7 may determine that the material excess abnormality occurs.

There is a possibility that the material excess abnormality leads to an abnormality of the supplied amount of the build materials M supplied from the hopper 11 to the holding member 12. There is a possibility that the abnormality of the supplied amount of the build materials M supplied from the hopper 11 to the holding member 12 leads to an abnormality of the supplied amount of the build materials M supplied from the material supply apparatus 1c to the processing apparatus 2. There is a possibility that the abnormality of the supplied amount of the build materials M supplied from the material supply apparatus 1c to the processing apparatus 2 leads to a deterioration of the accuracy of the three-dimensional structural object ST. In the third embodiment, it is expected to reduce the occurrence of the technical problem caused by the material excess abnormality.

One example of the abnormality of the abnormality of the material supply apparatus 1c is a measurement abnormality that "the measured result by the weight measurement apparatus 19 is not updated in the control apparatus 7". When the measurement abnormality occurs, there is a possibility that the measured result by the weight measurement apparatus 19 is not recognizable by the control apparatus 7. Alternatively, there is a possibility that the measured result by the weight measurement apparatus 19 that is recognized by the control apparatus 7 remains the same for a long time. Thus, the control apparatus 7 may determine whether or not the measured result by the weight measurement apparatus 19 is recognizable and / or the measured result by the weight measurement apparatus 19 that is recognized by the control apparatus 7 remains the same for a long time, in order to determine whether or not the measurement abnormality occurs. Furthermore, when it is determined that the measured result by the weight measurement apparatus 19 is not recognizable and / or the measured result by the weight measurement apparatus 19 that is recognized by the control apparatus 7 remains the same for a long time, the control apparatus 7 may determine that the measurement abnormality occurs.

When the measurement abnormality occurs, the stored amount of the build materials M in the hopper 11 is not accurately recognizable by the control apparatus 7, and thus, there is a possibility that the abnormality of the supplied amount of the build materials M supplied from the material supply apparatus 1c to the processing apparatus 2 occurs. Thus, there is a possibility that an abnormality that "the second processing operation that considers the stored amount of the build materials M in the hopper 11" described in the first embodiment cannot be performed properly occurs. As a result, there is a possibility that the accuracy of the three-dimensional structural object ST is affected. In the third embodiment, it is expected to reduce the occurrence of the technical problem caused by the measurement abnormality.

As described above, the processing system SYSc in the third embodiment is allowed to perform the proper operation when the abnormality the type of which is different from that of the abnormality of the shortage of the build materials M while achieving an effect that is same as the effect achievable by the above described processing system SYSa in the first embodiment.

Note that the control apparatus 7 may determine (namely, predict) on the basis of the measured result of at least one of the weight measurement apparatus 19 and the pressure measurement apparatus 1c whether or not the abnormality will occur in the material supply apparatus 1c in the future, in addition to or instead of determining whether or not the abnormality occurs (namely, actually occurs) in the material supply apparatus 1c. Namely, the control apparatus 7 may determine whether or not the abnormality will occur in the material supply apparatus 1c before the abnormality actually occurs in the material supply apparatus 1c.

For example, when the material supply abnormality occurs due to the abnormality that the material supply pipe 191 is clogged, there is a possibility that the material supply pipe 191 is gradually clogged. In this case, there is a possibility that the pressure in the internal space 16IN gradually increases. Thus, the control apparatus 7 may determine whether or not the measured result by the pressure measurement apparatus 19c gradually increases and is equal to or larger than a third threshold value, in order to determine whether or not the abnormality that the material supply pipe 191 is clogged will occur in the future. The third threshold value is smaller than the above described first threshold value that is used to determine whether or not the abnormality that the material supply pipe 191 is clogged actually occurs. Furthermore, when it is determined that the measured result by the pressure measurement apparatus 19c gradually increases and is equal to or larger than the third threshold value, the control apparatus 7 may determine that the abnormality that the material supply pipe 191 is clogged will occur although the abnormality that the material supply pipe 191 is clogged does not occur now.

For example, when the material supply abnormality occurs due to the abnormality that the build materials M cannot be pressure-fed from the material supply apparatus 1c to the processing apparatus 2 because the pressure in the internal space 16IN is too low, there is a possibility that the pressure in the internal space 16IN gradually decreases. Thus, the control apparatus 7 may determine whether or not the measured result by the pressure measurement apparatus 19c gradually decreases and is equal to or smaller than a fourth threshold value, in order to determine whether or not the abnormality that the build materials M cannot be pressure-fed from the material supply apparatus 1c to the processing apparatus 2 because the pressure in the internal space 16IN is too low will occur in the future. The fourth threshold value is smaller than the above described third threshold value that is used to determine whether or not the abnormality that the build materials M cannot be pressure-fed from the material supply apparatus 1c to the processing apparatus 2 because the pressure in the internal space 16IN is too low actually occurs. Furthermore, when it is determined that the measured result by the pressure measurement apparatus 19c gradually decreases and is equal to or smaller than the fourth threshold value, the control apparatus 7 may determine that the abnormality that the build materials M cannot be pressure-fed from the material supply apparatus 1c to the processing apparatus 2 because the pressure in the internal space 16IN is too low will occur although the abnormality that the build materials M cannot be pressure-fed from the material supply apparatus 1c to the processing apparatus 2 because the pressure in the internal space 16IN is too low does not occur now.

### (4) Processing System SYSd in Fourth Embodiment

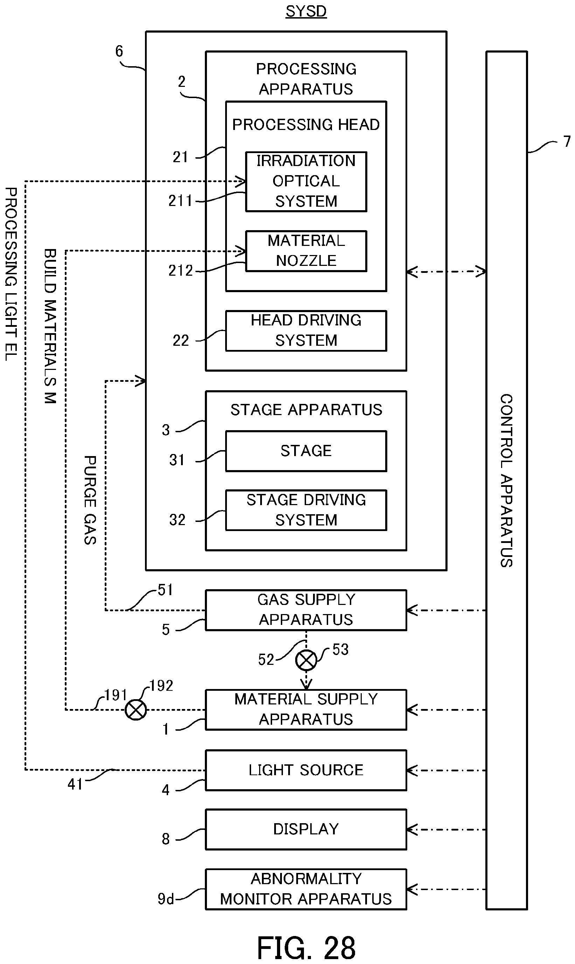

Next, with reference to FIG. 28, the processing system SYS in a fourth embodiment (in the below description, the processing system SYS in the fourth embodiment is referred to as a "processing system SYSd") will be described. FIG. 28 is a system configuration diagram that illustrates a system configuration of the processing system SYSd in the fourth embodiment.

As illustrated in FIG. 28, the processing system SYSd in the fourth embodiment is different from at least one of the processing system SYSa in the first embodiment to the processing system SYSc in the third embodiment described above in that it is provided with an abnormality monitor apparatus 9d. Another feature of the processing system SYSd may be same as another feature of at least one of the processing systems SYSa to SYSc.

The abnormality monitor apparatus 9d is an apparatus that monitors any abnormality that may occurs in the processing system SYSd. Specifically, the abnormality monitor apparatus 9d includes a sensor that corresponds to the type of the abnormality of a monitored target. The control apparatus 7 may control the display 8 to display information relating to a monitored result by the abnormality monitor apparatus 9d (for example, a detected result by the sensor) (namely, information relating to the state of the processing system SYSd).

The control apparatus 7 determines on the basis of the monitored result by the abnormality monitor apparatus 9d (for example, the detected result by the sensor) whether or not the abnormality occurs in the processing system SYSd. Thus, the processing system SYSd in the fourth embodiment is different from the processing system SYSc in the third embodiment in that it is configured not only to determine whether or not the abnormality occurs in the material supply apparatus 1 but also to determine whether or not any abnormality occurs in the processing system SYSd.

Furthermore, the control apparatus 7 may control the display 8 to display alert information that alerts the user that the abnormality occurs, when it is determined that the abnormality occurs in the material supply apparatus 1d. In this case, the control apparatus 7 may control the display 8 to display the alert information that includes the type of the abnormality. The control apparatus 7 may control the display 8 to display the alert information that includes a part at which the abnormality occurs. The control apparatus 7 may control the display 8 to display the alert information that includes a suggestion of a method of resolving the abnormality.

Furthermore, the control apparatus 7 may perform an operation for dealing with the abnormality, when it is determined that the abnormality occurs in the processing system SYSd. For example, the control apparatus 7 may control the processing apparatus 2 and so on not to start the processing process until the occurred abnormality is resolved, when it is determined before the above described processing process is started that the abnormality occurs in the processing system SYSd. For example, the control apparatus 7 may control the processing apparatus 2 and so on to suspend the processing process until the occurred abnormality is resolved, when it is determined during the period when the above described processing process is performed that the abnormality occurs in the processing system SYSd. Alternatively, for example, the control apparatus 7 may stop the processing operation (namely, the above described first or second processing operation), when it is determined during the period when the above described processing process is performed that the abnormality occurs in the processing system SYSd. When the processing process is suspended or the processing operation is stopped, the control apparatus 7 may control at least one of the head driving system 22 and the stage driving system 32 so that the processing head 21 is away from the build surface MS in order to prevent the contact between the processing head 21 and the build surface MS. Alternatively, for example, the control apparatus 7 may control the processing apparatus 2 and so on not to start the processing process until the occurred abnormality is resolved, when it is determined before the above described processing process is started that the abnormality occurs in the processing system SYSd.

One example of the processing system SYSd is an abnormality that the processing head 21 moves beyond a movable range (namely, the processing head 21 is located a position that is beyond the movable range). In this case, the abnormality monitor apparatus 9d may include a head position sensor that is configured to measure a position of the processing head 21. The head position sensor may include at least one of an encoder and an interferometer, for example. The control apparatus 7 may determine on the basis of a detected result by the head position sensor whether or not the abnormality that the processing head 21 moves beyond the movable range occurs. Specifically, the control apparatus 7 may determine that the abnormality that the processing head 21 moves beyond the movable range occurs, when the position of the processing head 21 that is determined from the detected result by the head position sensor is a position that is beyond the movable range (for example, a position that is at an outside of the movable range).

One example of the processing system SYSd is an abnormality that the stage 31 moves beyond a movable range (namely, the stage 31 is located a position that is beyond the movable range). In this case, the abnormality monitor apparatus 9d may include a stage position sensor that is configured to measure a position of the stage 31. The stage position sensor may include at least one of an encoder and an interferometer, for example. The control apparatus 7 may determine on the basis of a detected result by the stage position sensor whether or not the abnormality that the stage 31 moves beyond the movable range occurs. Specifically, the control apparatus 7 may determine that the abnormality that the stage 31 moves beyond the movable range occurs, when the position of the stage 31 that is determined from the detected result by the stage position sensor is a position that is beyond the movable range (for example, a position that is at an outside of the movable range).

One example of the processing system SYSd is an abnormality that a light amount of the processing light EL that is emitted from the irradiation optical system 211 to the build surface MS is larger than an allowable upper limit amount or is smaller than an allowable lower limit amount. In this case, the abnormality monitor apparatus 9d may include a light amount sensor that is configured to measure the light amount of the processing light EL that is emitted from the irradiation optical system 211 to the build surface MS. Note that the light amount sensor may be configured to measure a light amount of a returned light of the processing light EL from the build surface MS in order not to prevent the processing by the processing light EL. In this case, the control apparatus 7 is configured to estimate the light amount of the processing light EL that is emitted from the irradiation optical system 211 to the build surface MS on the basis of the light amount of the returned light of the processing light EL from the build surface MS. The control apparatus 7 may determine on the basis of a detected result by the light amount sensor whether or not the abnormality that the light amount of the processing light EL that is emitted from the irradiation optical system 211 to the build surface MS is larger than the allowable upper limit amount or is smaller than the allowable lower limit amount occurs.

One example of the processing system SYSd is an abnormality that the light transmitting member 41 (for example, the optical fiber or the light pipe) that connects the light source 4 and the processing apparatus 2 (especially, the irradiation optical system 211) is broken. In this case, the abnormality monitor apparatus 9d may include: an electric wire that extends along the light transmitting member 41 and that is broken along with the breakage of the light transmitting member 41; and a break sensor that is configured to detect the breakage of the electric wire. The control apparatus 7 may determine on the basis of a detected result by the break sensor whether or not the abnormality that the light transmitting member 41 is broken occurs. Specifically, the control apparatus 7 may determine on the basis of a detected result by the break sensor whether or not the electric wire is broken. Furthermore, the control apparatus 7 may determine that the abnormality that the light transmitting member 41 is broken occurs, when it is determined that the electric wire is broken.

One example of the processing system SYSd is an abnormality that the processing light EL is emitted from the irradiation optical system 211 even though the processing head 21 does not move (namely, stops) relative to the build surface MS. In this case, the abnormality monitor apparatus 9d may include the head position sensor and / or the stage position sensor described above and a light source sensor that is configured to measure an emission state of the processing light EL by the light source 4. The control apparatus 7 may determine on the basis of a detected result by the head position sensor and / or the stage position sensor and the light source sensor whether or not the abnormality that the processing light EL is emitted from the irradiation optical system 211 even though the processing head 21 does not move relative to the build surface MS occurs. Specifically, the control apparatus 7 may determine on the basis of the detected result by the head position sensor and / or the stage position sensor whether or not the processing head 21 and / or the stage 31 moves and may determine on the basis of the detected result by the light source sensor whether or not the light source 4 emits the processing light EL. Furthermore, the control apparatus 7 may determine that the abnormality that the processing light EL is emitted from the irradiation optical system 211 even though the processing head 21 does not move relative to the build surface MS occurs, when it is determined that the light source 4 emits the processing light EL even though the processing head 21 and the stage 31 does not move.

One example of the processing system SYSd is an abnormality that the head driving system 22 cannot move the processing head 21 properly. In this case, the abnormality monitor apparatus 9d may include the above described head position sensor. The control apparatus 7 may determine on the basis of the detected result by the head position sensor whether or not the abnormality that the head driving system 22 cannot move the processing head 21 properly occurs. Specifically, the control apparatus 7 controls the head driving system 22 to move the processing head 21 on the basis of the above described slice data. Therefore, the control apparatus 7 is allowed to determine an expected moving aspect (alternatively, position) of the processing head 21 on the basis of the slice data. Furthermore, the control apparatus 7 is allowed to determine a real moving aspect (alternatively, position) of the processing head 21 on the basis of the detected result by the head position sensor. The control apparatus 7 may determine that the abnormality that the head driving system 22 cannot move the processing head 21 properly occurs, when a difference between the expected moving aspect (alternatively, position) of the processing head 21 and the real moving aspect (alternatively, position) of the processing head 21 is equal to or larger than an allowable amount.

One example of the processing system SYSd is an abnormality that the stage driving system 32 cannot move the stage 31 properly. In this case, the abnormality monitor apparatus 9d may include the above described stage position sensor. The control apparatus 7 may determine on the basis of the detected result by the stage position sensor whether or not the abnormality that the stage driving system 32 cannot move the stage 31 properly occurs. Specifically, the control apparatus 7 controls the stage driving system 32 to move the stage 31 on the basis of the above described slice data. Therefore, the control apparatus 7 is allowed to determine an expected moving aspect (alternatively, position) of the stage 31 on the basis of the slice data. Furthermore, the control apparatus 7 is allowed to determine a real moving aspect (alternatively, position) of the stage 31 on the basis of the detected result by the stage position sensor. The control apparatus 7 may determine that the abnormality that the stage driving system 32 cannot move the stage 31 properly occurs, when a difference between the expected moving aspect (alternatively, position) of the stage 31 and the real moving aspect (alternatively, position) of the stage 31 is equal to or larger than an allowable amount.

One example of the processing system SYSd is an abnormality that a pressure in the chamber space 63IN is higher than an allowable upper limit pressure or is lower than an allowable lower limit pressure. In this case, the abnormality monitor apparatus 9d may include a pressure sensor that is configured to measure the pressure in the chamber space 63IN. The control apparatus 7 may determine on the basis of the detected result by the pressure sensor whether or not the abnormality that the pressure in the chamber space 63IN is higher than the allowable upper limit pressure or is lower than the allowable lower limit pressure occurs.

One example of the processing system SYSd is an abnormality that a temperature in the chamber space 63IN is higher than an allowable upper limit temperature or is lower than an allowable lower limit temperature. In this case, the abnormality monitor apparatus 9d may include a temperature sensor that is configured to measure the temperature in the chamber space 63IN. The control apparatus 7 may determine on the basis of the detected result by the temperature sensor whether or not the abnormality that the temperature in the chamber space 63IN is higher than the allowable upper limit temperature or is lower than the allowable lower limit temperature occurs.

One example of the processing system SYSd is an abnormality that the processing head 21 contacts with some object. At least one of the workpiece W, the stage 31 and the build object formed on the workpiece W is one example of the object that may contact with the processing head 21, for example. In this case, the abnormality monitor apparatus 9d may include a contact sensor that is configured to measure a contact between the processing head 21 and the object. Alternatively, the abnormality monitor apparatus 9d may include the above described head position sensor. The control apparatus 7 may determine on the basis of the detected result by the contact sensor and / or the head position sensor whether or not the abnormality that the processing head 21 contacts with some object occurs.

One example of the processing system SYSd is an abnormality that a distance between the processing head 21 and some object is smaller than an allowable lower limit distance. At least one of the workpiece W, the stage 31 and the build object formed on the workpiece W is one example of the object that may approaches the processing head 21, for example. In this case, the abnormality monitor apparatus 9d may include a distance sensor that is configured to measure the distance between the processing head 21 and the object. Alternatively, the abnormality monitor apparatus 9d may include the above described head position sensor. The control apparatus 7 may determine on the basis of the detected result by the distance sensor and / or the head position sensor whether or not the abnormality that the distance between the processing head 21 and the object is smaller than the allowable lower limit distance occurs.

One example of the processing system SYSd is an abnormality that the concentration of the oxygen in the chamber space 63IN is higher than an allowable upper limit concentration. In this case, the abnormality monitor apparatus 9d may include a concentration sensor that is configured to measure the concentration of the oxygen in the chamber space 63IN. The control apparatus 7 may determine on the basis of the detected result by the concentration sensor whether or not the abnormality that the concentration of the oxygen in the chamber space 63IN is higher than the allowable upper limit concentration occurs.

As described above, the processing system SYSd in the fourth embodiment is allowed to perform the proper operation when some abnormality occurs in the processing system SYSd while achieving an effect that is same as the effect achievable by at least one of the processing system SYSa in the first embodiment to the processing system SYSc in the third embodiment described above.

Incidentally, even in the fourth embodiment, the control apparatus 7 may determine (namely, predict) on the basis of the monitored result by the abnormality monitor apparatus 9d whether or not the abnormality will occur in the processing system SYSd in the future, in addition to or instead of determining whether or not the abnormality occurs (namely, actually occurs) in the processing system SYSd, as with the third embodiment. Namely, the control apparatus 7 may determine whether or not the abnormality will occur in the processing system SYSd before the abnormality actually occurs in the processing system SYSd.

### (5) Processing System SYSe in Fifth Embodiment

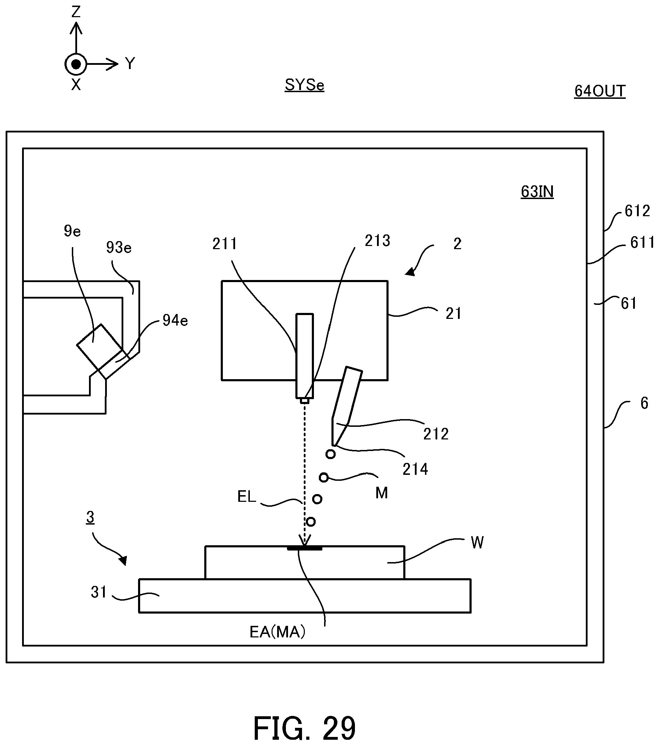

Next, with reference to FIG. 29, the processing system SYS in a fifth embodiment (in the below description, the processing system SYS in the fifth embodiment is referred to as a "processing system SYSe") will be described. FIG. 29 is a system configuration diagram that illustrates a system configuration of the processing system SYSe in the fifth embodiment.

As illustrated in FIG. 29, the processing system SYSe in the fifth embodiment is different from at least one of the processing system SYSa in the first embodiment to the processing system SYSd in the fourth embodiment described above in that it is provided with an observation apparatus 9e. Another feature of the processing system SYSe may be same as another feature of at least one of the processing systems SYSa to SYSd.

The observation apparatus 9e may be configured to observe a state of at least a part of the chamber space 63IN under the control of the control apparatus 7. As described above, the processing apparatus 2, the stage apparatus 3 and the workpiece W are housed in the chamber space 63IN. Thus, the observation apparatus 9e may be configured to observe a state of at least a part of the processing apparatus 2, the stage apparatus 3 and the workpiece W. As described above, the processing process is performed in the chamber space 63IN. Thus, the observation apparatus 9e may be configured to observe a state of the processing process. The stage of the processing process may include at least one of a state of the build surface MS on which the processing process is performed, an irradiation state of the processing light EL, a supply state of the build materials M and a state of the melt pool MP.

An observed result by the observation apparatus 9e may be outputted to the control apparatus 7. The control apparatus 7 may control the processing apparatus 2 and so on to perform the processing process on the basis of the observed result by the observation apparatus 9e. The control apparatus 7 may control the display 8 to display information that indicates the observed result by the observation apparatus 9e.

The observation apparatus 9e may include an imaging apparatus. In this case, the observation apparatus 9e may be configured to image the state of at least a part of the chamber space 63IN. The observation apparatus 9e may be configured to output an image that indicates the state of at least a part of the chamber space 63IN to the control apparatus 7. The observation apparatus 9e may be configured to image the state of at least a part of the processing apparatus 2, the stage apparatus 3 and the workpiece W. The observation apparatus 9e may be configured to output an image that indicates the state of at least a part of the processing apparatus 2, the stage apparatus 3 and the workpiece W to the control apparatus 7. The observation apparatus 9e may be configured to image the state of the processing process. The observation apparatus 9e may be configured to output an image that indicates the state of the processing process to the control apparatus 7.

The observation apparatus 9e may be separated from the chamber space 63IN by a wall member 93e. The observation apparatus 9e may be disposed in a space that is separated from the chamber space 63IN by the wall member 93e. In this case, an adhesion of a substance that exists in the chamber space 63IN to the observation apparatus 9e is prevented. Note that at least one of the build material M that is supplied from the material nozzle 212 to the chamber space 63IN and a substance that is generated from the build surface MS due to the irradiation of the processing light EL is one example of the substance that exists in the chamber space 63IN. A fume that includes at least one of a fine particle of the molten build material M and fine particle of a molten material that constitutes the workpiece W is one example of the substance that is generated from the build surface MS due to the irradiation of the processing light EL.

The wall member 93e is provided with a light transmission member 94e through which the light is allowed to pass and that shields the above described substance. As a result, the observation apparatus 9e is allowed to observe the state of the observation target through the light transmission member 94e even though the observation apparatus 9e may be separated from the chamber space 63IN by the wall member 93e.

As described above, the processing system SYSe in the fifth embodiment can achieve an effect that is same as the effect achievable by at least one of the processing system SYSa in the first embodiment to the processing system SYSd in the fourth embodiment described above. Moreover, the processing system SYSe is allowed to observe the observation target properly by using the observation apparatus 9e.

### (6) Processing System SYSf in Sixth Embodiment

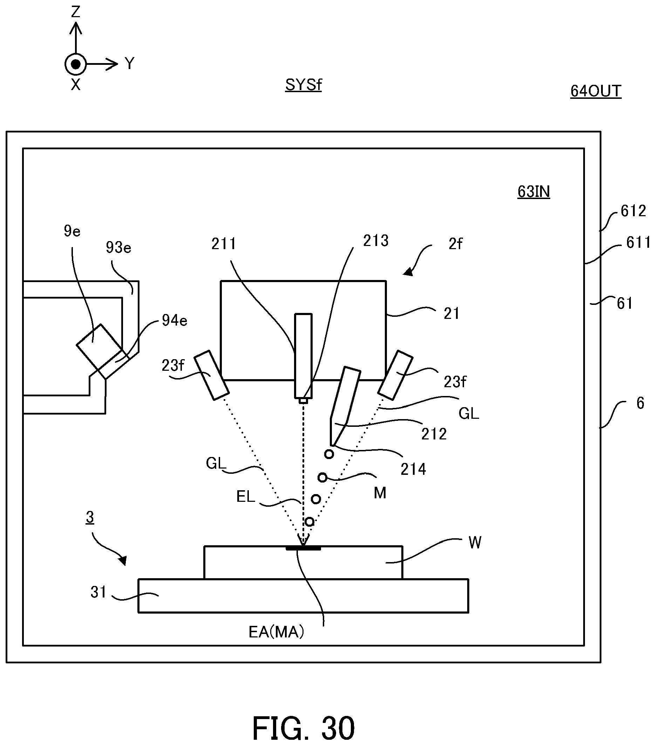

Next, with reference to FIG. 30, the processing system SYS in a sixth embodiment (in the below description, the processing system SYS in the sixth embodiment is referred to as a "processing system SYSf") will be described. FIG. 30 is a system configuration diagram that illustrates a system configuration of the processing system SYSf in the sixth embodiment.

As illustrated in FIG. 30, the processing system SYSf in the sixth embodiment is different from the processing system SYSe in the fifth embodiment described above in that it is provided with a processing apparatus 2f instead of the processing apparatus 2. Another feature of the processing system SYSf may be same as another feature of the processing system SYSe. The processing apparatus 2f is different from the processing apparatus 2 in that it is provided with a plurality of guide light emitting apparatuses 23f. Another feature of the processing apparatus 2f may be same as another feature of the processing apparatus 2.

The guide light emitting apparatus 23f is disposed at the processing head 21. The guide light emitting apparatus 23f emits guide light GL. The guide light emitting apparatus 23f emits guide light GL so that the guide light GL propagates in the chamber space 63IN. The plurality of guide light emitting apparatuses 23f are aligned with each other so that a plurality of guide lights GL that are emitted from the plurality of guide light emitting apparatuses 23f, respectively, intersect with each other at a certain position below the processing head 21.

Especially in the sixth embodiment, the plurality of guide light emitting apparatuses 23f are aligned with each other so that the plurality of guide lights GL intersect with each other at the light concentration position of the processing light EL. In this case, the processing system SYSf may set the light concentration position of the processing light EL on a desired position by using the plurality of guide lights GL. Specifically, the processing system SYSf may move the processing head 21 along the Z axis direction so that the light concentration position of the processing light EL is set on the desired position by using the plurality of guide lights GL. Next, an operation of setting the light concentration position of the processing light EL on the desired position by using the plurality of guide lights GL will be described.

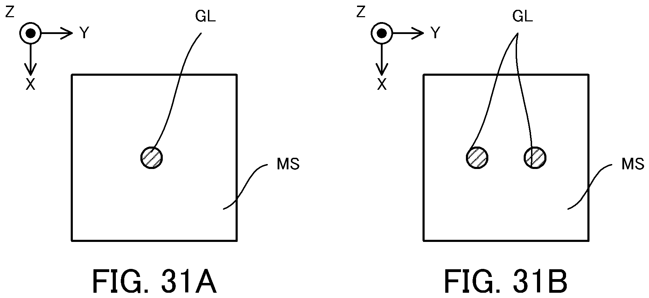

As described above, the light concentration position of the processing light EL is usually set on the build surface MS. When the plurality of guide lights GL are emitted from the plurality of guide light emitting apparatuses 23f, respectively, in the case where the light concentration position of the processing light EL is set on the build surface MS, as illustrated in FIG. 31A that illustrates beam spots of the plurality of guide lights GL on the build surface MS when the light concentration position of the processing light EL is set on the build surface MS, the beam spots of the plurality of guide lights GL overlap on the build surface MS. On the other hand, when the plurality of guide lights GL are emitted from the plurality of guide light emitting apparatuses 23f, respectively, in the case where the light concentration position of the processing light EL is set on a position that is different from the build surface MS, as illustrated in FIG. 31B that illustrates beam spots of the plurality of guide lights GL on the build surface MS when the light concentration position of the processing light EL is set on the position that is different from the build surface MS, the beam spots of the plurality of guide lights GL do not overlap on the build surface MS. Thus, the control apparatus 7 is allowed to set the light concentration position of the processing light EL on the build surface MS by moving the processing head 21 along the Z axis direction so that the beam spots of the plurality of guide lights GL overlap on the build surface MS.

State of the beam spots of the plurality of guide lights GL are determinable from the observed result by the observation apparatus 9e. Thus, the control apparatus 7 is allowed to determine on the basis of the observed result by the observation apparatus 9e whether or not the beam spots of the plurality of guide lights GL overlap on the build surface MS. Namely, the control apparatus 7 is allowed to determine on the basis of the observed result by the observation apparatus 9e whether or not the light concentration position of the processing light EL is set on the build surface MS. When the beam spots of the plurality of guide lights GL do not overlap on the build surface MS, the control apparatus 7 moves the processing head 21 along the Z axis direction so that the beam spots of the plurality of guide lights GL overlap on the build surface MS. As a result, the light concentration position of the processing light EL is set on the build surface MS.

As described above, the processing system SYSf in the sixth embodiment is allowed to set the light concentration position of the processing light EL on the desired position (for example, the build surface MS) while achieving an effect that is same as the effect achievable by the processing system SYSe in the fifth embodiment described above.

### (7) Other Modified Example

An operating time of the processing system SYS (namely, at least one of the processing systems SYSa to SYSf) may be monitored. As one example, an operating time of the material supply apparatus 1 may be monitored. A lifetime of the material supply pipe 191 may be estimated from a monitored result of the operating time of the material supply apparatus 1.

In the above described description, the information relating to the amount of the materials is displayed on the display 8 by the control apparatus 7. However, the information relating to the amount of the materials may be outputted in form of an audio output.

In the above described description, the processing apparatus 2 and the processing apparatus 2f melt the build materials M by irradiating the build materials M with the processing light EL. However, the processing apparatus 2 and the processing apparatus 2f may melt the build materials M by irradiating the build materials M with any energy beam. In this case, the processing apparatus 2 may be provided with a beam irradiation apparatus that is configured to emit any energy beam in addition to or instead of the irradiation optical system 211. Any energy beam includes, but is not limited to, a charged particle beam such as an electron beam and an ion beam or electromagnetic wave.

In the above described description, the processing system SYS (namely, at least one of the processing systems SYSa to SYSf) is configured to form the three-dimensional structural object ST by the Laser Metal Deposition. However, the processing system SYS (namely, at least one of the processing systems SYSa to SYSf) may form the three-dimensional structural object ST from the build materials M by another method for forming the three-dimensional structural object ST by irradiating the build materials M with the processing light EL (alternatively, any energy beam). The Powder Bed Fusion such as a Selective Laser Sintering (SLS), a Binder Jetting or a Laser Metal Fusion (LMF) is one example of another method, for example. Alternatively, the processing system SYS may form the three-dimensional structural object ST by any method for the additive processing that is different from the method for forming the three-dimensional structural object ST by irradiating the build materials M with the processing light EL (alternatively, any energy beam).

In the above described description, the processing system SYS (namely, at least one of the processing systems SYSa to SYSf) forms the three-dimensional structural object ST by supplying the build materials M from the material nozzle 212 to the irradiation area EA that is irradiated with the processing light EL by the irradiation optical system 211. However, the processing system SYS may form the three-dimensional structural object ST by supplying the build materials M from the material nozzle 212 without emitting the processing light EL from the irradiation optical system 211. For example, the processing system SYS may form the three-dimensional structural object ST by spraying the build materials M from the material nozzle 212 to the build surface MS to thereby melt the build materials M on the build surface MS and then solidifying the molten build materials M. For example, the processing system SYS (namely, at least one of the processing systems SYSa to SYSf) may form the three-dimensional structural object ST by spraying gas including the build materials M at an ultrafast speed from the material nozzle 212 to the build surface MS to thereby melt the build materials M on the build surface MS and then solidifying the molten build materials M. For example, the processing system SYS (namely, at least one of the processing systems SYSa to SYSf) may form the three-dimensional structural object ST by spraying the heated build materials M from the material nozzle 212 to the build surface MS to thereby melt the build materials M on the build surface MS and then solidifying the molten build materials M. When the three-dimensional structural object ST is formed without emitting the processing light EL from the irradiation optical system 211, the processing system SYS (namely, at least one of the processing systems SYSa to SYSf) (especially, the processing head 21) may not be provided with the irradiation optical system 211.

Alternatively, the processing system SYS (namely, at least one of the processing systems SYSa to SYSf) may perform a removal processing that removes at least a part of an object by irradiating the object such as the workpiece W with the processing light EL (alternatively, any energy beam) in addition to or instead of the additive processing. Alternatively, the processing system SYS (namely, at least one of the processing systems SYSa to SYSf) may perform a marking processing that forms a mark (for example, a character, a number or a graphic) on at least a part of an object by irradiating the object such as the workpiece W with the processing light EL (alternatively, any energy beam) in addition to or instead of at least one of the additive processing and the removal processing. Even in these cases, the above described effect is achievable.

### (8) Supplementary Note

With respect to the embodiments described above, the following Supplementary Notes will be further disclosed.

### [Supplementary Note 1]

A processing system comprising:
a supply apparatus that stores materials and supplies the stored materials;
a processing apparatus the performs a processing process for forming a build object by using the materials that are supplied from the supply apparatus; and
an output apparatus that outputs alert information when a stored amount of the materials in the supply apparatus is smaller than a predetermined amount.

### [Supplementary Note 2]

The processing system according to the supplementary note 1, wherein
the output apparatus outputs the alert information before the processing apparatus starts the processing process.

### [Supplementary Note 3]

The processing system according to the supplementary note 1 or 2, wherein
the output apparatus outputs the alert information after the processing apparatus starts the processing process.

### [Supplementary Note 4]

The processing system according to any one of the supplementary notes 1 to 3 further comprising: a control apparatus that determines whether or not the stored amount is smaller than the predetermined amount and controls the output apparatus to output the alert information when it is determined that the stored amount is smaller than the predetermined amount.

### [Supplementary Note 5]

The processing system according to the supplementary note 4, wherein
the control apparatus determines whether or not the stored amount is smaller than the predetermined amount before the processing apparatus starts the processing process.

### [Supplementary Note 6]

The processing system according to the supplementary note 5, wherein
when it is determined that the stored amount is smaller than the predetermined amount before the processing apparatus starts the processing process, the control apparatus controls the processing apparatus not to start the processing process.

### [Supplementary Note 7]

The processing system according to the supplementary note 5 or 6, wherein
when it is determined that the stored amount is smaller than the predetermined amount before the processing apparatus starts the processing process, the control apparatus controls the processing apparatus to start the processing process on the condition that the supply apparatus is replenished with the materials.

### [Supplementary Note 8]

The processing system according to any one of the supplementary notes 4 to 7, wherein
the control apparatus determines whether or not the stored amount is smaller than the predetermined amount after the processing apparatus starts the processing process.

### [Supplementary Note 9]

The processing system according to the supplementary note 8, wherein
when it is determined that the stored amount is smaller than the predetermined amount after the processing apparatus starts the processing process, the control apparatus controls the processing apparatus to suspend the processing process.

### [Supplementary Note 10]

The processing system according to the supplementary note 9, wherein
the control apparatus controls the processing apparatus to restart the suspended processing process on the condition that the supply apparatus is replenished with the materials.

### [Supplementary Note 11]

The processing system according to the supplementary note 9 or 10, wherein
the control apparatus controls the processing apparatus to suspend the processing process after a certain amount of time elapses since it is determined that the stored amount is smaller than the predetermined amount.

### [Supplementary Note 12]

The processing system according to any one of the supplementary notes 9 to 11, wherein
the control apparatus controls the processing apparatus not to suspend the processing process when the supply apparatus is replenished with the materials before a certain amount of time elapses since it is determined that the stored amount is smaller than the predetermined amount and to suspend the processing process when the supply apparatus is not replenished with the materials before the certain amount of time elapses since it is determined that the stored amount is smaller than the predetermined amount.

### [Supplementary Note 13]

The processing system according to any one of the supplementary notes 4 to 11 further comprising a detect apparatus that detects the stored amount,
the control apparatus determines on the basis of a detected result by the detect apparatus whether or not the stored amount is smaller than the predetermined amount.

### [Supplementary Note 14]

The processing system according to any one of the supplementary notes 4 to 12, wherein
the control apparatus sets the predetermined amount on the basis of a build data that defines a detail of the processing process.

### [Supplementary Note 15]

The processing system according to the supplementary note 14, wherein
the control apparatus estimates, on the basis of the build data, an amount of the materials that is necessary for performing the processing process and set the estimated amount to the predetermined amount.

### [Supplementary Note 16]

The processing system according to any one of the supplementary notes 1 to 15, wherein
the alert information includes information relating to a shortage of the materials that are stored in the supply apparatus.

### [Supplementary Note 17]

The processing system according to any one of the supplementary notes 1 to 16, wherein
the alert information includes information relating to the stored amount.

### [Supplementary Note 18]

The processing system according to any one of the supplementary notes 1 to 17, wherein
the alert information includes information relating to an amount of the materials that is necessary for the processing apparatus to perform the processing process.

### [Supplementary Note 19]

The processing system according to any one of the supplementary notes 1 to 18, wherein
the alert information includes information relating to a necessity of a replenishment of the materials to the supply apparatus.

### [Supplementary Note 20]

The processing system according to any one of the supplementary notes 1 to 19, wherein
the alert information includes information relating to an amount of the materials with which the supply apparatus is desired to be replenishment.

### [Supplementary Note 21]

The processing system according to any one of the supplementary notes 1 to 20, wherein
the alert information includes information for notifying that only a part of the build object is allowed to be formed by the materials that are stored in the supply apparatus.

### [Supplementary Note 22]

The processing system according to any one of the supplementary notes 1 to 21, wherein
the alert information includes information relating to a part of the build material that is allowed to be formed by the materials that are stored in the supply apparatus.

### [Supplementary Note 23]

The processing system according to any one of the supplementary notes 1 to 22, wherein
the alert information includes information relating to a part of the build material that is not allowed to be formed by the materials that are stored in the supply apparatus.

### [Supplementary Note 24]

The processing system according to any one of the supplementary notes 1 to 23, wherein
the alert information includes information for notifying a reason why the processing process is not allowed to be started.

### [Supplementary Note 25]

The processing system according to any one of the supplementary notes 1 to 24, wherein
the alert information includes information for allowing a user of the processing system to select whether or not the processing process is performed by using the materials that are stored in the supply apparatus.

### [Supplementary Note 26]

The processing system according to any one of the supplementary notes 1 to 25, wherein
when the stored amount is smaller than the predetermined amount, the processing apparatus suspends the processing process at a stage where a part of the build object is formed

### [Supplementary Note 27]

A processing system comprising:
a supply apparatus that stores materials and supplies the stored materials; and
a processing apparatus the performs a processing process for forming a build object by using the materials that are supplied from the supply apparatus,
the processing apparatus suspending the processing process when a stored amount of the materials in the supply apparatus is smaller than a predetermined amount.

### [Supplementary Note 28]

The processing system according to the supplementary note 26 or 27, wherein
the processing apparatus suspends the processing process once a part of the build material that is allowed to be formed by the materials stored in the supply apparatus is formed.

### [Supplementary Note 29]

The processing system according to any one of the supplementary notes 26 to 28, wherein
the build material is a structural object in which a plurality of layered structural objects are layered,
the processing apparatus suspends the processing process once a formation of one layered structural object of the plurality of structural objects is completed.

### [Supplementary Note 30]

The processing system according to any one of the supplementary notes 26 to 29, wherein
the processing apparatus forms the build object by irradiating a surface of an object with an energy beam,
the processing apparatus suspends the processing process once an irradiation of the energy beam to a part of the surface at which a characteristic relative to a heat transmitted from the energy beam satisfies a desired condition is completed.

### [Supplementary Note 31]

The processing system according to the supplementary note 30, wherein
the part of the surface that satisfies the desired condition includes a part of the surface at which the heat transmitted from the energy beam is diffused more easily than a part of the surface that does not satisfy the desired condition.

### [Supplementary Note 32]

The processing system according to any one of the supplementary notes 26 to 31, wherein
the processing apparatus restarts the processing process on the condition that the supply apparatus is replenished with the materials after the processing process is suspended.

### [Supplementary Note 33]

The processing system according to any one of the supplementary notes 26 to 32 further comprising a control apparatus that determines whether or not the stored amount of the materials in the supply apparatus is smaller than the predetermined amount and controls the processing apparatus to suspend the processing process once a part of the build material is formed when it is determined that the stored amount of the materials in the supply apparatus is smaller than the predetermined amount.

### [Supplementary Note 34]

The processing system according to the supplementary note 33, wherein
the control apparatus determines whether or not the stored amount of the materials in the supply apparatus is smaller than the predetermined amount before the processing apparatus starts the processing process.

### [Supplementary Note 35]

The processing system according to the supplementary note 33 or 34, wherein
the control apparatus determines whether or not the stored amount of the materials in the supply apparatus is smaller than the predetermined amount after the processing apparatus starts the processing process.

### [Supplementary Note 36]

The processing system according to any one of the supplementary notes 33 to 35 further comprising a detect apparatus that detects the stored amount of the materials by the supply apparatus,
the control apparatus determines on the basis of a detected result by the detect apparatus whether or not the stored amount of the materials in the supply apparatus is smaller than the predetermined amount.

### [Supplementary Note 37]

The processing system according to any one of the supplementary notes 33 to 36, wherein
the control apparatus sets the predetermined amount on the basis of a build data that defines a detail of the processing process.

### [Supplementary Note 38]

The processing system according to the supplementary note 37, wherein
the control apparatus estimates, on the basis of the build data, an amount of the materials that is necessary for performing the processing process and set the estimated amount to the predetermined amount.

### [Supplementary Note 39]

The processing system according to any one of the supplementary notes 33 to 38, wherein
when it is determined that the stored amount is smaller than the predetermined amount, the control apparatus controls the processing apparatus (i) to suspend the processing process once a first part of the build object is formed on the basis of a first data part of the build data and (ii) to restart the processing process for forming a second part of the build object on the basis of a second data part of the build data on the condition that the supply apparatus is replenished with the materials after the processing process is suspended.

### [Supplementary Note 40]

The processing system according to any one of the supplementary notes 1 to 39 further comprising a control apparatus that controls the processing apparatus (i) to suspend the processing process once a first part of the build object is formed on the basis of a first data part of a build data that defines a detail of the processing process and (ii) to restart the processing process for forming a second part of the build object on the basis of a second data part of the build data on the condition that the supply apparatus is replenished with the materials after the processing process is suspended, when it is determined that the stored amount is smaller than the predetermined amount.

### [Supplementary Note 41]

The processing system according to any one of the supplementary notes 1 to 40, wherein
the predetermined amount is an amount of the materials that is necessary for performing the processing process.

### [Supplementary Note 42]

The processing system according to any one of the supplementary notes 1 to 41, wherein
the predetermined amount is an amount of the materials that is necessary for completing the processing process.

### [Supplementary Note 43]

The processing system according to any one of the supplementary notes 1 to 40, wherein
the predetermined amount is a stored amount of the materials that allows a state where the supply apparatus supplies the materials to the processing apparatus to be kept.

### [Supplementary Note 44]

The processing system according to any one of the supplementary notes 1 to 40, wherein
the predetermined amount is a minimum stored amount of the materials that is necessary for allowing a state where the supply apparatus supplies the materials to the processing apparatus to be kept.

### [Supplementary Note 45]

The processing system according to any one of the supplementary notes 1 to 44, wherein
a stored space in which the supply apparatus stores the materials is purged by a purge gas,
the stored space is allowed to be replenished with the materials in a state where the stored space is purged by the purge gas.

### [Supplementary Note 46]

A processing system comprising:
a supply apparatus that stores materials and supplies the stored materials;
a processing apparatus the performs a processing process for forming a build object by using the materials that are supplied from the supply apparatus;
an output apparatus that is configured to output information; and
a reception apparatus that receives a control signal that controls the output apparatus to output alert information when a stored amount of the materials in the supply apparatus is smaller than a predetermined amount.

### [Supplementary Note 47]

A processing system comprising:
a supply apparatus that stores materials and supplies the stored materials;
a processing apparatus the performs a processing process for forming a build object by using the materials that are supplied from the supply apparatus; and
a reception apparatus that receives a control signal that controls the processing apparatus to suspend the processing process once a part of the build material is formed when a stored amount of the materials in the supply apparatus is smaller than a predetermined amount.

### [Supplementary Note 48]

A computer program that is executable by a computer for controlling a processing system that includes: a supply apparatus that stores materials and supplies the stored materials; a processing apparatus the performs a processing process for forming a build object by using the materials that are supplied from the supply apparatus; and an output apparatus that is configured to output information,
the computer program allowing the computer to execute a process for controlling the output apparatus to output alert information when a stored amount of the materials in the supply apparatus is smaller than a predetermined amount.

### [Supplementary Note 49]

A computer program that is executable by a computer for controlling a processing system that includes: a supply apparatus that stores materials and supplies the stored materials; and a processing apparatus the performs a processing process for forming a build object by using the materials that are supplied from the supply apparatus,
the computer program allowing the computer to execute a process for controlling the processing apparatus to suspend the processing process once a part of the build material is formed when a stored amount of the materials in the supply apparatus is smaller than a predetermined amount.

### [Supplementary Note 50]

A recording medium on which the computer program according to the supplementary note 49 or 50 is recorded.

### [Supplementary Note 51]

A control apparatus for controlling a processing system that includes: a supply apparatus that stores materials and supplies the stored materials; a processing apparatus the performs a processing process for forming a build object by using the materials that are supplied from the supply apparatus; and an output apparatus that is configured to output information,
the control apparatus executing a process for controlling the output apparatus to output alert information when a stored amount of the materials in the supply apparatus is smaller than a predetermined amount.

### [Supplementary Note 52]

A control apparatus for controlling a processing system that includes: a supply apparatus that stores materials and supplies the stored materials; and a processing apparatus the performs a processing process for forming a build object by using the materials that are supplied from the supply apparatus,
the control apparatus executing a process for controlling the processing apparatus to suspend the processing process once a part of the build material is formed when a stored amount of the materials in the supply apparatus is smaller than a predetermined amount.

### [Supplementary Note 53]

A processing method including:
supplying materials that are stored in a supply apparatus from the supply apparatus;
performing a processing process for forming a build object by using the materials that are supplied from the supply apparatus; and
outputting alert information when a stored amount of the materials in the supply apparatus is smaller than a predetermined amount.

### [Supplementary Note 54]

A processing method including:
supplying materials that are stored in a supply apparatus from the supply apparatus;
performing a processing process for forming a build object by using the materials that are supplied from the supply apparatus; and
suspending the processing process once a part of the build material is formed when a stored amount of the materials in the supply apparatus is smaller than a predetermined amount.

### [Supplementary Note 55]

A processing method of building a build object on the basis a build data, including:
storing materials in a storing part;
supplying the stored materials;
performing a processing process for forming the build object by using the supplied materials; and
outputting information relating to an amount of the materials that is obtained on the basis of the build data and a stored amount of the materials stored by the storing part.

### [Supplementary Note 56]

A processing method of building a build object on the basis a build data, including:
storing materials in a storing part;
supplying the stored materials;
performing a processing process for forming the build object by using the supplied materials; and
outputting information indicating a relationship between a stored amount of the materials and a necessary amount of the materials for building the build object that is obtained by using the build data.

### [Supplementary Note 57]

A processing method of building a build object on the basis a build data, including:
storing materials in a storing part;
supplying the stored materials;
performing a processing process for forming the build object by using the supplied materials; and
estimating, by using the build data, a necessary amount of the materials for performing the processing process.

### [Supplementary Note 58]

A computer program that allows a computer to perform the processing method according to any one of the supplementary notes 53 to 57.

### [Supplementary Note 59]

A recording medium on which the computer program according to the supplementary notes 58 is recorded.

### [Supplementary Note 60]

An output apparatus that is connected to a processing system,
the processing system building a build object on the basis of a build data and including a processing apparatus that has a storing part for storing materials and a supply part which supplies the stored materials and that performs a processing process for forming the build object by using the materials supplied from the supply part,
the output apparatus outputting information relating to an amount of the materials that is obtained on the basis of the build data and a stored amount of the materials stored by the storing part.

### [Supplementary Note 61]

An output apparatus that is connected to a processing system,
the processing system building a build object on the basis of a build data and including a processing apparatus that has a storing part for storing materials and a supply part which supplies the stored materials and that performs a processing process for forming the build object by using the materials supplied from the supply part,
the output apparatus outputting information indicating a relationship between a stored amount of the materials and a necessary amount of the materials for building the build object by using the build data.

### [Supplementary Note 62]

A control apparatus that controls a processing system,
the processing system building a build object on the basis of a build data and including: a processing apparatus that has a storing part for storing materials and a supply part which supplies the stored materials and that performs a processing process for forming the build object by using the materials supplied from the supply part; and an output apparatus that output information relating to an amount of the materials,
the control apparatus allowing a control for outputting, from the output apparatus, the information relating to the amount of the materials on the basis of the build data and a stored amount of the materials stored by the storing part to be performed.

### [Supplementary Note 63]

A control apparatus that controls a processing system,
the processing system building a build object on the basis of a build data and including: a processing apparatus that has a storing part for storing materials and a supply part which supplies the stored materials and that performs a processing process for forming the build object by using the materials supplied from the supply part; and an output apparatus that output information relating to an amount of the materials,
the control apparatus allowing a control for outputting, from the output apparatus, the information indicating a relationship between a stored amount of the materials and a necessary amount of the materials for building the build object by using the build data to be performed.

### [Supplementary Note 64]

A calculation apparatus that is connected to a processing system,
the processing system building a build object on the basis of a build data and including: a processing apparatus that has a storing part for storing materials and a supply part which supplies the stored materials and that performs a processing process for forming the build object by using the materials supplied from the supply part; and an output apparatus that output information relating to an amount of the materials,
the calculation apparatus performing a calculation for estimating, by using the build data, a necessary amount of the materials for performing the processing process.

At least a part of the features of each embodiment described above may be properly combined with at least another a part of the features of each embodiment described above. A part of the features of each embodiment described above may not be used. Moreover, the disclosures of all publications and United States patents that are cited in each embodiment described above are incorporated in the disclosures of the present application by reference if it is legally permitted.

The present invention is not limited to the above described examples and is allowed to be changed, if desired, without departing from the essence or spirit of the invention which can be read from the claims and the entire specification. A processing system, a processing method, a computer program, a recording medium, a reception apparatus, a control apparatus, an output apparatus and an arithmetic apparatus, which involve such changes, are also intended to be within the technical scope of the present invention.

### Description of Reference Codes

- SYS: processing system
- 1: material supply apparatus
- 11: hopper
- 12: holding member
- 13: conveying member
- 14: driving apparatus
- 15: material feed member
- 16: enclosure
- 10: weight measurement apparatus
- 2: processing apparatus
- 21: processing head
- 211: irradiation optical system
- 212: material nozzle
- 22: head driving system
- 31: stage
- 7: control apparatus
- 8: display
- W: workpiece
- M: build material
- SL: structural layer
- MS: build surface
- EA: irradiation area
- MA: supply area
- MP: melt pool
- EL: processing light

## Claims

1. A processing system that builds a build object, comprising:
a processing apparatus that has a supply part which supplies materials from a storing part for storing the materials and that performs, on the basis of a build data, a processing process for forming the build object by using the materials supplied from the supply part; and
an output apparatus that outputs information relating to an amount of the materials that is obtained on the basis of the build data and a stored amount of the materials stored by the storing part.

2. The processing system according to claim 1, wherein
the supply apparatus has a measurement part that measures the stored amount of the materials stored by the storing part and outputs information relating to the stored amount.

3. The processing system according to claim 1 or 2, further includes a movement apparatus that moves a supply position of the materials by the supply part,
the build data including information relating to a movement of the supply position by the movement apparatus.

4. The processing system according to any one of claims 1 to 3, further includes a movement apparatus that moves the build object relative to a supply position of the materials by the supply part,
the build data including information relating to a movement of the build object by the movement apparatus.

5. The processing system according to claim 3 or 4, wherein
the output apparatus outputs the information relating to the amount of the materials by using information relating to a supplied amount of the material per unit time by the supply part.

6. The processing system according to any one of claims 1 to 5, further comprising an input apparatus that input information on whether or not the processing process is performed by using the materials stored in the storing part.

7. The processing system according to any one of claims 1 to 6, wherein
the output apparatus estimates, by using the build data, a necessary amount of the materials for building the build object and outputs information relating to an estimated result.

8. The processing system according to claim 7, wherein
the output apparatus outputs the information relating to the amount of the materials on the basis of the estimated result and the stored amount of the materials stored by the storing part.

9. The processing system according to claim 7 or 8, wherein
the output apparatus outputs alarm information relating to the materials when the necessary amount of the materials is smaller than the stored amount.

10. The processing system according to any one of claims 7 to 9, wherein
the output apparatus outputs information relating to a size of the build object that is built by the processing process..

11. The processing system according to any one of claims 7 to 10, wherein
the build object is built by a plurality of layers,
the supply part supplies the materials so that the materials are in a form of laminate along a build surface,
the information relating to the estimated result includes information relating to the number of the layers of the materials.

12. The processing system according to any one of claims 7 to 11, wherein
the output apparatus outputs the stored amount of the materials and the information relating to the estimated result with them being associated.

13. The processing system according to any one of claims 1 to 12, wherein
the output apparatus outputs the information before the processing process is performed.

14. A processing system that builds a build object on the basis of a build data, comprising:
a processing apparatus that has a supply part which supplies materials from a storing part for storing the materials and that performs a processing process for forming the build object by using the materials supplied from the supply part; and
an output apparatus that outputs information indicating a relationship between a stored amount of the materials and a necessary amount of the materials for building the build object that is obtained by using the build data.

15. The processing system according to claim 14, wherein
the information indicating a magnitude relationship between the stored amount and the necessary amount of the materials.

16. The processing system according to claim 14, wherein
the information indicating a relationship between a maximum stored amount of the storing part and the necessary amount of the materials for building the build object.

17. The processing system according to claim 14, wherein
the storing part includes a window part for observing the materials from an outside,
the output apparatus displays the necessary amount of the materials for building the build object on the window part.

18. A processing system that builds a build object on the basis of a build data, comprising:
a processing apparatus that has a supply part which supplies materials from a storing part for storing the materials and that performs a processing process for forming the build object by using the materials supplied from the supply part; and
an estimation apparatus that estimates, by using the build data, a necessary amount of the materials for performing the processing process.

19. The processing system according to claim 18, further comprising a control apparatus that controls the processing apparatus by using an estimated result by the estimation apparatus.
